# EUROPEAN PATENT SPECIFICATION

(11) **EP 4 443 275 B1**
(45) Date of publication and mention of the grant of the patent: **09.12.2026**
(21) Application number: 24168551.0
(22) Date of filing: 04.04.2024
(51) Int. Cl.: G06F 3/01, G02B 27/01, G06F 1/16, G06F 3/0346, G06F 3/0354, G06F 3/04883, G06F 3/16

(54) **INPUT METHODS PERFORMED AT WEARABLE DEVICES, AND SYSTEMS AND METHODS OF USE THEREOF**
EINGABEVERFAHREN AN TRAGBAREN VORRICHTUNGEN SOWIE SYSTEME UND VERFAHREN ZUR VERWENDUNG DAVON
PROCÉDÉS D'ENTRÉE EXÉCUTÉS AU NIVEAU DE DISPOSITIFS PORTABLES, ET SYSTÈMES ET PROCÉDÉS D'UTILISATION ASSOCIÉS

(30) Priority: 06.04.2023 US 202363494737 P; 01.04.2024 US 202418624002
(43) Date of publication of application: 09.10.2024
(73) Proprietor: Meta Platforms Technologies, LLC, Menlo Park, CA 94025 (US)
(72) Inventor: Goel, Swati, Menlo Park, 94025 (US); Eyal, Yfat, Menlo Park, 94025 (US); Sasinowski, Dana Nicole, Menlo Park, 94025 (US); Gupta, Chetan Parag, Menlo Park, 94025 (US); Bicking, Ian Sebastian Murphy, Menlo Park, 94025 (US); Fahmi, Mina, Menlo Park, 94025 (US)
(74) Representative: Murgitroyd & Company

(56) References cited:
- US-A1- 2021 064 132
- US-A1- 2021 124 417
- US-A1- 2022 121 288
- US-A1- 2022 244 835
- US-A1- 20230 090 410

## Description

### TECHNICAL FIELD

This application relates generally to inputs provided using wearable devices, including, but not limited to, techniques for detecting touchless inputs and determining commands associated with touchless inputs.

This application also relates generally to the coordination of inputs provided using wearable devices, including, but not limited to, techniques for coordinating touchless and voice inputs to control one or more operations at an electronic device.

### BACKGROUND

Wearable devices typically have one primary input method - voice commands or touchscreen interactions. The limited input methods reduce the efficiency and availability of wearable devices. Touch-based inputs require users to navigate through one or more user interfaces and can result in frustration over time. Further, wearable devices that include more than one input method fail to coordinate the interactions between the methods. The limited input methods of wearable devices and the lack of coordination between multiple input methods result in a slow and cumbersome user experience.

As such, there is a need to address one or more of the above-identified challenges. A brief summary of solutions to the issues noted above are described below.

US 2022/121288 A1 is relevant to the invention. It discloses an upper-limb-mounted (wrist) computing device including a gesture sensor to measure gesture data, which detects an AR-initiation gesture and transmits a trigger signal that causes the head-mounted device to transition from a lower-power to a higher-power state and to capture image data. A microphone and a speaker in the AR glasses are used as input/output components: the microphone can detect speech that can be used to supplement and/ or modify the intent associated with the hand gesture, and the speaker can output an audible signal, indicating that a task has been completed.

### SUMMARY

The present invention is defined by the independent claims. The dependent claims define further advantageous embodiments.

It shall also be noted that the references made through this description to an "embodiment", "example", "aspect" or "configuration" may point to alternative aspects related to the invention but do not necessarily correspond to real realisations of it. The actual embodiments of the invention fall within the scope of the appended claims. It is to be understood that other examples can be practiced, and various modifications and structural changes can be made to these actual embodiments of the invention without departing from the scope of the claims, as would be understood by one of ordinary skill in the art

According to an aspect, there is provided, a non-transitory, computer-readable storage medium including instructions that, when executed by a wrist-wearable device worn by a user and communicatively coupled with a head-wearable device, cause the wrist-wearable device to:
detect an in-air gesture performed by the user;
in response to a determination that the in-air gesture is associated with a control command to be performed at a head-wearable device:
   provide instructions to the head-wearable device to perform at least one operation, and
   initiate an assistant associated with the head-wearable device and the wrist wearable device;
in response to a user voice input, determine, based on the control command, an additional operation to be performed at the head-wearable device;
provide instructions to the head-wearable-device that cause the head-wearable device to perform the additional operation; and
provide an indication via the wrist-wearable device and/or the head-wearable device that the additional operation was performed.

The control command may include instructions for capturing image data via the head-wearable device.

The control command may include instructions for initiating an application on one or more of the head-wearable device and the wrist-wearable device.

The control command may include instructions for activating the head-wearable device.

The control command may include instructions for performing one or more operations on a user interface presented at the head-wearable device.

The control command may include instructions for causing the head-wearable device to operate in a first mode, and the instructions, when executed by the wrist-wearable device, further cause the wrist-wearable device to:
detect, by the wrist-wearable device worn by the user, another in-air gesture performed by the user; and
in response to a determination that the other in-air gesture is associated with another control command to be performed at the head-wearable device, provide instructions to the head-wearable device to perform at least one second operation.

The in-air gesture may be a contact between at least two phalanges of the user.

The contact may be:
a single tap,
a double tap,
a long tap, or
one of a plurality of force-based contacts, each force-based contact of the plurality of force-based contacts associated with a respective force threshold.

The in-air gesture may be a slide gesture performed by a phalange of the user moving across a portion of the user's hand.

According to another aspect, there is provided a method, comprising:
detecting, by a wrist-wearable device worn by a user, an in-air gesture performed by the user, wherein the wrist-wearable device is communicatively coupled with a head-wearable device;
in response to a determination that the in-air gesture is associated with a control command to be performed at the head-wearable device:
   providing instructions to the head-wearable device to perform at least one operation, and
   initiating an assistant associated with the head-wearable device and the wrist wearable device;
in response to a user voice input, determining, based on the control command, an additional operation to be performed at the head-wearable device;
providing instructions to the head-wearable-device that cause the head-wearable device to perform the additional operation;
providing an indication via the wrist-wearable device and/or the head-wearable device that the additional operation was performed.

The control command may include instructions for:
capturing image data via the head-wearable device,
initiating an application on one or more of the head-wearable device and the wrist-wearable device, and/or
activating the head-wearable device.

According to a further aspect, there is provided a wrist-wearable device, comprising:
one or more sensors;
one or more processors; and
memory including instructions that, when executed by the one or more processors, cause the wrist-wearable device to:
   detect an in-air gesture performed by the user;
   in response to a determination that the in-air gesture is associated with a control command to be performed at a head-wearable device:
      provide instructions to the head-wearable device to perform at least one operation, and
      initiate an assistant associated with the head-wearable device and the wrist wearable device;
   in response to a user voice input, determine, based on the control command, an additional operation to be performed at the head-wearable device;
   provide instructions to the head-wearable-device that cause the head-wearable device to perform the additional operation; and
   provide an indication via the wrist-wearable device and/or the head-wearable device that the additional operation was performed.

The control command may include instructions for capturing image data via the head-wearable device.

The control command may include instructions for initiating an application on one or more of the head-wearable device and the wrist-wearable device.

The control command may include instructions for activating the head-wearable device.

The systems and methods disclosed herein allow a user to control one or more electronic devices communicatively coupled with the wrist-wearable device using one or more touchless inputs (e.g., in-air hand gestures). By detecting touchless inputs, the wrist-wearable device allows a user to provide inputs in an easy to use, frictionless, and socially accepted manner. Further, the systems and methods disclosed herein allow for the coordination of multiple input methods from distinct sources. **In** particular, the system and methods disclosed herein coordinate touchless inputs with voice-based commands to accelerate commands and performed at a wearable device and increase the overall efficiency of the devices. Through use of the systems and methods disclosed herein, the user can use reduce the number of inputs required to perform an action and accelerate the performance of one or more actions

One example of a method of detecting touchless inputs is disclosed. The method includes detecting, by a wrist-wearable device worn by a user, an in-air hand gesture performed by the user. The wrist-wearable device is communicatively coupled with one or more electronic devices. The method includes, in response to a determination that the in-air gesture is associated with a control command, (i) determining an electronic device of the one or more electronic devices to perform the control command and (ii) providing instructions to the electronic device selected to perform the control command. The instructions cause the electronic device to perform the control command. The method further includes providing an indication via the wrist-wearable device and/or the one or more electronic devices that the control command was performed.

**In** some embodiments, the method is performed at a wrist-wearable device. **In** some embodiments, the method is performed by a system including the head-wearable device and the wrist-wearable device. **In** some embodiments, a non-transitory, computer-readable storage medium includes instructions that, when executed by a wrist-wearable device, cause the wrist-wearable device to perform or cause performance of the method.

One example of a method of coordinating touchless inputs is disclosed. The method includes detecting, by a first wearable device worn by a user, a first touchless input. The first wearable device is communicatively coupled with at least a second wearable device worn by the user. The method includes, in response to a determination that the first touchless input gesture is associated with a first control command to be performed at the first wearable device and/or the second wearable device, causing the first wearable device and/or the second wearable device to perform the first control command. The method includes detecting, by the second wearable device, a second touchless input and, in response to a determination that the second touchless input gesture is associated with a second control command to be performed at a respective wearable device performing the first control command, causing the respective wearable device to perform the second control command.

**In** some embodiments, the method is performed at a wrist-wearable device. **In** some embodiments, the method is performed at a head-wearable device. **In** some embodiments, the method is performed by a system including the head-wearable device and the wrist-wearable device. In some embodiments, a non-transitory, computer-readable storage medium includes instructions that, when executed by a wrist-wearable device, cause the wrist-wearable device to perform or cause performance of the method. **In** some embodiments, a non-transitory, computer-readable storage medium includes instructions that, when executed by a head-wearable device, cause the wrist-wearable device to perform or cause performance of the method.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

Having summarized the above example aspects, a brief description of the drawings will now be presented.

### BRIEF DESCRIPTION OF THE DRAWINGS

For a better understanding of the various described embodiments, reference should be made to the Detailed Description below in conjunction with the following drawings in which like reference numerals refer to corresponding parts throughout the figures.
Figures 1A-1G illustrate example inputs provide by a user via a hand gesture detected by a worn wrist-wearable device, in accordance with some embodiments.
Figures 1H-1L illustrate example inputs provide by a user via voice commands and hand gestures detected by the worn wrist-wearable device, in accordance with some embodiments.
Figures 1M-1N illustrate example representations of the assistant as presented by a head-wearable device, in accordance with some embodiments.
Figure 2 illustrates example coordination of different inputs provided by worn wearable devices, in accordance with some embodiments.
Figures 3A-3C illustrate different in-air hand gestures performed by a wearer of a wrist-wearable device, in accordance with some embodiments.
Figure 4 is a flow diagram of the different inputs coordinated between the wearable devices, in accordance with some embodiments.
Figures 5A-5G illustrate flow diagrams of coordinated interactions between distinct input sources, in accordance with some embodiments.
Figure 6 illustrates a flow diagram of inputs provided by a user and coordinated between different wearable devices, in accordance with some embodiments.
Figure 7 illustrates a flow diagram of a method of detecting and determining by a wrist-wearable device one or more operations to be performed at a communicatively coupled electronic device, in accordance with some embodiments.
Figure 8 illustrates a flow diagram of a method of coordinating inputs provided by distinct electronic devices, in accordance with some embodiments.
Figures 9A-9C-2 illustrate example artificial-reality systems, in accordance with some embodiments.
Figures 10A-10B illustrate an example wrist-wearable device, in accordance with some embodiments.
Figures 11A-11C illustrate example head-wearable devices, in accordance with some embodiments.
Figures 12A-12B illustrate an example handheld intermediary processing device, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

Embodiments of this disclosure can include or be implemented in conjunction with various types or embodiments of artificial-reality systems. Artificial-reality (AR), as described herein, is any superimposed functionality and or sensory-detectable presentation provided by an artificial-reality system within a user's physical surroundings. Such artificial-realities can include and/or represent virtual reality (VR), augmented reality, mixed artificial-reality (MAR), or some combination and/or variation one of these. For example, a user can perform a swiping in-air hand gesture to cause a song to be skipped by a song-providing API providing playback at, for example, a home speaker. An AR environment, as described herein, includes, but is not limited to, VR environments (including non-immersive, semi-immersive, and fully immersive VR environments); augmented-reality environments (including marker-based augmented-reality environments, markerless augmented-reality environments, location-based augmented-reality environments, and projection-based augmented-reality environments); hybrid reality; and other types of mixed-reality environments. In some embodiments of an AR system, ambient light (e.g., a live feed of the surrounding environment that a user would normally see) can be passed through a display element of a respective head-wearable device presenting aspects of the AR system. In some embodiments, ambient light can be passed through respective aspect of the AR system. For example, a visual user interface element (e.g., a notification user interface element) can be presented at the head-wearable device, and an amount of ambient light (e.g., 15-50% of the ambient light) can be passed through the user interface element, such that the user can distinguish at least a portion of the physical environment over which the user interface element is being displayed.

Artificial-reality content can include completely generated content or generated content combined with captured (e.g., real-world) content. The artificial-reality content can include video, audio, haptic events, or some combination thereof, any of which can be presented in a single channel or in multiple channels (such as stereo video that produces a three-dimensional effect to a viewer). Additionally, in some embodiments, artificial reality can also be associated with applications, products, accessories, services, or some combination thereof, which are used, for example, to create content in an artificial reality and/or are otherwise used in (e.g., to perform activities in) an artificial reality.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMU)s of a wrist-wearable device) and/or detected via image data captured by an imaging device of a wearable device (e.g., a camera of a head-wearable device)) or a combination of the user's hands. In-air means, in some embodiments, that the user hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single or double finger tap on a table, on a user's hand or another finger, on the user's leg, a couch, a steering wheel, etc.). The different hand gestures disclosed herein can be detected using image data and/or sensor data (e.g., neuromuscular signals sensed by one or more biopotential sensors (e.g., EMG sensors) or other types of data from other sensors, such as proximity sensors, time-of-flight (ToF) sensors, sensors of an inertial measurement unit, etc.) detected by a wearable device worn by the user and/or other electronic devices in the user's possession (e.g., smartphones, laptops, imaging devices, intermediary devices, and/or other devices described herein).

As described herein, one or more wearable devices worn by the user can be used to improve their overall efficiency and ease of performing different operations at communicatively coupled electronic devices (e.g., a head-wearable device, wrist-wearable device, smartphone, etc.). The methods and devices described herein include methods and systems for detecting hand gestures performed by the user wearing a wearable device, such as a head-wearable device and/or wrist-wearable device, and determining one or more control commands for performing operations on at least one device. For example, the user can use a worn wrist-wearable device to control one or more operations on the wrist-wearable device (e.g., navigate different user interfaces, input text, e.g.), a head-wearable device (e.g., take a photo, play music), and/or other communicatively coupled electronic device (e.g., place a call, search the web, etc.). The systems and methods described herein provide users with greater access to their electronic devices by allowing them to provide inputs to the electronic devices subtly, privately, and comfortably.

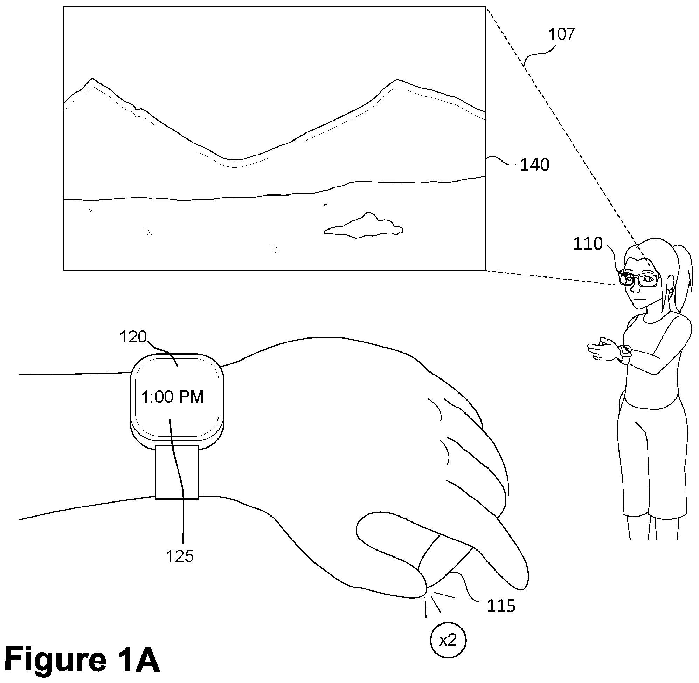

Figures 1A-1G illustrate example inputs provided by a user via a hand gesture and detected by a worn wrist-wearable device, in accordance with some embodiments. The user 105 can wear one or more wearable devices, such as a head-wearable device 110 and/or a wrist-wearable device 120. The one or more wearable devices can be communicatively coupled with one another as well as one or more other electronic devices (e.g., smartphones, computers, portable computing units, etc.). The wrist-wearable device 120 can detect one or more in-air hand gestures performed by the user 105 and cause the performance of one or more operations associated with the one or more in-air hand gestures at the different communicatively coupled devices.

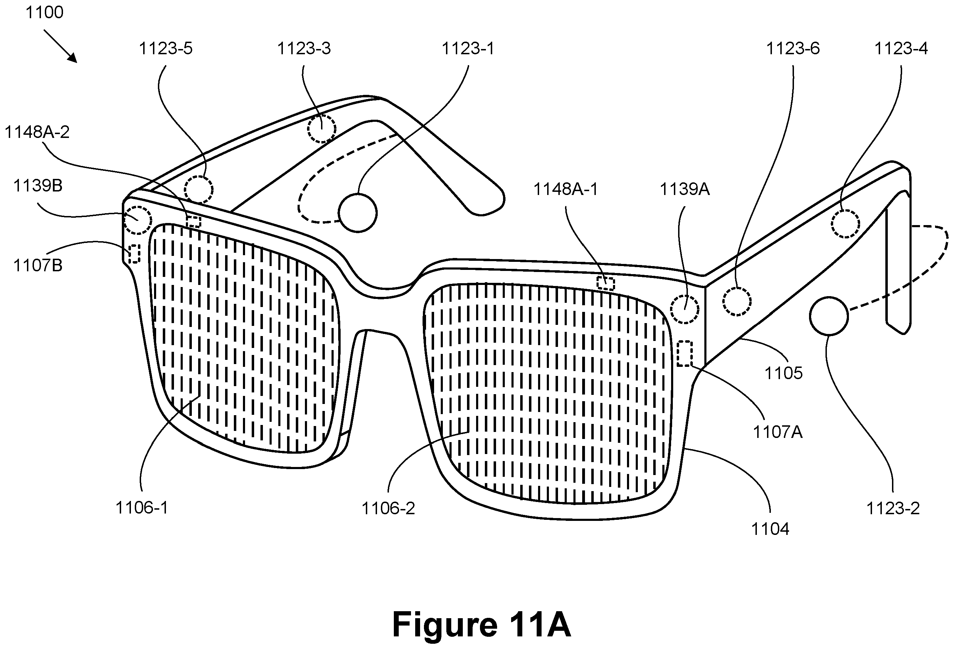

The head-wearable device 110 includes, with reference to Figures 11A-11C, one or more imaging devices (e.g., cameras 1138), microphones 1137, speakers 1136, displays 140 (e.g., displays 1135 including a heads-up display, a built-in or integrated monitor or screen, a projector, and/or similar device), sensors 1123 (e.g., inertial measurement units (IMU)s, biometric sensors, position sensors, electromyography (EMG) sensors, and/or any other sensors), and/or one or more processors 1148. In some embodiments, the one or more components of the head-wearable device 110 described above are coupled with the housing and/or lenses of the head-wearable device 110. In some embodiments, the head-wearable device 110 is a pair of smart glasses, AR goggles (with or without a heads-up display), AR glasses (with or without a heads-up display), other head-mounted displays. The head-wearable device 110 is configured to capture image data via an imaging device and/or present a representation of the image data via the display 140. In some embodiments, the display 140 is coupled with one or both of the lenses of the head-wearable device 110. In some embodiments, image data presented by the display 140 is presented in conjunction with the field of view 107 of the user 105. Alternatively or additionally, in some embodiments, the image data is overlayed over a portion of the field of view of the user 105 (e.g., as an overlay over one or more real-world objects or the physical environment). In addition, in some embodiments, the head-wearable device 110 is configured to capture audio data via the microphone 1137 and/or present a representation of the audio data via speakers 1136. The head-wearable device 110 can communicatively couple with one or more of a wrist-wearable device 120, portable computing unit and/or an intermediary device (e.g., via a Bluetooth connection between the two or more respective devices, and/or the two or more respective devices can also be connected to another intermediary device such as a smartphone that provides instructions and data to and between the two devices).

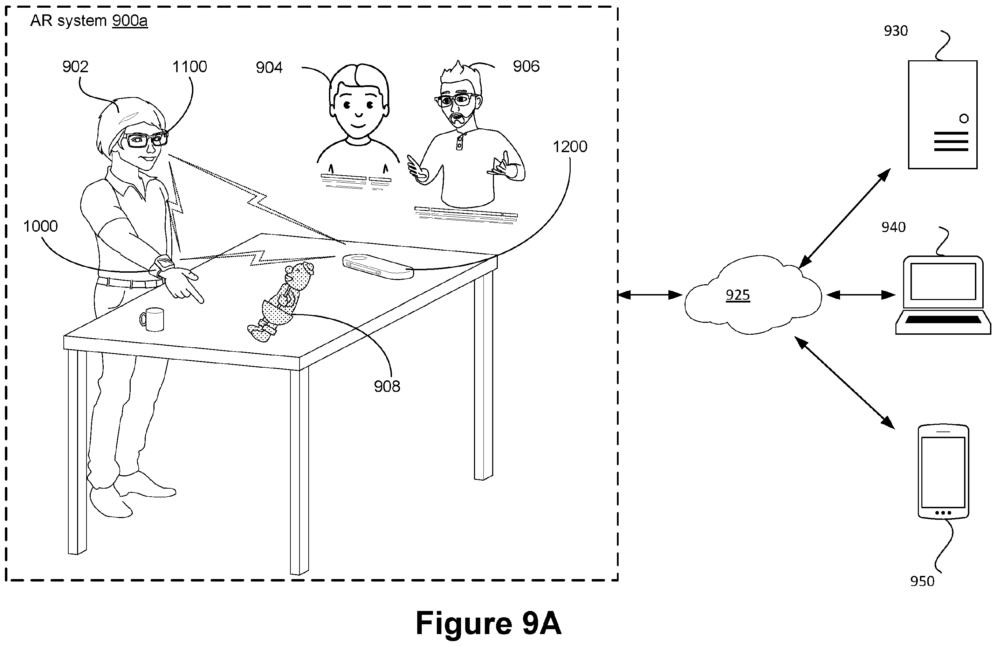

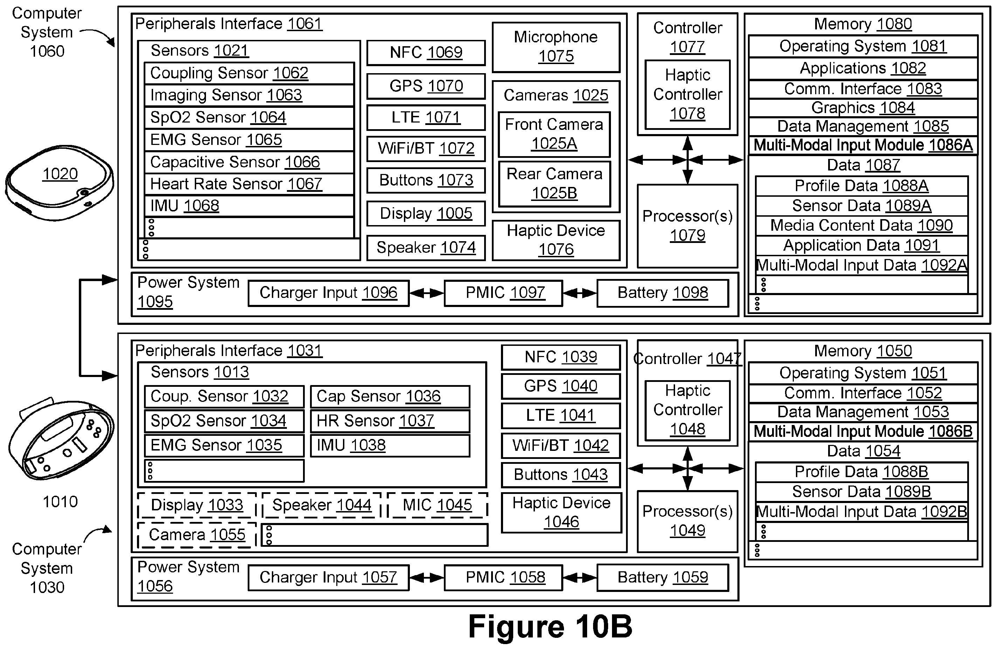

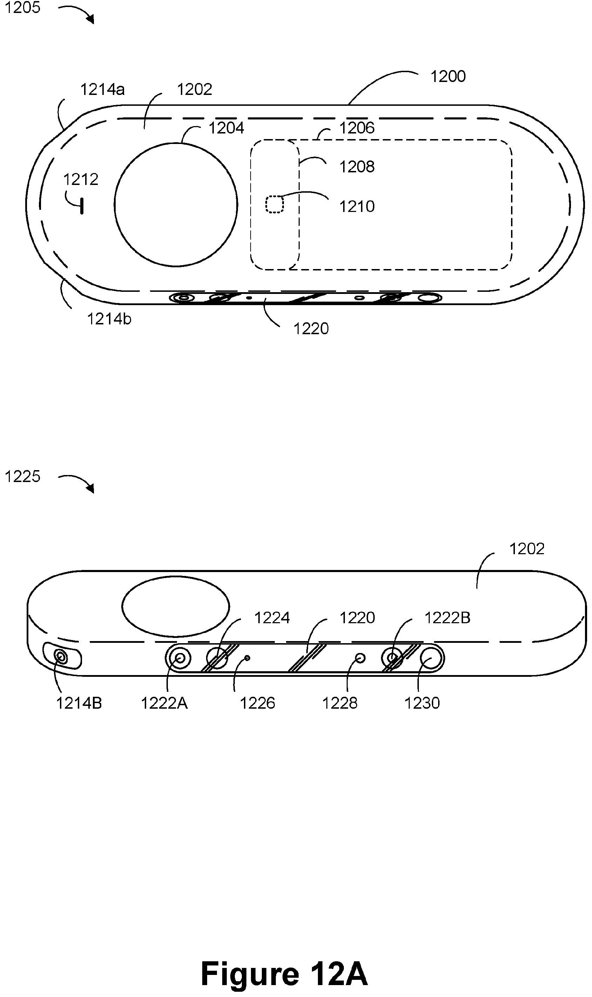

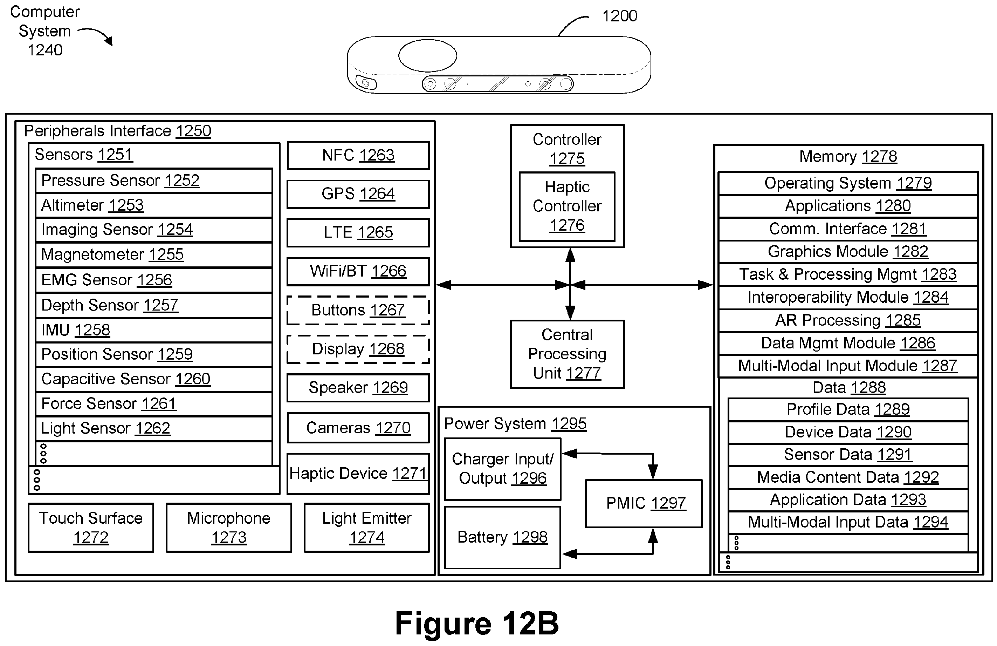

In some embodiments, the wrist-wearable device 120 includes one or more displays 125 (e.g., a display 1005 (Figure 10B), such as a touch screen), speakers, microphones, and sensors 1021, and/or one or more processors 1179. In some embodiments, the one or more components of the wrist-wearable device 120 described above are coupled with a wrist-wearable structure (e.g., a band portion) of the wrist-wearable device 120, housed within a capsule portion of the wrist-wearable device 120, or a combination of the wrist-wearable structure and the capsule portion. As described above, in some embodiments, the wrist-wearable device 120 is communicatively coupled with the head-wearable device 110 (e.g., by way of a Bluetooth connection between the two devices). In some embodiments, the wrist-wearable device 120 and the head-wearable device 110 are communicatively coupled via an intermediary device (e.g., a handheld intermediary processing device 1200; Figures 12A and 12B), a server 930, a computer 940, a smartphone 950 and/or other devices described below in reference to Figure 9A that is configured to control the wrist-wearable and head-wearable devices 120 and 110, respectively.

As shown in Figure 1A, while the user 105 wears the head-wearable device 110 and the wrist-wearable device, an in-air hand gesture 117 is performed by the user's hand 115 (e.g., a double tap performed by contact between the thumb and the little finger). The in-air hand gesture 117 is performed while the head-wearable device 110 and the wrist-wearable device 120 are in a standby and/or sleep mode (e.g., an energy saving state in which a device is active without performing operations that would deplete the devices battery power). For example, in Figure 1A, the wrist-wearable device 120 presents, via its display 125, a sleep screen user interface that displays the current time, and the head-wearable device 110 operates in a pass-through mode in which the display 140 does not present information (e.g., operates as a lens). The in-air gesture (and other hand gestures described herein) is detected based on sensor data captured by the wrist-wearable device 120. For example, neuromuscular signals sensed by one or more EMG sensors and/or force/acceleration data sensed by one or more IMU sensors of the wrist-wearable device 120 can be used to detect performed (or intended to be performed) hand gestures. In some embodiments, the in-air gesture (and other hand gestures described herein) is detected based on image data and/or sensor captured by the head-wearable device 110. The in-air hand gesture 117 can be detected by the wrist-wearable device 120 and/or the head-wearable device 110 individually or together.

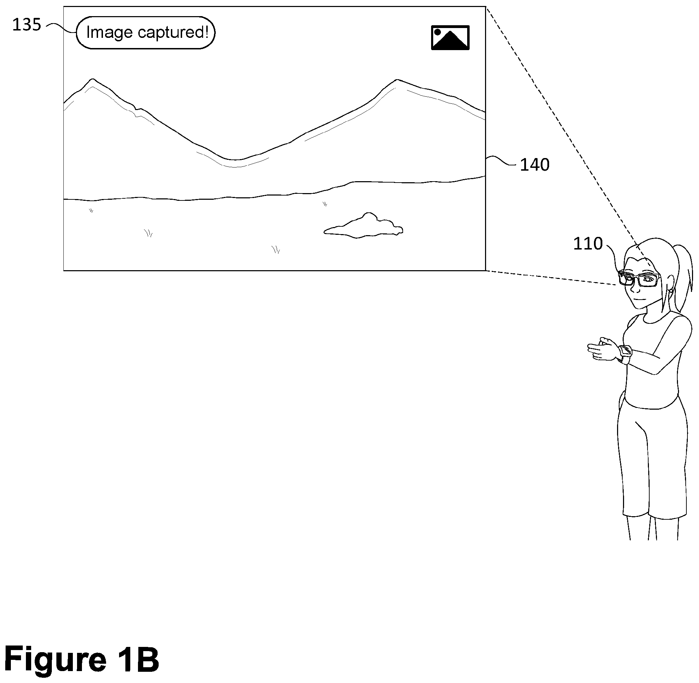

In some embodiments, the wrist-wearable device 120 detects the in-air hand gesture and, in response to a determination that the in-air gesture is associated with a control command, provides instructions to activate the head-wearable device 110 and/or other communicatively coupled electronic device. In some embodiments, the wrist-wearable device 120 detects the in-air hand gesture and, in response to a determination that the in-air gesture is associated with a control command, provides instructions that cause a communicative coupled electronic device to automatically perform an operation at the head-wearable device 110 and/or other communicatively coupled electronic device. For example, as shown in Figures 1A and 1B, the double tap in-air hand gesture cause the head-wearable device 110 to instantly capture image data. The wrist-wearable device 120 can also, in response to detecting the in-air hand gesture, performs one or more operations at the wrist-wearable device 120 (e.g., initiating an application, navigating a user interface, etc.).

The wrist-wearable device 120, in response to the detected in-air gesture, causes a communicatively coupled electronic device to transition from a standby or sleep mode to an active state. For example, as shown in Figure 1B, the head-wearable device 110 is active and displays a message 135 (e.g., "Image Captured!") as well as an icon to inform the user 105 that an image was successfully captured.

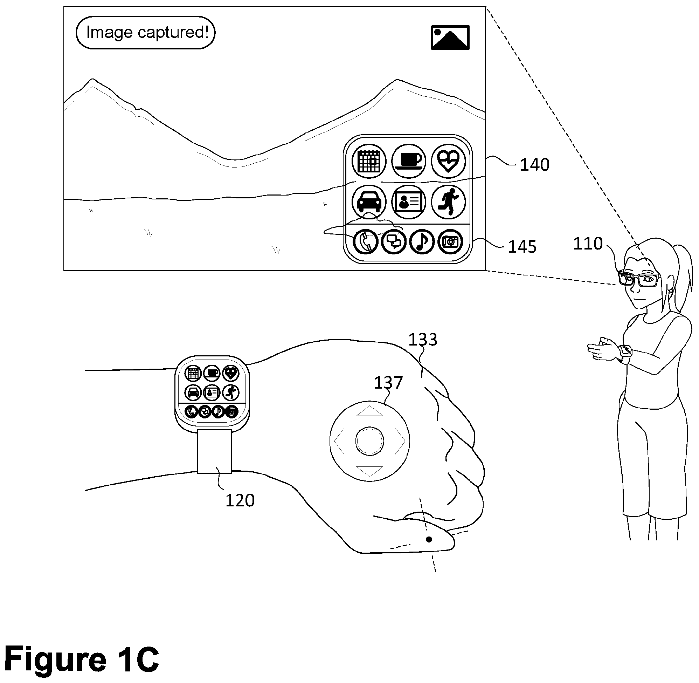

Turning to Figure 1C, the user 105 provides another in-air hand gesture 133. The wrist-wearable device 120 detects the other in-air hand gesture and determines that the in-air gesture is associated with a control command (e.g., navigate through a user interface 145). In some embodiments, the in-air gesture simulates a directional pad (D-pad 137) (e.g., the user 105 can perform a slide gesture with one or more phalanges) that allows the user 105 to provide directional inputs (e.g., left, right, down, up, etc.). The wrist-wearable device 120 in response to detecting the other in-air hand gesture and determining that the in-air gesture is associated with a control command to navigate through a user interface 145, provides instructions to a communicatively electronic device to navigate through an presented user interface 145. The user interface 145 can include one or more applications, such as a calling or phone application, a messaging application, a music application, a fitness application, etc. Each application is selectable using one or more in-air hand gestures. The detectable in-air hand gestures, as described herein, allow the user 105 to initiate one or more applications and/or perform one or more operations on a wearable device without having to look at the presented information.

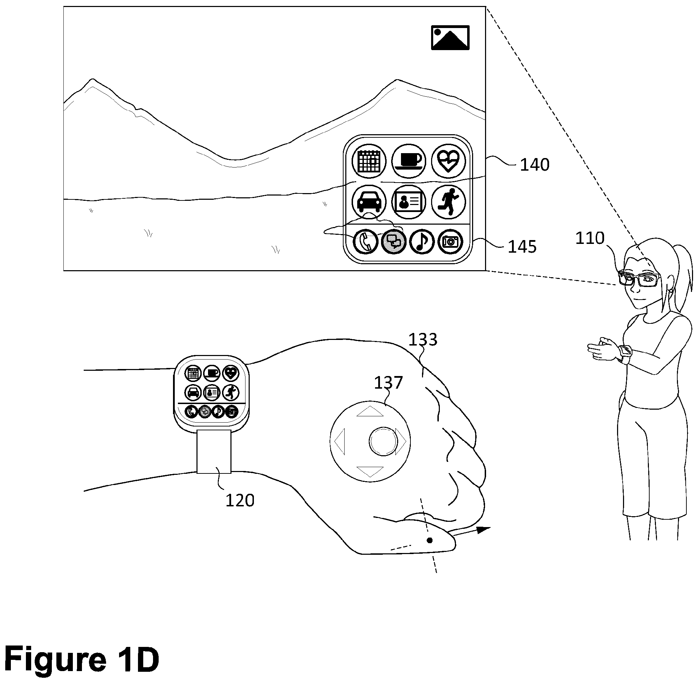

In Figure 1D, in response to detecting the performance of the other in-air hand gesture 133, causes the head-wearable device 110 to navigate through a presented user interface 145. Similarly, the wrist-wearable device 120 can, in response to the detected other in-air hand gesture, navigate through the user interface presented on its display. For example, the user 105 navigates to the messaging application user interface element via the other in-air hand gesture 133 (e.g., using the D-pad 137). Additionally, the user 105 provides yet another in-air hand gesture to select the messaging application.

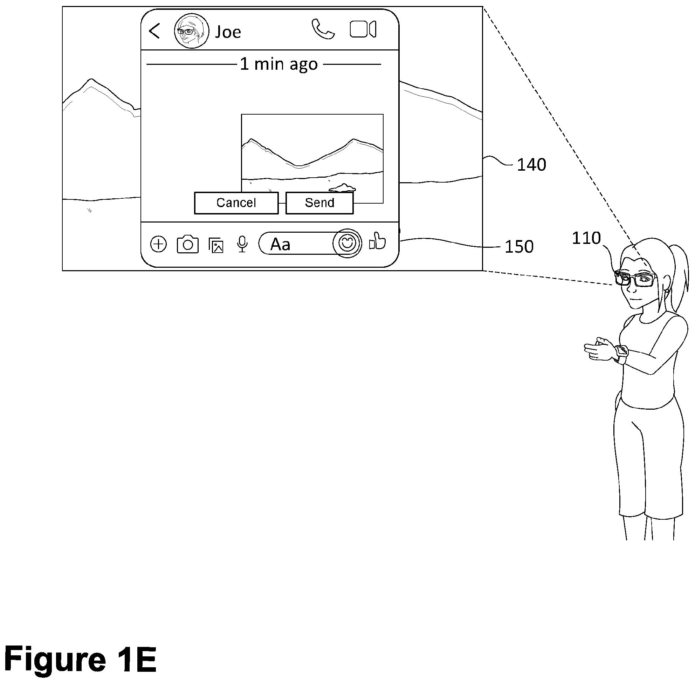

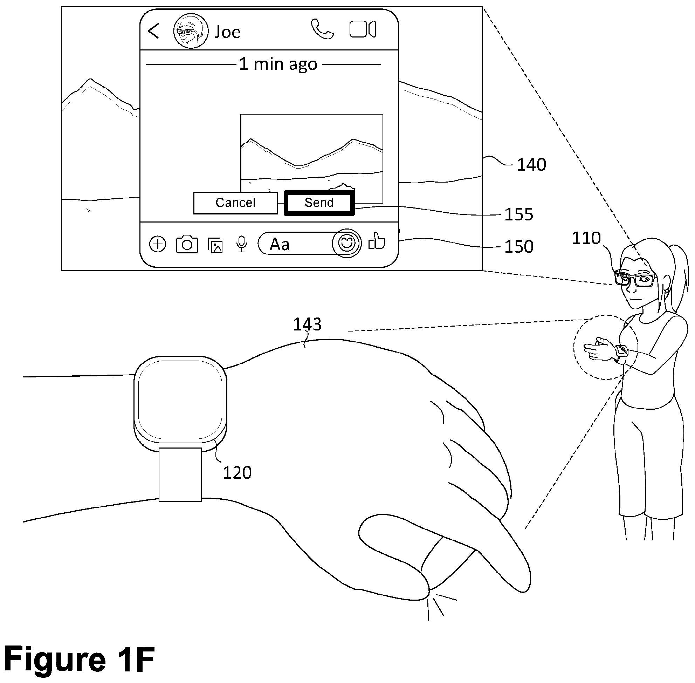

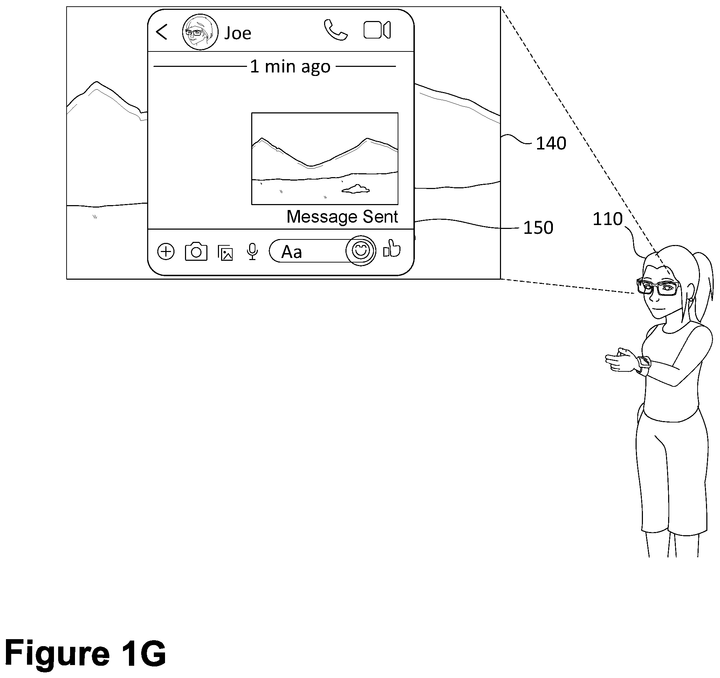

In Figure 1E, the messaging user interface 150 is displayed. The user 105 is able to view the captured image prior to sending the message. Additionally, the user can type out a message before sending the captured image. As shown in Figure 1F, the user selects "send" via an in-air hand gesture (e.g., a single tap contact between the thumb and the little finger). In particular, the wrist-wearable device 120 detects the in-air hand gesture 143 and, in response to a determination that in-air hand gesture 143 is associated with a control command for selecting the "send" user interface element, provides instruction to the head-wearable device 110 for sending the captured imaged. Figure 1G shows the messaging user interface 150 after the captured image is sent.

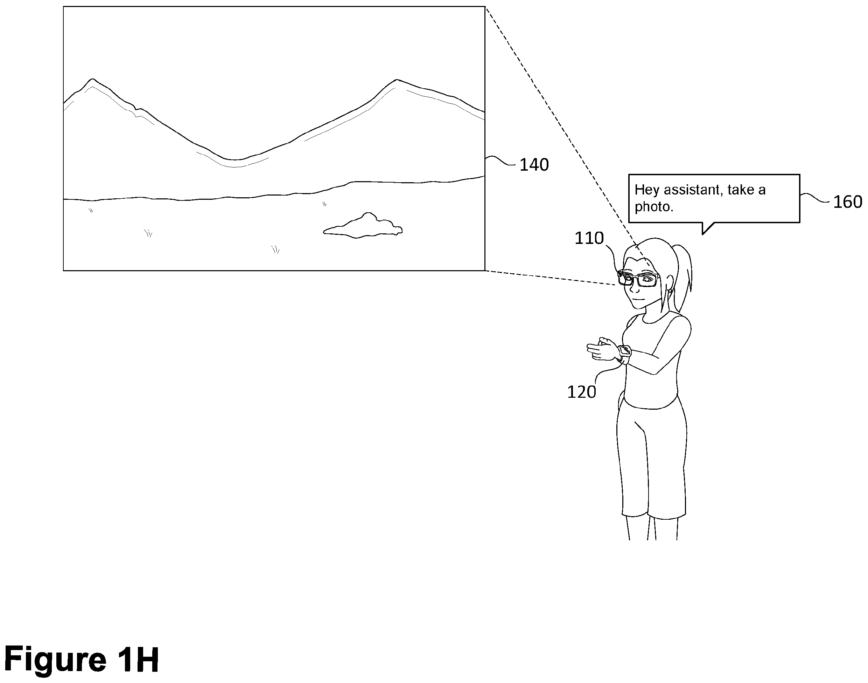

Figures 1H-1L illustrate example inputs provide by a user via voice commands and hand gestures detected by the worn wrist-wearable device, in accordance with some embodiments. In some embodiments, multiple input streams can be combined to further increase the efficiency at which commands can be provided to wearable devices and other communicatively coupled electronic devices. For example, the head-wearable device 110 can receive a first set of control commands via in-air hand gestures detected by the wrist-wearable device 120 and a second set of control commands via voice commands. In some embodiments, the multiple input streams are touchless inputs (e.g., without contacting an electronic device or wearable device). The systems and methods disclosed herein coordinate the different control commands such that there is seamless control of a respective device regardless of the input source.

Turning to Figure 1H, the wrist-wearable device 120 and the head-wearable device 110 worn by the user 105 are in a standby and/or sleep mode. The user 105 provides a voice command (e.g., "Hey assistant, take a photo" 160) that activates and/or causes the head-wearable device 110 to capture image data (e.g., via an imaging device). The voice command can be detected by the wrist-wearable device 120, head-wearable device 110, and/or other communicatively coupled electronic device (e.g., via a microphone). In some embodiments, the assistant is integrated to the wrist-wearable device 120, head-wearable device 110, and/or other communicatively coupled electronic device.

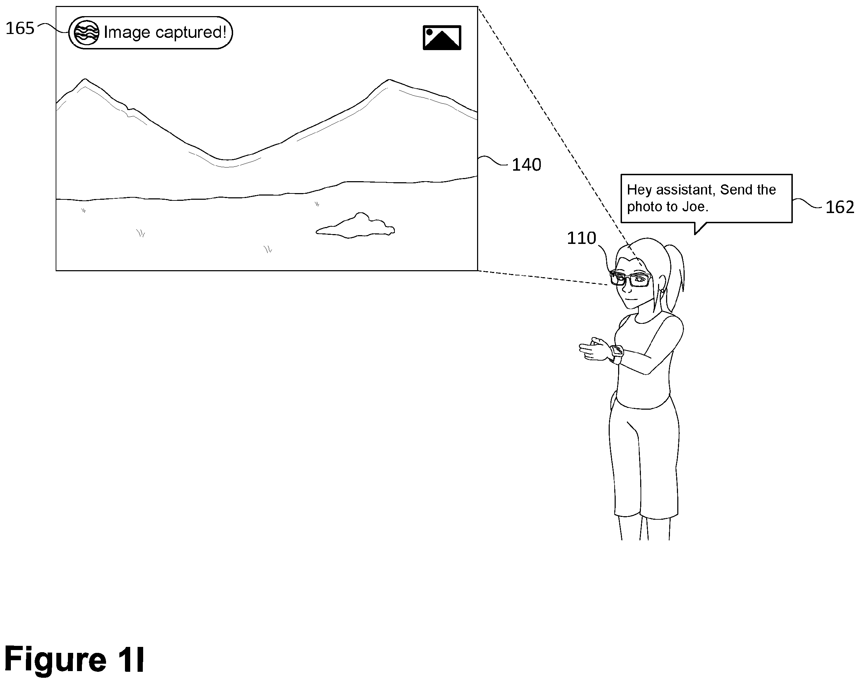

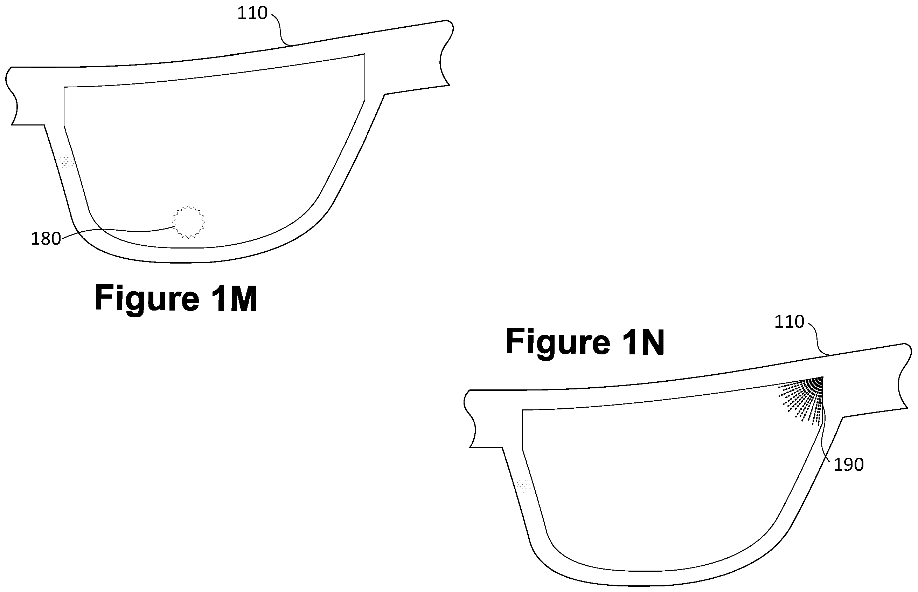

In Figure 1I, the head-wearable device 110 captures the image data and provides an indication that the image data was captured. In some embodiments, the assistant informs the user 105 that the image data was captured (e.g., assistant notification 165). In some embodiments, the assistant can provide an audio notification via a speaker of the wrist-wearable device 120, head-wearable device 110, and/or any other communicatively coupled device. The assistant can be a bodiless and/or a headless representation as shown and described below in reference to Figures 1M and 1N. As further shown in Figure 1I, the user 105 provides a second voice command 162 requesting the assistant to send the captured image data to another user (e.g., "Joe" a user associated with a distinct electronic device).

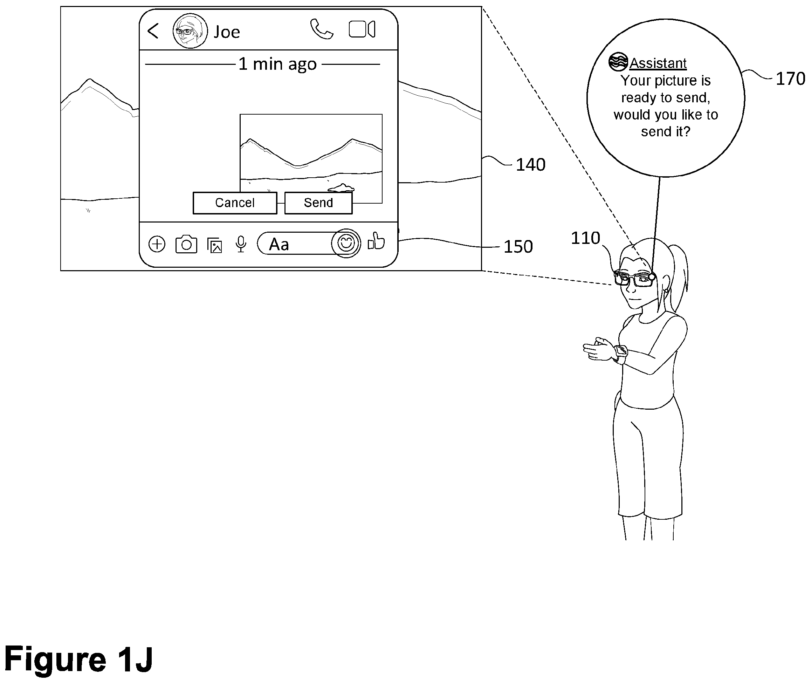

In Figure 1J, the head-wearable device 110 presents the messaging user interface 150 between the user 105 and Joe. The captured image is presented to the user for confirmation. In some embodiments, the assistant notifies the user 105 that the photo is ready to be reviewed and sent. The assistant, as mentioned above, can provide an audio cue notifying the user 105 that the photo is ready to be sent. For example, as shown in Figure 1J, the assistant can notify 170 the user 105 via a speaker of the wrist-wearable device 120, head-wearable device 110, and/or any other communicatively coupled device "Your picture is ready to send, would you like to send it?"

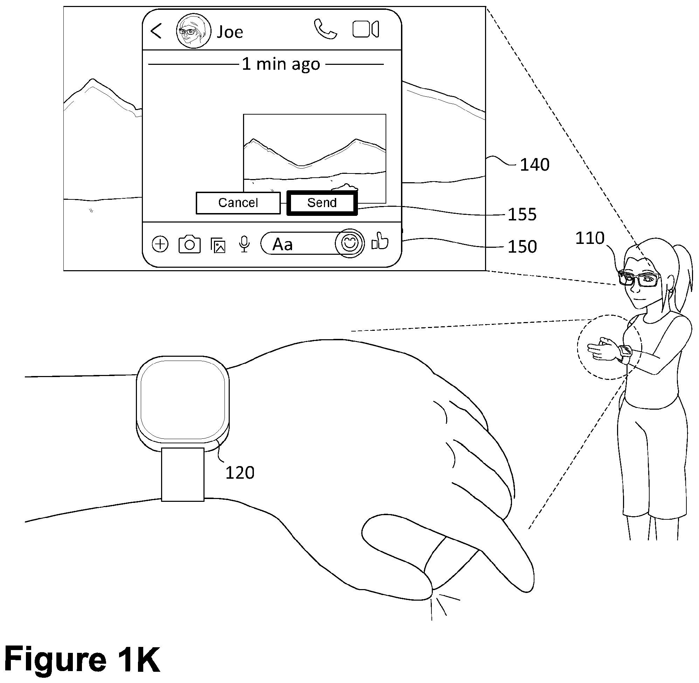

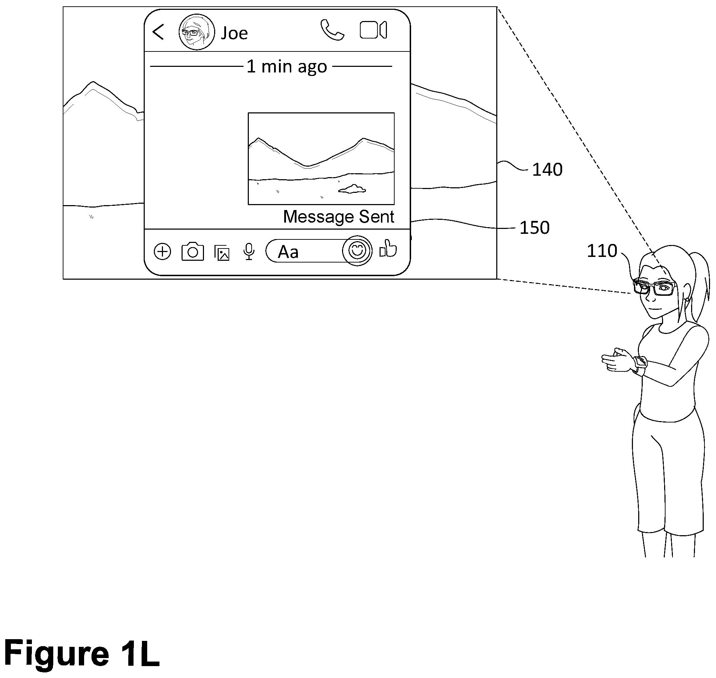

In Figure 1K, the user 105 performs an in-air hand gesture to provide a control command to the head-wearable device 110 to send the image data. The wrist-wearable device 120 detects the in-air hand gesture performed by the user and, in response to a determination that the in-air hand gesture is associated with a control command for sending the captured image data, provides the instructions to the head-wearable device 110. As shown in Figure 1K, the in-air hand gesture causes selection of the "send" user interface element 155, which causes the capture image data to be sent to via the messaging user interface 150 as shown in Figure 1L.

Figures 1M-1N illustrate example representations of the assistant as presented by a head-wearable device, in accordance with some embodiments. Figure 1M shows a bodiless representation 180 of an assistant presented on a display of a head-wearable device 110. In some embodiments, the bodiless representation 180 appears as an animation or icon that is present when the assistant is active (e.g., notifying that user that the assistant is active). Figure 1N shows a headless representation 190 of the assistant. In some embodiments, the headless representation 190 appears as is a light source (e.g., a colored LED) at a portion of a lens (or lenses) of the head-wearable device 110. The headless representation 190 is configured to provide a user with a subtle indication that the assistant is active. More specifically, the headless representation 190 is a non-obtrusive visual cue that informs the user that the assistant is active (e.g., does not display an animation or an icon in the user's field of view). In some embodiments, the head-wearable device 110 can display the bodiless representation 180 and the headless representation 190 when the assistant is active. When the assistant is not active, the head-wearable device 110 can forgo presenting the bodiless representation 180 and the headless representation 190. Alternatively, in some embodiments, when the assistant is not active, the head-wearable device 110 can present the bodiless representation 180 and/or the headless representation 190 are presented with a particular animation, a particular icon, and/or color. For example, when the assistant is not active, the head-wearable device 110 can present the bodiless representation 180 with a sleeping animation or a gray icon, and the headless representation 190 can be presented in white or other inconspicuous color.

In some embodiments, the assistant is a headless representation when the display of the head-wearable device 110 is idle and is a bodiless representation when the display of the head-wearable device 110 is on. In some embodiments, the assistant is a headless representation both when the display of the head-wearable device 110 is idle and when it is on. In some embodiments, the assistant is a bodiless representation both when the display of the head-wearable device 110 is idle and when it is on. In some embodiments, the display of the head-wearable device 110 turns on when the user 105 invokes the assistant. In some embodiments, the display of the head-wearable device 110 turns on when the user 105 performs an explicit command (e.g., a voice command, an in-air hand gesture, etc.).

While the primary example herein is an in-air gesture, the disclosure is not limited to those in-air hand gestures (also referred to herein as hand gestures for simplicity), as other gestures that do not contact a wearable device (e.g., the head-wearable device 110 and/or the wrist-wearable device 120) or other communicatively coupled device are also contemplated, including the surface-contact gestures. Further, hand gestures can be associated with one or more commands other than a text-symbolic gesture, such as other application-control gestures (e.g., gestures used to control or provide one or more inputs at an application, such as navigating an application UI, controlling and/or interacting with an virtual object; a user avatar; and/or other users of the application; etc.), position-control gestures (e.g., gestures used to control a user's position in an AR environment and/or adjust a user's view within an application), and/or device-control gestures (e.g., gestures used to control or provide one or more inputs at an electronic device, such as navigating a device UI, controlling an imaging device, activating a speaker, etc.).

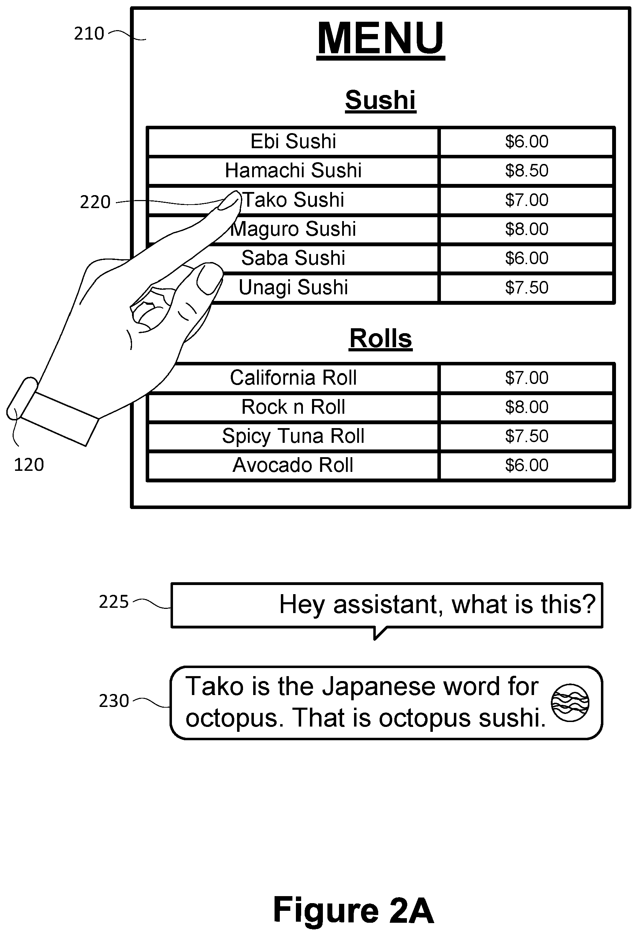

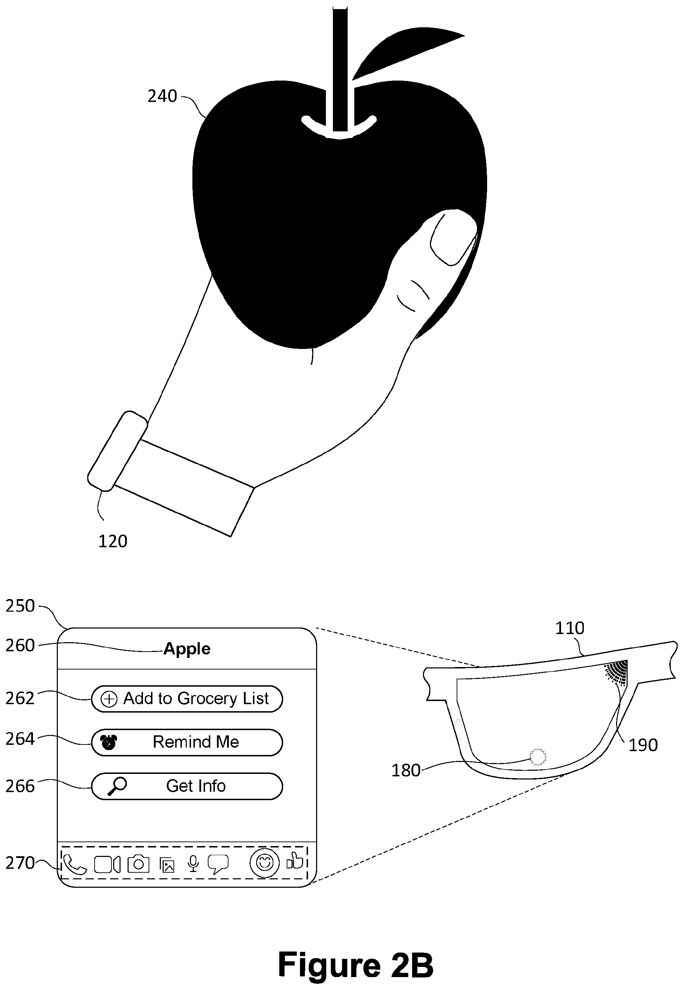

Figures 2A and 2B illustrate examples of the coordination of different inputs provided by worn wearable devices, in accordance with some embodiments. The user 105 wears at least a wrist-wearable device 120 and a head-wearable device 110 (Figure 1A-1L). In some embodiments, the user 105 can combine inputs from distinct wearable devices to improve efficiency. In particular, worn wearable devices provide a seamless user experience that are frictionless (e.g., natural to use) and easy to use.

For example, in Figure 2A, the user wearing the head-wearable device 110 is ordering from a menu 210 including one or more languages. The user, being unfamiliar with one of the words, provides a first and second input 220 and 225 requesting assistance. The first input 220 is a hand gesture pointing at a particular word in the menu, and the second input 225 is a voice command requesting for a translation of the word selected by the first input. The different wearable devices are used in conjunction to complete the interaction. In particular, image data captured by the head-wearable device 110 is used to detect one or more words in the menu 210, the hand gesture (e.g., the first input 220) selects a word of the one or more words, and the voice command (e.g., the second input 225) provides the particular request (e.g., translate). The at least three different inputs are coordinated to provide the user with a seamless experience. The assistant, in response to the user's translation request, provides a translation for the selected word (e.g., presents via a display or/or a microphone "Tako is the Japanese word for octopus. That is octopus sushi").

In Figure 2B, the user wearing the head-wearable device 110 is looking at an object 240 held in their hand (e.g., an apple). The user can provide a user input (e.g., a hand gesture, a voice command, a touch input at the wrist-wearable device 120 and/or head-wearable device 110, etc.) requesting assistance identifying the object 240 or performing an operation associated with the object 240. For example, the user can be shopping at a grocery store and request assistance in generating a shopping list and/or receiving additional information on an item. As shown in Figure 2B, responsive to a user input requesting assistance (e.g., assistance with a held object 240), the head-wearable device 110 can present an assistant user interface 250, as well as one or more user interface elements associated with operations related to the assistance request (e.g., operations associated with the identified object 240). For example, as shown in Figure 2B, the assistant user interface 250 can include an object identifier user interface element 260 (identifying the object 240 as an apple), and one or more user interface elements 262 - 266 associated with operations related to the identified object (e.g., a first user element 262 for generating a grocery list, a second user element 264 for generating a reminder (e.g., to check if more apples are needed or to set a reminder when to buy apples), and a third user element 266 for receiving more information on the apple (e.g., where the apple came from, prices of apples at other grocery stores, the type of apple, recipes for the type of apple, etc.).

In some embodiments, the assistant user interface 250 can include one or more additional user interface elements 270 to assist the user in accessing one or more applications or functions of the head-wearable device 110, wrist-wearable device 120, and/or other communicatively coupled device. For example, the additional user interface elements 270 can allow the user to message or call a contact, take a photo or video of the object 240, voice record a message or memo, view a gallery of related or relevant messages, like the object 240, and/or associate an emoji with the identified object 240, share the object (e.g., via a social media platform), etc. In some embodiments, while the assistant is active, the head-wearable device 110 can display an indicator such as a bodiless representation 180 and/or headless representation 190 (e.g., Figures 1M and 1N).

The above example is non-limiting. Different interactions using the wearable devices can be coordinated to provide an improved user experience.

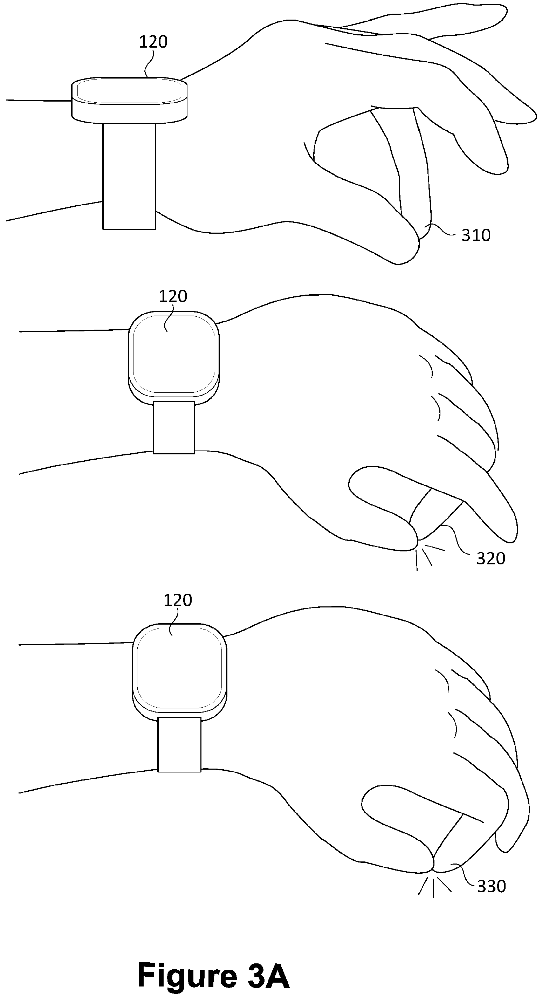

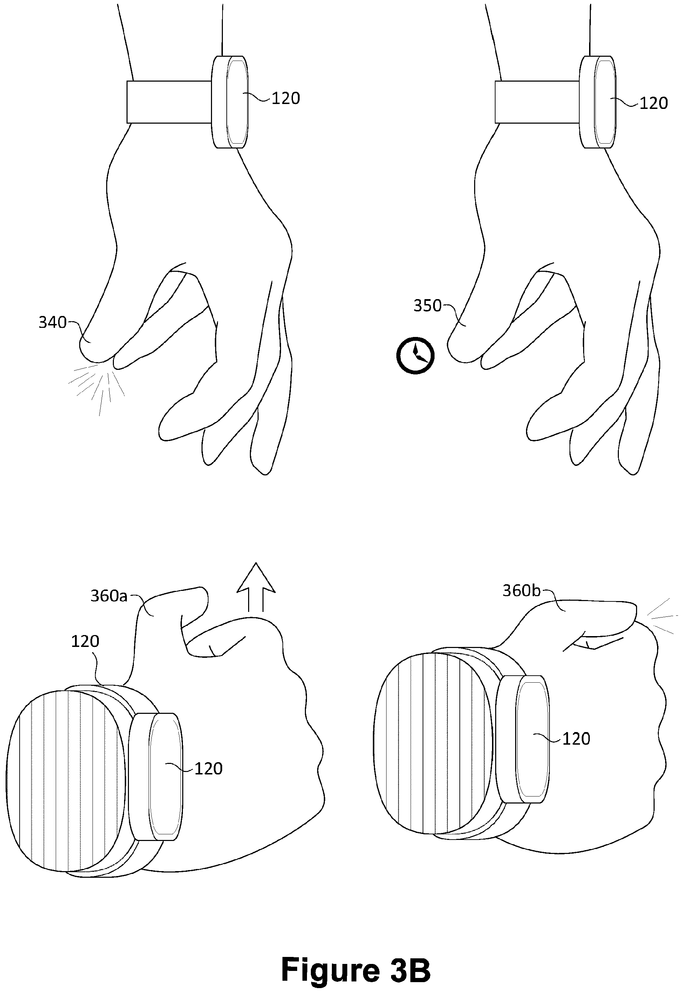

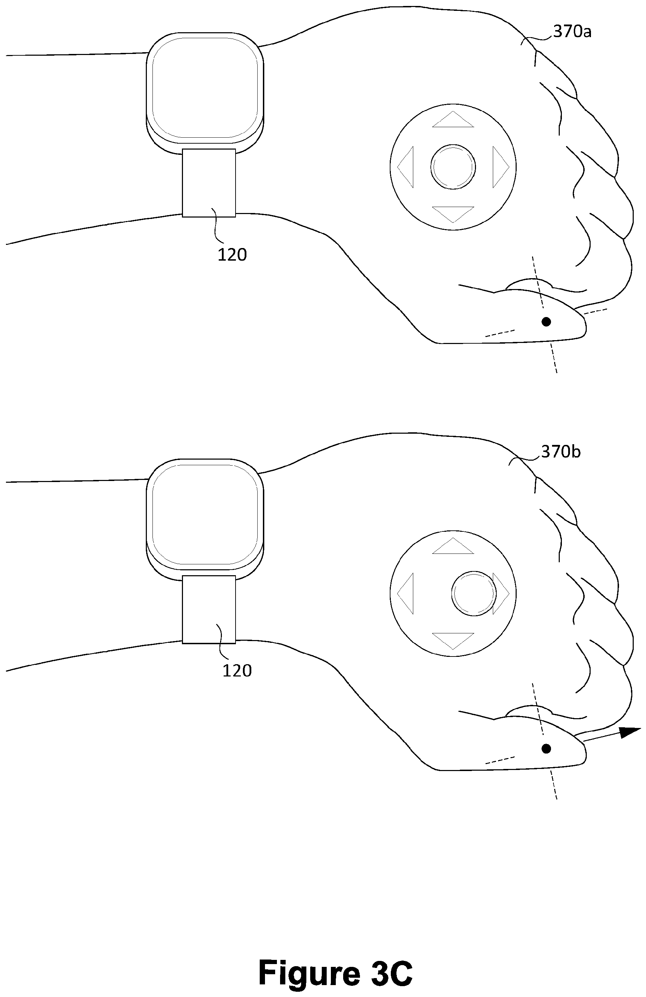

Figures 3A-3C illustrate different in-air hand gestures performed by a wearer of a wrist-wearable device, in accordance with some embodiments. In some embodiments, the in-air hand gestures are different contacts between the user's phalanges (or digits). For example, a first in-air hand gesture is a contact between the user's thumb and ring finger, a second in-air hand gesture is a contact between the user's thumb and middle finger, and a third in-air hand gesture is a contact between the user's thumb and index finger. As further shown in Figure 3B, in some embodiments, an in-air hand gesture is a contact between the user's thumb and little finger.

In some embodiments, distinct in-air hand gestures are performed based on a contact force (e.g., force at which at least two phalanges contact) and/or a length of time that a contact is maintained. For example, a fourth in-air hand gesture 340 is a contact between the user's thumb and little finger that is within a predetermined force threshold. In some embodiments, there is more than one predetermined force threshold (e.g., low force tap, medium force tap, and/or hard contact tap), each predetermined force threshold associated with a respective in-air hand gesture. A fifth in-air hand gesture 350 is a contact between the user's thumb and little finger that is held for a predetermined length of time. In some embodiments, there is more than one predetermined length of time (e.g., contact held for a short amount of time (e.g., 0-1.5 seconds), contact held for an intermediate amount of time (e.g., 1.5-2.5 seconds), and/or contact held for a long amount of time (e.g., 2.5 or more seconds)), each predetermined length of time associated with a respective in-air hand gestures.

In some embodiments, an in-air hand gesture is performed when a phalange contacts a portion of the user's hand or side portions of another phalange. For example, a sixth in-air hand gesture (e.g., contact 360a and 360b) is a contact between the user's thumb and a side portion of the index finger. In some embodiments, an in-air hand gesture is performed when a phalange is slid across a portion of the user's hand or side portions of another phalange. For example, a seventh in-air hand gesture (e.g., contact 370a and 370b) is a user's thumb contacting a side portion of the index finger and sliding the contact as if it were a D-pad.

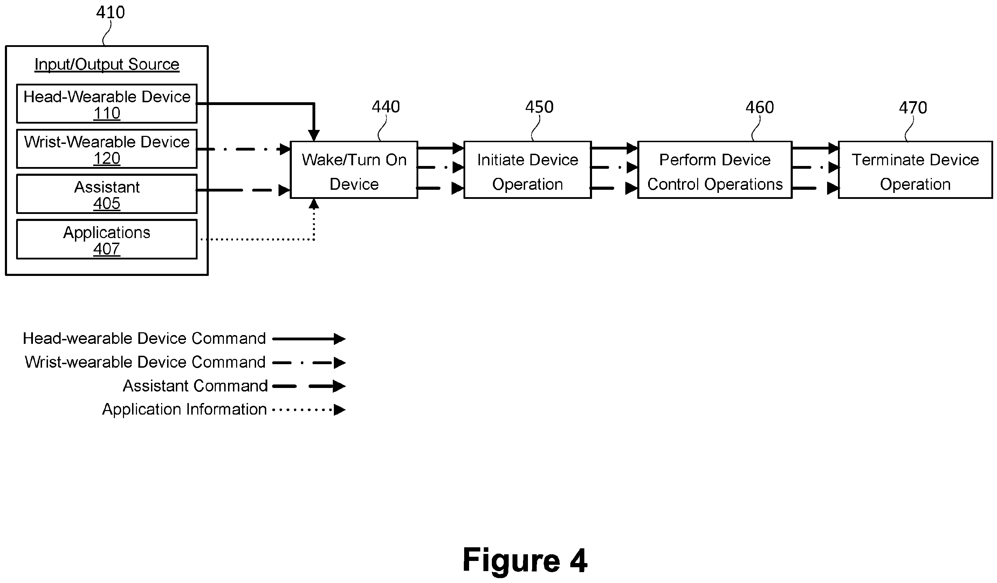

Figure 4 is a flow diagram of the different inputs coordinated between the wearable devices, in accordance with some embodiments. Flow diagram 400 includes a plurality of input and output sources 410. The input and output sources 410 include a head-wearable device 110 (Figures 1A-1L), a wrist-wearable device 120 (Figures 1A-1L), an assistant 405, and one or more applications 407. In some embodiments, the head-wearable device 110 can provide one or more touch-based commands (e.g., contacting a portion of the glasses frames), voice-based commands (e.g., via a microphone), in-air gesture commands (e.g., detected using image data), etc. In some embodiments, the wrist-wearable device 120 can provide one or more touch-based commands (e.g., contacting a portion of the housing or touch display), voice-based commands (e.g., via a microphone), in-air gesture commands (e.g., detected using sensor data, such as EMG sensor data), etc. In some embodiments, the assistant 405 is a machine learning model integrated in an electronic device or wearable devices (e.g., in the wrist-wearable device 120 and/or head-wearable device 110). In some embodiments, the applications 407 are stored in memory of an electronic device or wearable devices and provide application specific information and/or notification.

In some embodiments, one or more inputs from the respective sources of the input and output sources 410 is provided to an electronic device and/or wearable device and cause the respective device to wake or turn on 440. In some embodiments, a subset of the input and output sources 410 can provide additional commands to the respective device and cause one or more control operations to be performed on the respective device. Further, in some embodiments, the subset of the input and output sources 410 can provide commands to terminate operation of the respective device.

For example, the user can provide a command, via the head-wearable device 110 (e.g., capacitive touch command at the head-wearable device 110); the wrist-wearable device 120 (e.g., EMG sensor data); the assistant 405 (e.g., a voice command); and/or an application (e.g., opening and providing a command through an application), to instantly capture image data (e.g., still images or video). In other words, a command provided by the user can cause an imaging device of a communicatively coupled device (such as an imaging device of the head-wearable device 110) to automatically capture image data. In some embodiments, the assistant 405 can be initiated via the wrist-wearable device 120 and/or head-wearable device 110. For example, instead of saying "Hey assistant...," the user can perform a hand gesture to initiate the assistant 405. In some embodiments, the commands cause an instant action (e.g., automatically capture an image).

Alternatively, the commands provided by the user can cause a picture preview to be presented before capturing an image data. For example, the head-wearable device 110, the wrist-wearable device 120, the assistant 405, and/or the application 407 can wake a communicatively coupled device, and commands provided by the head-wearable device 110, the wrist-wearable device 120, and/or the assistant 405 can be provided to navigate to an imaging device application; perform one or more operations in the imaging device application (e.g., zoom in, zoom out, focus, etc.); and capture image data using a communicatively coupled imaging device.

**In** addition, the commands can further extend the operations performed. For example, after the image data is captured, the user can provide one or more additional commands via the head-wearable device 110, the wrist-wearable device 120, and/or the assistant 405 to identify one or more contacts within a respective device to share the image data, initiate a social media application and/or content sharing application to share the image data, initiate a messaging application to share the image data, etc. **In** some embodiments, the user can provide one or more commands via the head-wearable device 110, the wrist-wearable device 120, and/or the assistant 405 to modify or add content. For example, the user can provide one or more commands via the head-wearable device 110, the wrist-wearable device 120, and/or the assistant 405 to write texts, hand draw text, provide overlays, etc.

Non-limiting examples of user input options available to the user via the head-wearable device 110 include a device wake input (e.g., transitioning a device from sleep or off to on), a view notifications input, an initiate call input, an accept call input, a reject call input, a capture image data input, an activate assistant input, and a play music input.

Non-limiting examples of user input options available to the user via the wrist-wearable device 120 include a device wake input, a view notifications input, an initiate call input, an accept call input, a reject call input, a send message input, a reply to message input, a capture image data input, a share image data input, a message image data input, an activate assistant input, and a play music input.

Non-limiting examples of user input options available to the user via the assistant 405 include a device wake input, an auditory notifications request (e.g., read out messages or notifications), an initiate call input, an accept call input, a reject call input, a send message input, a reply to message input, a capture image data input, a share image data input, a message image data input, an activate assistant input, and a play music input.

Applications 407 can be associated with one or more input options. The input options for a particular application 407 are based on the application's implementation.

Additionally, each input option, when performed, can be associated with one or more output options. For example, the each of the above input options can cause a display to turn on, initiate a text to speech operation, activate one or more LEDs, activate a speaker, and/or cause generation of a haptic feedback response.

In one example, the user performs different input commands coordinated between the wearable devices to take a photo without an image preview, in accordance with some embodiments. In some embodiments, the user can perform a first input command to activate (or open an application associated with) an image sensor of a wearable device (or other communicatively coupled device) and cause the image sensor to capture image data (e.g., a single input image data capture). The first input command can be a capacitive touch input at the head-wearable device 110, a hand gesture detected by one or more sensors (e.g., EMG sensors) of the wrist-wearable device 120, a voice command detected by the assistant 405, and/or an input detected in an application 407 (e.g., a camera application).

In another example, the user performs different input commands coordinated between the wearable devices to take a photo with an image preview, in accordance with some embodiments. In some embodiments, the user performs a first input command to wake or turn on a device (e.g., a wearable device or other communicatively coupled device), a second input command to navigate and open an image sensor application on the device, and a third input command to causes the image sensor to capture image data (e.g., a single input image data capture). In some embodiments, while the image sensor application is open on the device, the user can perform a first additional input command to cause the image sensor to zoom in or out, and/or a second additional input command to focus the image sensor. The first input command can be an input at a button on the head-wearable device 110, a hand gesture (e.g., wake hand gesture) detected by one or more sensors of the wrist-wearable device 120, a voice command detected by the assistant 405, and/or an input detected in an application 407 (e.g., a messaging application that opens a camera to capture an image). The second input command can be a swipe action at a portion of the head-wearable device 110 (e.g., swiping on a portion of the frame) and/or another hand gesture (e.g., finger d-pad movement) detected by one or more sensors of the wrist-wearable device 120. The third input command can be a capacitive touch input at the head-wearable device 110 (e.g., swiping on a portion of the frame), yet another hand gesture (e.g., in-air tap gesture) detected by one or more sensors of the wrist-wearable device 120, and/or a voice command detected by the assistant 405. The first and second additional input commands can be performed at the head-wearable device 110 (e.g., at a touchpad) and/or the wrist-wearable device 120 (e.g., an additional hand gesture, such as a wrist-roll).

In some embodiments, the user can perform subsequent input commands coordinated between the wearable devices to share the captured photo. After performing the third input command to cause the image sensor to capture image data, the user can perform a fourth input command to cause the presentation of a user interface for sharing the image data, a fifth input command to search for a contact with which to share the image data and/or application to use in sharing or publishing the image data, and a sixth input command to share the image data. The fourth input command can be another swipe action at the portion of the head-wearable device 110, a hand gesture (e.g., in-air gesture) detected by one or more sensors of the wrist-wearable device 120, and/or a voice command detected by the assistant 405. The fifth input command can be a text input at the wrist-wearable device and/or one or more text-symbolic hand gestures detected by one or more sensors of the wrist-wearable device 120, and/or a voice command (e.g., dictation) detected by the assistant 405. The sixth input command can be a capacitive touch input at the head-wearable device 110 and/or a hand gesture (e.g., in-air tap gesture) detected by one or more sensors of the wrist-wearable device 120.

Similarly, the user can perform different input commands coordinated between the wearable devices to capture video without a video preview, in accordance with some embodiments. In some embodiments, the user can perform a first input command to activate (or open an application associated with) an image sensor of a wearable device (or other communicatively coupled device) and cause the image sensor to capture image data. The first input command can be a capacitive touch input at the head-wearable device 110, a hand gesture detected by one or more sensors (e.g., EMG sensors) of the wrist-wearable device 120, a voice command detected by the assistant 405, and/or an input detected in an application (e.g., a camera application). The user can perform a second input command to terminate the capture of image data (e.g., an input to end a video capture). The first input command can be a capacitive touch input at the head-wearable device 110, a hand gesture detected by one or more sensors of the wrist-wearable device 120, a voice command detected by the assistant 405, and/or an input detected in an application (e.g., a camera application). The second input command input can be a capacitive touch input at the head-wearable device 110 and/or a hand gesture detected by one or more sensors of the wrist-wearable device 120.

In another example, the user performs different input commands coordinated between the wearable devices to capture video with a vide preview, in accordance with some embodiments. In some embodiments, the user performs a first input command to wake or turn on a device, a second input command to navigate and open an image sensor application on the device, and a third input command to causes the image sensor to capture image data, and a fourth input command to terminate the capture of image data. While the image sensor application is open on the device, the user can perform a first additional input command to cause the image sensor to zoom in or out, and/or a second additional input command to focus the image sensor. Similar to the capture of a photo with preview, the first input command can be an input at a button on the head-wearable device 110, a hand gesture (e.g., wake hand gesture) detected by one or more sensors of the wrist-wearable device 120, a voice command detected by the assistant 405, and/or an input detected in an application 407. The second input command can be a swipe action at a portion of the head-wearable device 110 and/or another hand gesture detected by one or more sensors of the wrist-wearable device 120. The third and/or fourth input commands can be a capacitive touch input at the head-wearable device 110 (e.g., swiping on a portion of the frame), yet another hand gesture (e.g., in-air tap gesture) detected by one or more sensors of the wrist-wearable device 120, and/or a voice command detected by the assistant 405. The first and second additional input commands can be performed at the head-wearable device 110 (e.g., at a touchpad) and/or the wrist-wearable device 120 (e.g., an additional hand gesture, such as a wrist-roll).

In some embodiments, the user can perform subsequent input commands coordinated between the wearable devices to share the captured video. After performing the fourth input command to terminate the capture of image data, the user can perform a fifth input command to cause the presentation of a user interface for sharing the image data, a sixth input command to search for a contact with which to share the image data and/or application to use in sharing or publishing the image data, and a seventh input command to share the image data. The fifth input command can be a hand gesture (e.g., in-air gesture) detected by one or more sensors of the wrist-wearable device 120. The sixth input command can be a text input at the wrist-wearable device and/or one or more text-symbolic hand gestures detected by one or more sensors of the wrist-wearable device 120, and/or a voice command (e.g., dictation) detected by the assistant 405. The seventh input command can be a capacitive touch input at the head-wearable device **110** and/or a hand gesture (e.g., in-air tap gesture) detected by one or more sensors of the wrist-wearable device 120.

**In** some embodiments, the user can perform one or more input commands coordinated between the wearable devices to share the captured video or photo via a messaging application and/or social media application. For example, after performing an input command to capture the image data (e.g., capturing a photo or terminating a video capture), the user can perform an additional input command to cause a messaging application to open and another additional input command to send or post the captured image data. In some embodiment, prior to sending the captured image data, the user perform one or more inputs command to annotate or add text to the captured image data. The additional input command can be a swipe action at the portion of the head-wearable device **110** and/or another hand gesture (e.g., d-pad swipe in-air gesture) detected by one or more sensors of the wrist-wearable device 120. The other additional input command can be a capacitive touch input at the head-wearable device **110,** a hand gesture (e.g., in-air tap gesture) detected by one or more sensors of the wrist-wearable device 120, and/or a voice command detected by the assistant 405. The one or more input commands to annotate or add text to the captured image data can be a text input at the wrist-wearable device and/or one or more text-symbolic hand gestures detected by one or more sensors of the wrist-wearable device 120, and/or a voice command (e.g., dictation) detected by the assistant 405.

**In** another example, the user performs different input commands coordinated between the wearable devices to send a message to another electronic device, in accordance with some embodiments. In some embodiments, the user performs a first input command to open an application a device, a second input command to navigate through the application and open a message thread, and a third input command to causes the device to send a message. While a message thread is open, the user can provide one or more input commands to add text, image data, audio data (e.g., a voice memo, voice message, and/or audio clip), emojis, a quick response (e.g., automatically generated response). The one or more inputs can be voice commands detected by the assistant 405 and/or one or more hand gestures performed by the user and detected by one or more sensors of the wrist-wearable device 120.

In another example, the user performs different input commands coordinated between the wearable devices to send a message, in accordance with some embodiments. In some embodiments, a first input command opens a messaging application. In some embodiments, the first input command is a button press detected by the head-wearable device 110, a gesture detected by the head-wearable device 110 and/or the wrist-wearable device 120, and/or a voice command detected by the assistant 405. The user then performs a second input command (e.g., a D-pad swipe detected by the wrist-wearable device 120, or a voice command detected by the assistant 405) which causes the messaging application to search for a saved contact. The user then performs a third input command (e.g., a tap detected by the wrist-wearable device 120, or a voice command detected by the assistant 405) which causes the messaging application to add text to a message. In addition, or alternatively, the user performs another input command (e.g., a tap detected by the wrist-wearable device 120) which causes the messaging application to add a photo, a voice clip, an emoji, and/or a quick reply to the message. The user then performs a fourth input command (e.g., a tap detected by the wrist-wearable device 120, or a voice command detected by the assistant 405) which causes the messaging application to send the message.

In another example, the user performs different input commands coordinated between the wearable devices to live stream, in accordance with some embodiments. In some embodiments, a first input command causes one of the wearable devices to begin capturing video data. In some embodiments, the first input command is a button press detected by the head-wearable device 110, a gesture detected by the head-wearable device 110 and/or the wrist-wearable device 120, and/or a voice command detected by the assistant 405. The user then performs a second input command (e.g., a D-pad swipe detected by the wrist-wearable device 120, or a touchpad swipe detected by the head-wearable device 110) which opens a social media/streaming application. The user then performs a third input command (e.g., a button press detected by the head-wearable device 110, a tap detected by the wrist-wearable device 120, or a voice command detected by the assistant 405) which causes the social media/streaming application to start a livestream. In addition, or alternatively, the user performs another input command (e.g., a text-symbolic hang gestures detected by the wrist-wearable device 120, or a voice command detected by the assistant 405) which causes the social media/streaming application to add text to a text-input field of the social media/streaming application. The user then performs a fourth input command (e.g., a button press detected by the head-wearable device 110, a tap detected by the wrist-wearable device 120, or a voice command detected by the assistant 405) which causes the social media/streaming application to end the livestream.

In another example, the user performs different input commands coordinated between the wearable devices to initiate a call. In some embodiments, a first input command causes one of the wearable devices to open a communications application. In some embodiments, the first input command is a button press detected by the head-wearable device 110, a gesture detected by the head-wearable device 110 and/or the wrist-wearable device 120, and/or a voice command detected by the assistant 405. The user then performs a second input command (e.g., a D-pad swipe detected by the wrist-wearable device 120) which causes the communications application to open a contact list. In addition, or alternatively, the user performs another input command (e.g., a text-symbolic input detected by the wrist-wearable device 120, or a voice command detected by the assistant 405) which causes the communications application to search for a saved contact. The user then performs a third input command (e.g., a tap detected by the wrist-wearable device 120, or a voice command detected by the assistant 405) which causes the communications application to start the call.

In another example, the user performs different input commands coordinated between the wearable devices to answer an incoming call. In some embodiments, a first input command causes one of the wearable devices to accept or reject the incoming call. In some embodiments, the first input command is a button press detected by the head-wearable device 110, a gesture detected by the head-wearable device 110 and/or the wrist-wearable device 120, and/or a voice command detected by the assistant 405. If the incoming call is accepted, the user may then, in addition, perform a second input command (e.g., a button press detected by the head-wearable device 110, or a tap detected by the wrist-wearable device 120) which mutes a microphone of at least one of the wearable device, turns off a camera of at least one of the wearable devices, and/or adds an additional person to the call.

In another example, the user performs different input commands coordinated between the wearable devices to interact with a message notification. In some embodiments, an input command causes one of the wearable devices to wake a display. In some embodiments, the first input command is a button press detected by the head-wearable device 110, a gesture detected by the head-wearable device 110 and/or the wrist-wearable device 120, and/or a voice command detected by the assistant 405. The user then performs a second input command (e.g., a D-pad swipe detected by the wrist-wearable device 120, or a touchpad swipe detected by the head-wearable device 110) which causes the display to open a notification view. The user then performs a third input command (e.g., a D-pad swipe detected by the wrist-wearable device 120, or a touchpad swipe detected by the head-wearable device 110) which causes the display to return to a home screen. In addition, or alternatively, the user performs a fourth input command (e.g., a tap detected by the wrist-wearable device 120, or a touchpad swipe detected by the head-wearable device 110) to display a message associated with the message notification. In addition, or alternatively, the user then performs a fifth input command (e.g., a tap detected by the wrist-wearable device 120, or a touchpad swipe detected by the head-wearable device 110) which allows the user to enter a reply to the message. In addition, or alternatively, the user then performs a sixth input (e.g., a tap detected by the wrist-wearable device 120, a text-symbolic input detected by the wrist-wearable device 120, or a voice command detected by the assistant 405) which allows the user to select a quick reply and/or compose the reply.

In another example, the user performs different input commands coordinated between the wearable devices to play media. In some embodiments, an input command causes one of the wearable devices to wake a display. In some embodiments, the first input command is a button press detected by the head-wearable device 110, a gesture detected by the head-wearable device 110 and/or the wrist-wearable device 120, and/or a voice command detected by the assistant 405. The user then performs a second input command (e.g., a D-pad swipe detected by the wrist-wearable device 120, a touchpad swipe detected by the head-wearable device 110, or a voice command detected by the assistant 405) which opens a media application on the display and play media. In addition, or alternatively, the user then performs another input command (e.g., a tap detected by the wrist-wearable device 120, a touchpad swipe detected by the head-wearable device 110, or a voice command detected by the assistant 405) which plays the media, pauses the media, raises or lowers volume of the media, skips the media, and/or searches for a different media.

In another example, the user performs different input commands coordinated between the wearable devices to control media while a display is inactive (e.g., in a sleep mode or dimmed). In some embodiments, an input command causes one of the wearable devices to open a media application. In some embodiments, the first input command is a button press detected by the head-wearable device 110, a gesture detected by the head-wearable device 110 and/or the wrist-wearable device 120, and/or a voice command detected by the assistant 405. The user then performs a second input command (e.g., a tap detected by the wrist-wearable device 120, a touchpad swipe detected by the head-wearable device 110, or a voice command detected by the assistant 405) which plays media, pauses the media, raises or lowers volume of the media, and/or skips the media.

In another example, the user performs different input commands coordinated between the wearable devices to control audio while a display is inactive (e.g., in a sleep mode or dimmed). In some embodiments, an input command causes one of the wearable devices to invoke an application. In some embodiments, the first input command is a button press detected by the head-wearable device 110, a gesture detected by the head-wearable device 110 and/or the wrist-wearable device 120, and/or a voice command detected by the assistant 405. The user then performs a second input command (e.g., a tap detected by the wrist-wearable device 120, a touchpad swipe detected by the head-wearable device 110, or a voice command detected by the assistant 405) which answers a call, rejects the call, raises or lowers volume of the audio, and/or mutes the audio.

In another example, the user performs different input commands coordinated between the wearable devices to set a reminder. In some embodiments, an input command causes one of the wearable devices to wake a display. In some embodiments, the first input command is a button press detected by the head-wearable device 110, a gesture detected by the head-wearable device 110 and/or the wrist-wearable device 120, and/or a voice command detected by the assistant 405. The user then performs a second input command (e.g., a D-pad swipe detected by the wrist-wearable device 120, a touchpad swipe detected by the head-wearable device 110, or a voice command detected by the assistant 405) which sets the reminder.

In another example, the user performs different input commands coordinated between the wearable devices to navigate a user interface presented on a display of a wearable device or other communicatively coupled device. In some embodiments, an input command causes one of the wearable devices to wake a display. In some embodiments, the first input command is a button press detected by the head-wearable device 110, a gesture detected by the head-wearable device 110 and/or the wrist-wearable device 120, and/or a voice command detected by the assistant 405. The user then performs a second input command (e.g., a D-pad swipe detected by the wrist-wearable device 120, or a touchpad swipe detected by the head-wearable device 110) which presents an application menu on the display. The user then performs a third input command (e.g., a D-pad swipe detected by the wrist-wearable device 120, or a voice command detected by the assistant 405) which allows the user to search for and open the application. In addition, or alternatively, the user performs another input command (e.g., a gesture detected by the head-wearable device 110 and/or the wrist-wearable device 120) which opens the application.

In another example, the user performs different input commands coordinated between the wearable devices to switch or offload tasks between communicatively coupled device. In particular, the user can perform a first input command to cause a first device to open an application (or perform an operation), and a second input command to cause the application to be opened at or moved to a second device (or an operation to continue at the second device) in the same state and/or same position. For example, the user can perform a first input to open a video viewing application at the head-wearable device 110, while the user is watching a video displayed at the head-wearable device 110, the user can perform a second input command to cause the wrist-wearable device 120 to open the video viewing application and present the same video at its display at the same time position (e.g., the wrist-wearable device starts from the previous timestamp of the video that was being presented at the head-wearable device 110). The user can offload different applications and/or applications such as image data captures, message sharing, text inputs, audio recordings, etc. In some embodiments, the first input command is a button press detected by the head-wearable device 110, a gesture detected by the head-wearable device 110 and/or the wrist-wearable device 120, and/or a voice command detected by the assistant 405. The second input command can be a D-pad swipe detected by the wrist-wearable device 120, a touchpad swipe detected by the head-wearable device 110, or a voice command detected by the assistant 405, etc.

The above examples are non-limiting. The head-wearable device 110, the wrist-wearable device 120, and/or the assistant 405 can be used to provide a number of commands that are coordinated and/or operate independently. For example, the different commands can be used to initiate calls, posts messages, send texts, initiate live streams, review notifications, consume media content (e.g., select music, skip though tracks, increase volume, etc.), etc.

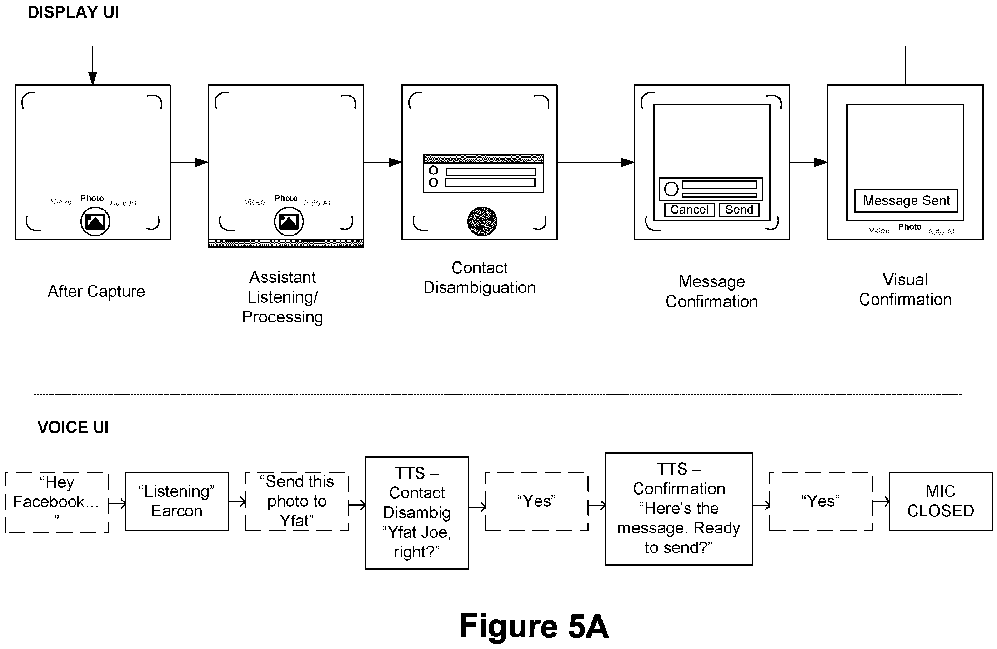

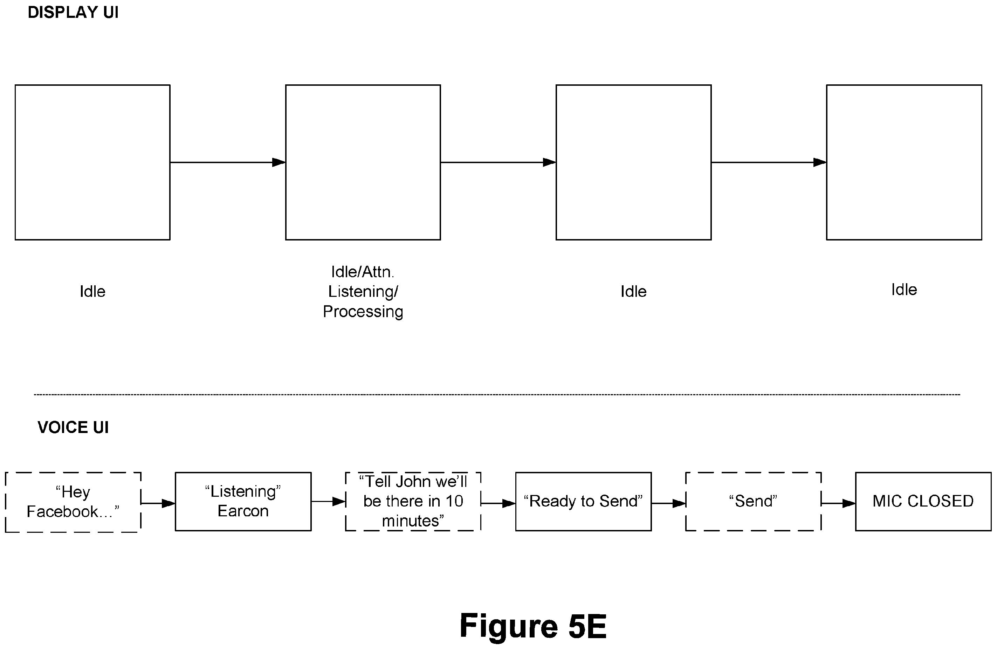

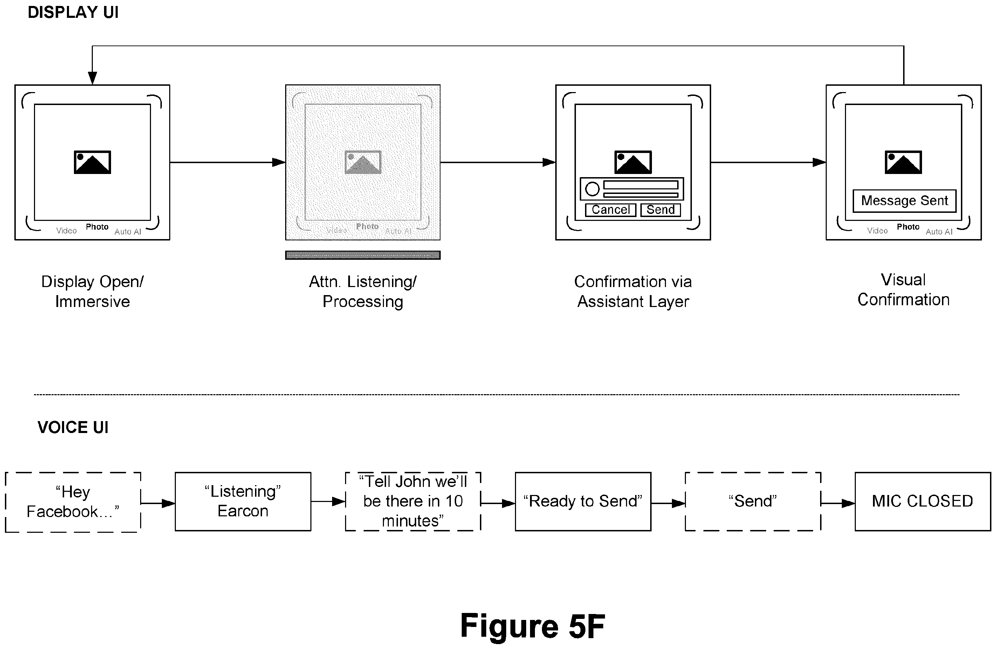

Figures 5A-5F illustrate flow diagrams of coordinated interactions between distinct input sources, in accordance with some embodiments. Figure 5A illustrates a voice only process for sharing an image. **In** Figure 5A, a user device shows a presented display after an image is captured and changes to the presented information when voice commands are provided. In some embodiments, the user captures the image data via in-air hand gestures detected by a wrist-wearable device 120 and/or using another electronic device and uses the assistant to send the image data. For example, after the image data is captured, the user can provide a voice command (e.g., "Hey, Facebook") which will activate the assistant and cause an indication to be presented to indicate to the user that the assistant is active (e.g., a "listening" earcon or a bodiless or headless indicator). While the assistant is active the user can provide another voice command (e.g., "send this photo to Yfat"). The assistant can display an indication that it is processing the request (e.g., contact disambiguation) and request confirmation (e.g., "Yfat Joe, right?"). The indication can also be an auditory indication (e.g., text-to-speech). The user can further be presented with the message prior to it being sent for confirmation. After the user confirms the message, an indication can be provided that confirms that the message was sent, and the assistant is deactivated.

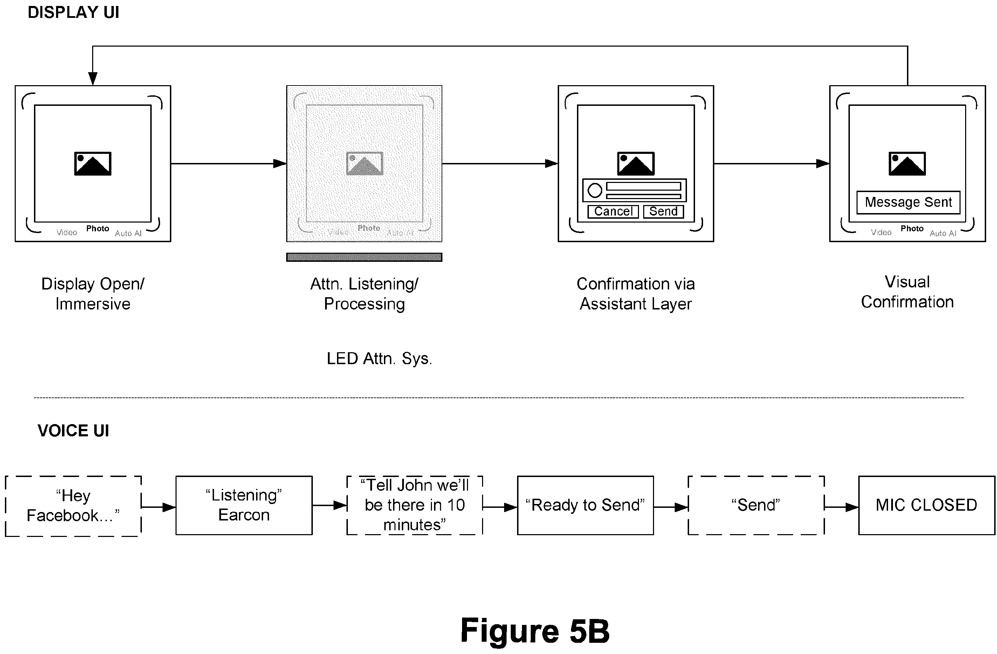

Figure 5B illustrates a model for instantly sending messages to one or more contacts. As shown in Figure 5B, a device is active (e.g., in an active mode), and the user provides a voice command that asks the assistant to "Tell John we'll be there in 10 minutes." The assistant will notify the user that the message is ready to be sent and allow the user to confirm the message before it is sent. After the user confirms that the message can be sent, an indication can be provided that confirms that the message was sent, and the assistant is deactivated.

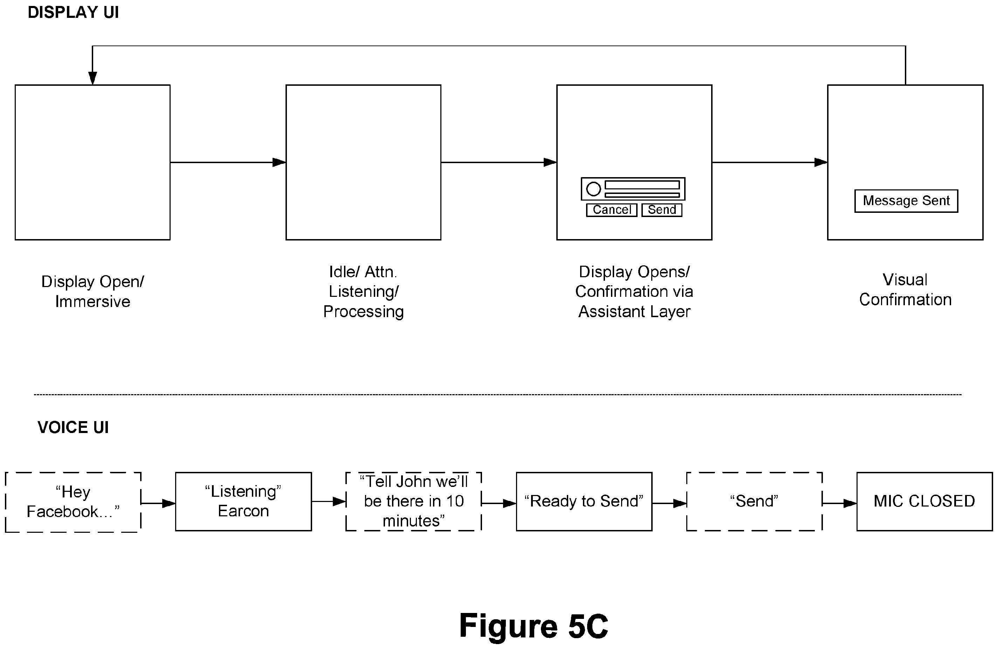

Figure 5C illustrates a model for instantly sending messages to one or more contacts. As shown in Figure 5C, a device is idle (e.g., in standby mode), and the user provides a voice command that asks the assistant to "Tell John we'll be there in 10 minutes." The assistant will notify they user that the message is ready to be sent and allow the user to confirm the message before it is sent. After the user confirms that the message can be sent, an indication can be provided that confirms that the message was sent, and the assistant is deactivated.

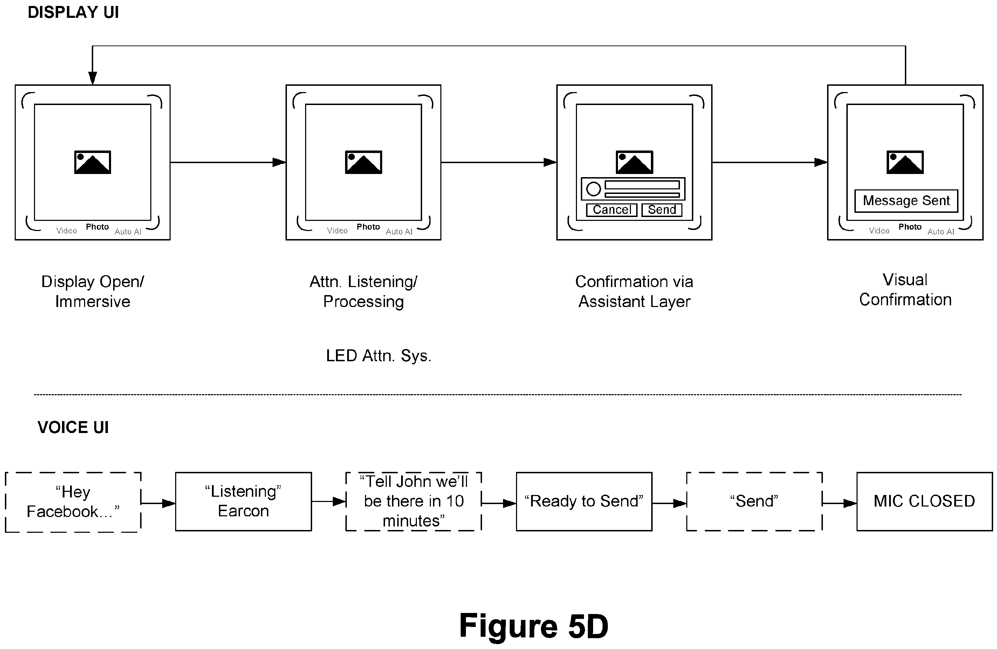

Figures 5D-5F illustrate additional models for voice commands provided to an assistant. The different models show different information that can be displayed by an electronic device while an assistant is active.

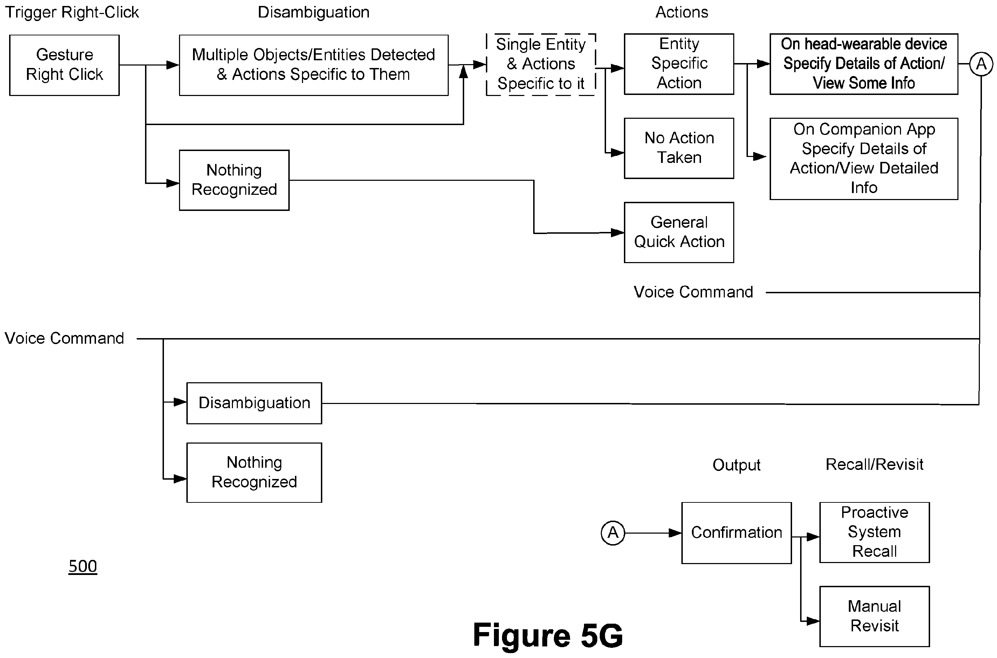

Figure 5G illustrates a high-level flow diagram 500 of inputs provided by a user, in accordance with some embodiments. The high-level diagram includes action taken based on performed gestures and voice commands. For example, when a gesture is performed (e.g., "right click"), a model is performed on the gesture to determine whether the gesture is recognized. If the gesture is not recognized a general quick action is performed. Additionally, if the gesture is not recognized, the user can be provided with instructions on improving the input. Alternatively, if multiple objects and/or entities are detected, actions specific to the objects and/or entities are identified and performed. In some embodiments, the head-wearable device 110 displays information on the specific actions. The user can further be allowed to confirm the specific actions presented by the head-wearable device 110. Alternatively or additionally, in some embodiments, information on the specific actions is provided via a respective companion application.

Alternatively, a voice command, when provided, is also analyzed using a model. The model attempts to disambiguate the command. If the command cannot be disambiguated, the user can be provided with instructions on improving the voice command. The voice command, when disambiguated, is presented to the user for confirmation. The system can further include a proactive recall system and/or a manual revisit.

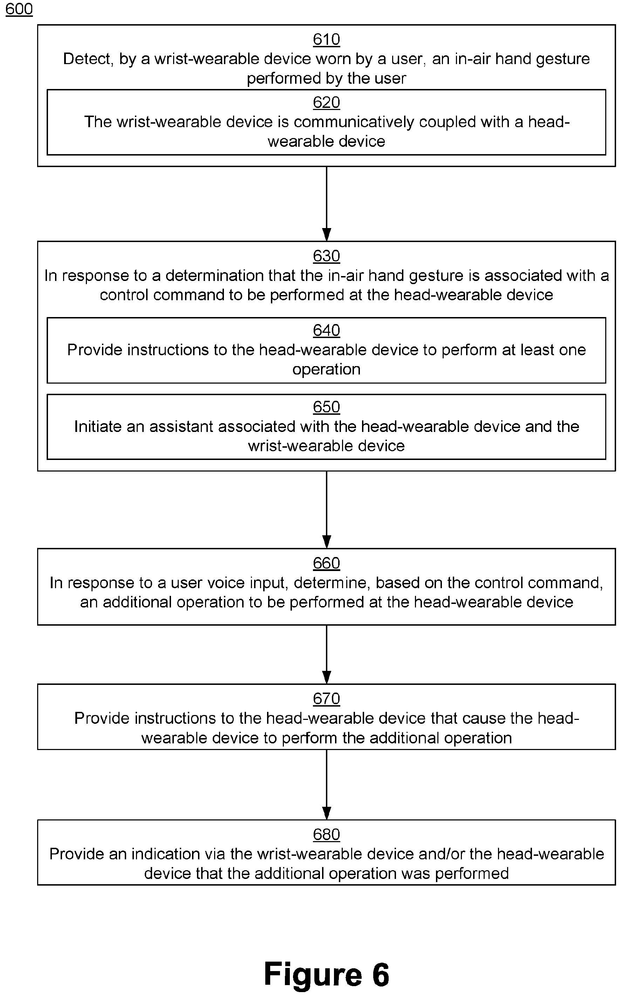

Figure 6 illustrates a flow diagram of inputs provided by a user and coordinated between different wearable devices, in accordance with some embodiments. Operations (e.g., steps) of the method 600 can be performed by one or more processors (e.g., central processing unit and/or microcontroller unit; processors, such as processors of devices described below in reference to Figures 9A-12B) of a system 1100 including a head-wearable device 110 and/or wrist-wearable device 120. In some embodiments, the wrist-wearable device 120 is coupled with one or more sensors (e.g., various sensors discussed in reference to Figures 9A-12B, such as a heart rate sensor, IMU, an EMG sensor, SpO2 sensor, altimeter, thermal sensor or thermal couple, ambient light sensor, ambient noise sensor), a display, a speaker, an imaging device, and a microphone to perform the one or more operations. At least some of the operations shown in Figure 6 correspond to instructions stored in a computer memory or computer-readable storage medium (e.g., storage, RAM, and/or memory, Figures 9A-12B). Operations of the method 600 can be performed by the wrist-wearable device 120 alone or in conjunction with one or more processors and/or hardware components of another device communicatively coupled to the wrist-wearable device 120 (e.g., a smartphone 950, a laptop, a tablet, etc.) and/or instructions stored in memory or computer-readable medium of the other device communicatively coupled to the wrist-wearable device 120.

The method 600 includes detecting (610), by a wrist-wearable device worn by a user, an in-air hand gesture performed by a user. The wrist-wearable device is (620) communicatively coupled with a head-wearable device. The method 600 further includes, in response to a determination (630) that the in-air hand gesture is associated with a control command to be performed at the head-wearable device, providing (640) instructions to the head-wearable device to perform at least one operation and initiating (650) an assistant associated with the head-wearable device and the wrist-wearable device. The method 600 further includes, in response to a user voice input (660) (e.g., detected by the assistant 405; Figure 4), determining, based on the control command, an additional operation to be performed at the head-wearable device. The method 600 further includes providing (670) instructions to the head-wearable device that cause the head-wearable device to perform the additional operation. The method 600 further includes providing (680) an indication via the wrist-wearable device and/or the head-wearable device.

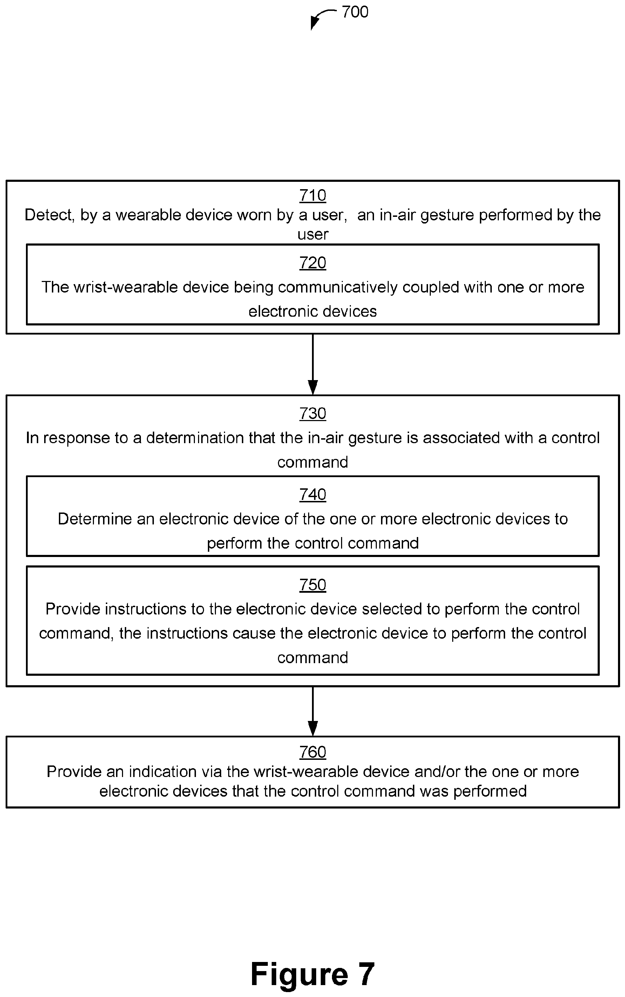

Figure 7 illustrates a flow diagram of a method of detecting and determining by a wrist-wearable device one or more operations to be performed at a communicatively coupled electronic device, in accordance with some embodiments. Operations (e.g., steps) of the method 700 can be performed by one or more processors (e.g., central processing unit and/or microcontroller unit; processors 1150, such as processors of devices described below in reference to Figures 9A-12B) of a system 1100 including a head-wearable device 110 and/or wrist-wearable device 120. **In** some embodiments, the wrist-wearable device 120 is coupled with one or more sensors (e.g., various sensors discussed in reference to Figures 9A-12B, such as a heart rate sensor, IMU, an EMG sensor, SpO2 sensor, altimeter, thermal sensor or thermal couple, ambient light sensor, ambient noise sensor), a display, a speaker, an imaging device, and a microphone to perform the one or more operations. At least some of the operations shown in Figure 7 correspond to instructions stored in a computer memory or computer-readable storage medium (e.g., storage, RAM, and/or memory, Figures 9A-12B). Operations of the method 700 can be performed by the wrist-wearable device 120 alone or in conjunction with one or more processors and/or hardware components of another device communicatively coupled to the wrist-wearable device 120 (e.g., a smartphone 950, a laptop, a tablet, etc.) and/or instructions stored in memory or computer-readable medium of the other device communicatively coupled to the wrist-wearable device 120.

The method 700 includes detecting (710), by a wearable device worn by a user, an in-air gesture performed by the user. The wrist-wearable device is (720) communicatively coupled with one or more electronic devices. The method 700 includes, in response to a determination that the in-air gesture is (730) associated with a control command determining (740) an electronic device of the one or more electronic devices to perform the control command and providing (750) instructions to the electronic device selected to perform the control command. The instructions cause the electronic device to perform the control command. Further, the method includes providing (760) an indication via the wrist-wearable device and/or the one or more electronic devices that the control command was performed. For example, as shown above in Figures 1A-1G, the user can use a wrist-wearable device 120 to control the operations of other communicatively coupled devices.

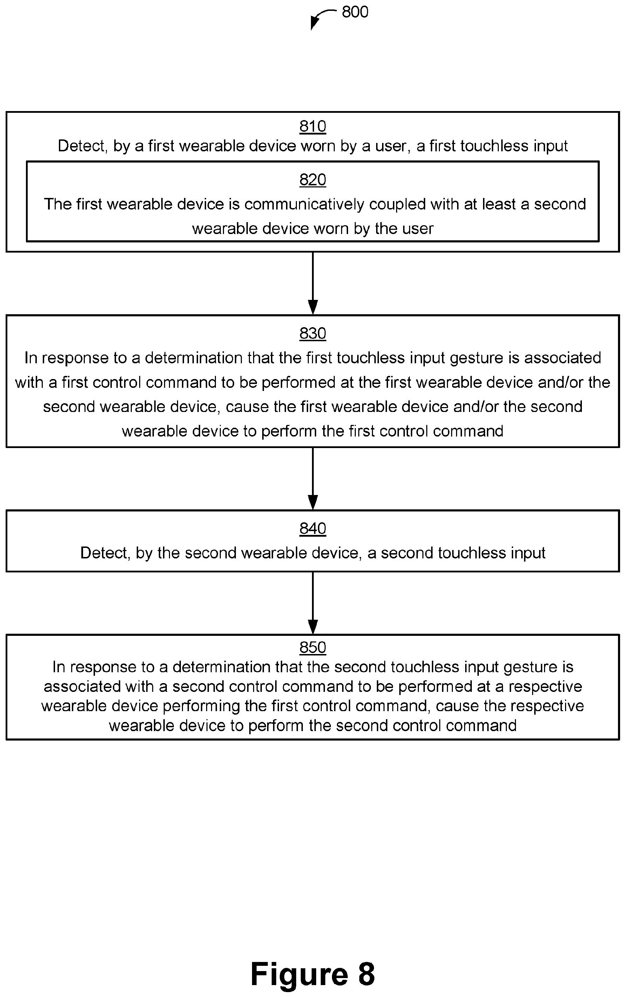

Figure 8 illustrates a flow diagram of a method of coordinating inputs provided by distinct electronic devices, in accordance with some embodiments. Operations (e.g., steps) of the method 800 can be performed by one or more processors (e.g., central processing unit and/or microcontroller unit; processors, such as processors of devices described below in reference to Figures 9A-12B) of a system 1100 including a head-wearable device 110 and/or wrist-wearable device 120. At least some of the operations shown in Figure 8 correspond to instructions stored in a computer memory or computer-readable storage medium (e.g., storage, RAM, and/or memory, Figures 9A-12B). Operations of the method 800 can be performed by the head-wearable device 110 alone or in conjunction with one or more processors and/or hardware components of another device communicatively coupled to the head-wearable device 110 (e.g., a wrist-wearable device 120, a smartphone 950, a laptop, a tablet, etc.) and/or instructions stored in memory or computer-readable medium of the other device communicatively coupled to the head-wearable device 110. Similarly, operations of the method 700 can be performed by the wrist-wearable device 120 alone or in conjunction with one or more processors and/or hardware components of another device communicatively coupled to the wrist-wearable device 120 (e.g., the head-wearable device 110, a smartphone 950, a laptop, a tablet, etc.) and/or instructions stored in memory or computer-readable medium of the other device communicatively coupled to the wrist-wearable device 120.

The method 800 includes detecting (810), by a first wearable device worn by a user, a first touchless input. The first wearable device is (820) communicatively coupled with at least a second wearable device worn by the user. The method 800 includes, in response to a determination that the first touchless input gesture is associated with a first control command to be performed at the first wearable device and/or the second wearable device, causing (830) the first wearable device and/or the second wearable device to perform the first control command. The method 800 further includes detecting (840), by the second wearable device, a second touchless input, and, in response to a determination that the second touchless input gesture is associated with a second control command to be performed at a respective wearable device performing the first control command, causing (850) the respective wearable device to perform the second control command. For example, as shown above in Figures **1H****-1L,** the user can use different inputs sources to complete different tasks. Specifically, the user can use an assistant to complete an interaction initiated by the wrist-wearable device 120 or use the wrist-wearable device 120 to complete an interaction initiated by the assistant.

The devices described above are further detailed below, including wrist-wearable devices, headset devices, systems, and haptic feedback devices. Specific operations described above may occur as a result of specific hardware, such hardware is described in further detail below. The devices described below are not limiting and features on these devices can be removed or additional features can be added to these devices.

The devices described above are further detailed below, including systems, wrist-wearable devices, headset devices, and smart textile-based garments. Specific operations described above may occur as a result of specific hardware, such hardware is described in further detail below. The devices described below are not limiting and features on these devices can be removed or additional features can be added to these devices. The different devices can include one or more analogous hardware components. For brevity, analogous devices and components are described below. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device 1000, a head-wearable device, an HIPD 1200, a smart textile-based garment (not shown), or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., virtual-reality animations, such as three-dimensional modeling); (iv) a field-programmable gate array (FPGA) that can be programmed and reconfigured after manufacturing and/or customized to perform specific tasks, such as signal processing, cryptography, and machine learning; (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or DSPs. As described herein, a graphics module is a component or software module that is designed to handle graphical operations and/or processes, and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include: (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) POGO pins, which may be small, spring-loaded pins configured to provide a charging interface; (v) wireless charging interfaces; (vi) global-position system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device); (ii) biopotential-signal sensors; (iii) inertial measurement unit (e.g., IMUs) for detecting, for example, angular rate, force, magnetic field, and/or changes in acceleration; (iv) heart rate sensors for measuring a user's heart rate; (v) SpO2 sensors for measuring blood oxygen saturation and/or other biometric data of a user; (vi) capacitive sensors for detecting changes in potential at a portion of a user's body (e.g., a sensor-skin interface) and/or the proximity of other devices or objects; and (vii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include: (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) electromyography (EMG) sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications, (x) camera applications, (xi) web-based applications; (xii) health applications; (xiii) artificial-reality (AR) applications, and/or any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). In some embodiments, a communication interface can refer to a software layer that enables different software programs to communicate with each other (e.g., application programming interfaces (APIs) and protocols such as HTTP and TCP/IP).

As described herein, a graphics module is a component or software module that is designed to handle graphical operations and/or processes, and can include a hardware module and/or a software module.

As described herein, non-transitory computer-readable storage media are physical devices or storage medium that can be used to store electronic data in a non-transitory form (e.g., such that the data is stored permanently until it is intentionally deleted or modified).

### Example AR Systems

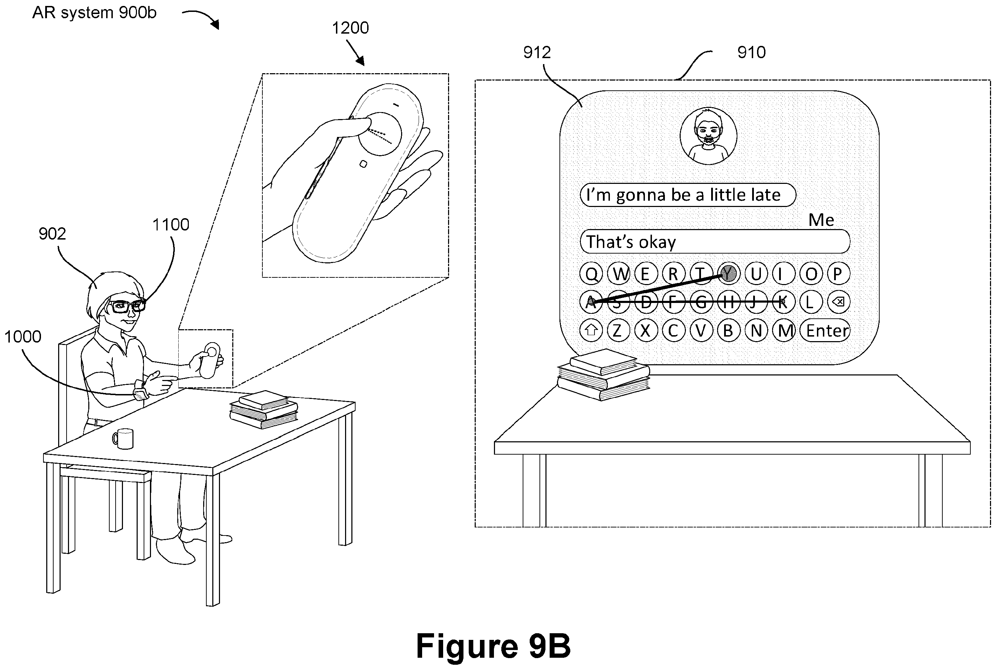

Figures 9A-9C-2 illustrate example artificial-reality systems, in accordance with some embodiments. Figure 9A shows a first AR system 900a and first example user interactions using a wrist-wearable device 1000, a head-wearable device (e.g., AR device 1100), and/or a handheld intermediary processing device (HIPD) 1200. Figure 9B shows a second AR system 900b and second example user interactions using a wrist-wearable device 1000, AR device 1100, and/or an HIPD 1200. Figures 9C-1 and 9C-2 show a third AR system 900c and third example user interactions using a wrist-wearable device 1000, a head-wearable device (e.g., virtual-reality (VR) device 1110), and/or an HIPD 1200. As the skilled artisan will appreciate upon reading the descriptions provided herein, the above-example AR systems (described in detail below) can perform various functions and/or operations described above with reference to Figures 1A-8.

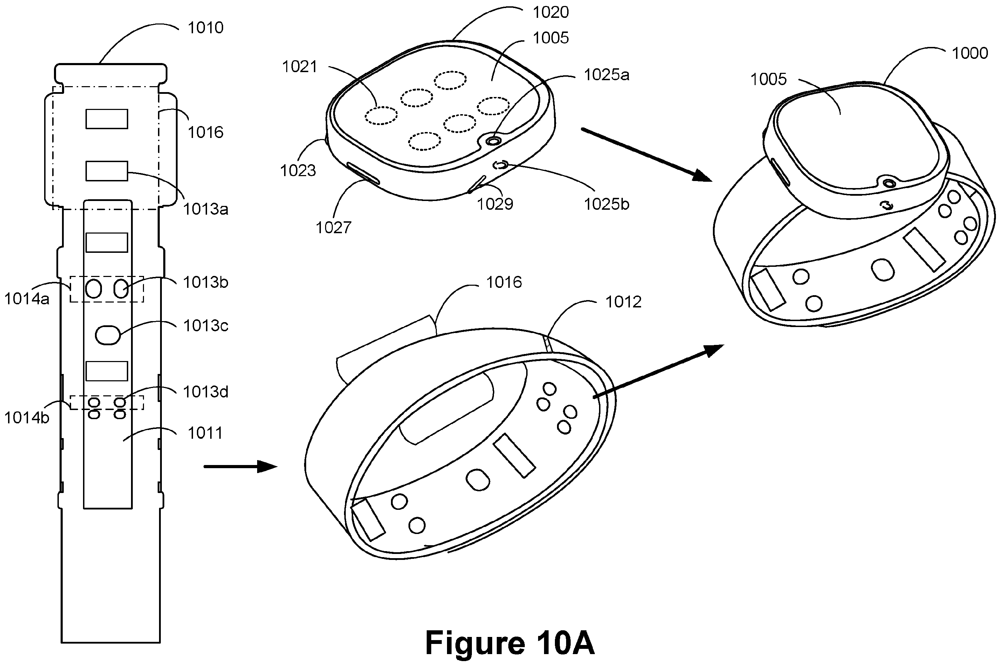

The wrist-wearable device 1000 and its constituent components are described below in reference to Figures 10A-10B, the head-wearable devices and their constituent components are described below in reference to Figures 11A-11D, and the HIPD 1200 and its constituent components are described below in reference to Figures 12A-12B. The wrist-wearable device 1000, the head-wearable devices, and/or the HIPD 1200 can communicatively couple via a network 925 (e.g., cellular, near field, Wi-Fi, personal area network, wireless LAN, etc.). Additionally, the wrist-wearable device 1000, the head-wearable devices, and/or the HIPD 1200 can also communicatively couple with one or more servers 930, computers 940 (e.g., laptops, computers, etc.), mobile devices 950 (e.g., smartphones, tablets, etc.), and/or other electronic devices via the network 925 (e.g., cellular, near field, Wi-Fi, personal area network, wireless LAN, etc.).

Turning to Figure 9A, a user 902 is shown wearing the wrist-wearable device 1000 and the AR device 1100, and having the HIPD 1200 on their desk. The wrist-wearable device 1000, the AR device 1100, and the HIPD 1200 facilitate user interaction with an AR environment. In particular, as shown by the first AR system 900a, the wrist-wearable device 1000, the AR device 1100, and/or the HIPD 1200 cause presentation of one or more avatars 904, digital representations of contacts 906, and virtual objects 908. As discussed below, the user 902 can interact with the one or more avatars 904, digital representations of the contacts 906, and virtual objects 908 via the wrist-wearable device 1000, the AR device 1100, and/or the HIPD 1200.

The user 902 can use any of the wrist-wearable device 1000, the AR device 1100, and/or the HIPD 1200 to provide user inputs. For example, the user 902 can perform one or more hand gestures that are detected by the wrist-wearable device 1000 (e.g., using one or more EMG sensors and/or IMUs, described below in reference to Figures 10A-10B) and/or AR device 1100 (e.g., using one or more image sensors or cameras, described below in reference to Figures 11A-11B) to provide a user input. Alternatively, or additionally, the user 902 can provide a user input via one or more touch surfaces of the wrist-wearable device 1000, the AR device 1100, and/or the HIPD 1200, and/or voice commands captured by a microphone of the wrist-wearable device 1000, the AR device 1100, and/or the HIPD 1200. In some embodiments, the wrist-wearable device 1000, the AR device 1100, and/or the HIPD 1200 include a digital assistant to help the user in providing a user input (e.g., completing a sequence of operations, suggesting different operations or commands, providing reminders, confirming a command). In some embodiments, the user 902 can provide a user input via one or more facial gestures and/or facial expressions. For example, cameras of the wrist-wearable device 1000, the AR device 1100, and/or the HIPD 1200 can track the user 902's eyes for navigating a user interface.

The wrist-wearable device 1000, the AR device 1100, and/or the HIPD 1200 can operate alone or in conjunction to allow the user 902 to interact with the AR environment. In some embodiments, the HIPD 1200 is configured to operate as a central hub or control center for the wrist-wearable device 1000, the AR device 1100, and/or another communicatively coupled device. For example, the user 902 can provide an input to interact with the AR environment at any of the wrist-wearable device 1000, the AR device 1100, and/or the HIPD 1200, and the HIPD 1200 can identify one or more back-end and front-end tasks to cause the performance of the requested interaction and distribute instructions to cause the performance of the one or more back-end and front-end tasks at the wrist-wearable device 1000, the AR device 1100, and/or the HIPD 1200. In some embodiments, a back-end task is a background-processing task that is not perceptible by the user (e.g., rendering content, decompression, compression, etc.), and a front-end task is a user-facing task that is perceptible to the user (e.g., presenting information to the user, providing feedback to the user, etc.)). As described below in reference to Figures 12A-12B, the HIPD 1200 can perform the back-end tasks and provide the wrist-wearable device 1000 and/or the AR device 1100 operational data corresponding to the performed back-end tasks such that the wrist-wearable device 1000 and/or the AR device 1100 can perform the front-end tasks. In this way, the HIPD 1200, which has more computational resources and greater thermal headroom than the wrist-wearable device 1000 and/or the AR device 1100, performs computationally intensive tasks and reduces the computer resource utilization and/or power usage of the wrist-wearable device 1000 and/or the AR device 1100.

In the example shown by the first AR system 900a, the HIPD 1200 identifies one or more back-end tasks and front-end tasks associated with a user request to initiate an AR video call with one or more other users (represented by the avatar 904 and the digital representation of the contact 906) and distributes instructions to cause the performance of the one or more back-end tasks and front-end tasks. In particular, the HIPD 1200 performs back-end tasks for processing and/or rendering image data (and other data) associated with the AR video call and provides operational data associated with the performed back-end tasks to the AR device 1100 such that the AR device 1100 performs front-end tasks for presenting the AR video call (e.g., presenting the avatar 904 and the digital representation of the contact 906).

In some embodiments, the HIPD 1200 can operate as a focal or anchor point for causing the presentation of information. This allows the user 902 to be generally aware of where information is presented. For example, as shown in the first AR system 900a, the avatar 904 and the digital representation of the contact 906 are presented above the HIPD 1200. In particular, the HIPD 1200 and the AR device 1100 operate in conjunction to determine a location for presenting the avatar 904 and the digital representation of the contact 906. In some embodiments, information can be presented within a predetermined distance from the HIPD 1200 (e.g., within five meters). For example, as shown in the first AR system 900a, virtual object 908 is presented on the desk some distance from the HIPD 1200. Similar to the above example, the HIPD 1200 and the AR device 1100 can operate in conjunction to determine a location for presenting the virtual object 908. Alternatively, in some embodiments, presentation of information is not bound by the HIPD 1200. More specifically, the avatar 904, the digital representation of the contact 906, and the virtual object 908 do not have to be presented within a predetermined distance of the HIPD 1200.

User inputs provided at the wrist-wearable device 1000, the AR device 1100, and/or the HIPD 1200 are coordinated such that the user can use any device to initiate, continue, and/or complete an operation. For example, the user 902 can provide a user input to the AR device 1100 to cause the AR device 1100 to present the virtual object 908 and, while the virtual object 908 is presented by the AR device 1100, the user 902 can provide one or more hand gestures via the wrist-wearable device 1000 to interact and/or manipulate the virtual object 908.

Figure 9B shows the user 902 wearing the wrist-wearable device 1000 and the AR device 1100, and holding the HIPD 1200. In the second AR system 900b, the wrist-wearable device 1000, the AR device 1100, and/or the HIPD 1200 are used to receive and/or provide one or more messages to a contact of the user 902. In particular, the wrist-wearable device 1000, the AR device 1100, and/or the HIPD 1200 detect and coordinate one or more user inputs to initiate a messaging application and prepare a response to a received message via the messaging application.

In some embodiments, the user 902 initiates, via a user input, an application on the wrist-wearable device 1000, the AR device 1100, and/or the HIPD 1200 that causes the application to initiate on at least one device. For example, in the second AR system 900b the user 902 performs a hand gesture associated with a command for initiating a messaging application (represented by messaging user interface 912); the wrist-wearable device 1000 detects the hand gesture; and, based on a determination that the user 902 is wearing AR device 1100, causes the AR device 1100 to present a messaging user interface 912 of the messaging application. The AR device 1100 can present the messaging user interface 912 to the user 902 via its display (e.g., as shown by user 902's field of view 910). In some embodiments, the application is initiated and can be run on the device (e.g., the wrist-wearable device 1000, the AR device 1100, and/or the HIPD 1200) that detects the user input to initiate the application, and the device provides another device operational data to cause the presentation of the messaging application. For example, the wrist-wearable device 1000 can detect the user input to initiate a messaging application, initiate and run the messaging application, and provide operational data to the AR device 1100 and/or the HIPD 1200 to cause presentation of the messaging application. Alternatively, the application can be initiated and run at a device other than the device that detected the user input. For example, the wrist-wearable device 1000 can detect the hand gesture associated with initiating the messaging application and cause the HIPD 1200 to run the messaging application and coordinate the presentation of the messaging application.

Further, the user 902 can provide a user input provided at the wrist-wearable device 1000, the AR device 1100, and/or the HIPD 1200 to continue and/or complete an operation initiated at another device. For example, after initiating the messaging application via the wrist-wearable device 1000 and while the AR device 1100 presents the messaging user interface 912, the user 902 can provide an input at the HIPD 1200 to prepare a response (e.g., shown by the swipe gesture performed on the HIPD 1200). The user 902's gestures performed on the HIPD 1200 can be provided and/or displayed on another device. For example, the user 902's swipe gestures performed on the HIPD 1200 are displayed on a virtual keyboard of the messaging user interface 912 displayed by the AR device 1100.

In some embodiments, the wrist-wearable device 1000, the AR device 1100, the HIPD 1200, and/or other communicatively coupled devices can present one or more notifications to the user 902. The notification can be an indication of a new message, an incoming call, an application update, a status update, etc. The user 902 can select the notification via the wrist-wearable device 1000, the AR device 1100, or the HIPD 1200 and cause presentation of an application or operation associated with the notification on at least one device. For example, the user 902 can receive a notification that a message was received at the wrist-wearable device 1000, the AR device 1100, the HIPD 1200, and/or other communicatively coupled device and provide a user input at the wrist-wearable device 1000, the AR device 1100, and/or the HIPD 1200 to review the notification, and the device detecting the user input can cause an application associated with the notification to be initiated and/or presented at the wrist-wearable device 1000, the AR device 1100, and/or the HIPD 1200.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 1100 can present to the user 902 game application data and the HIPD 1200 can use a controller to provide inputs to the game. Similarly, the user 902 can use the wrist-wearable device 1000 to initiate a camera of the AR device 1100, and the user can use the wrist-wearable device 1000, the AR device 1100, and/or the HIPD 1200 to manipulate the image capture (e.g., zoom in or out, apply filters, etc.) and capture image data.

Turning to Figures 9C-1 and 9C-2, the user 902 is shown wearing the wrist-wearable device 1000 and a VR device 1110, and holding the HIPD 1200. In the third AR system 900c, the wrist-wearable device 1000, the VR device 1110, and/or the HIPD 1200 are used to interact within an AR environment, such as a VR game or other AR application. While the VR device 1110 present a representation of a VR game (e.g., first AR game environment 920) to the user 902, the wrist-wearable device 1000, the VR device 1110, and/or the HIPD 1200 detect and coordinate one or more user inputs to allow the user 902 to interact with the VR game.

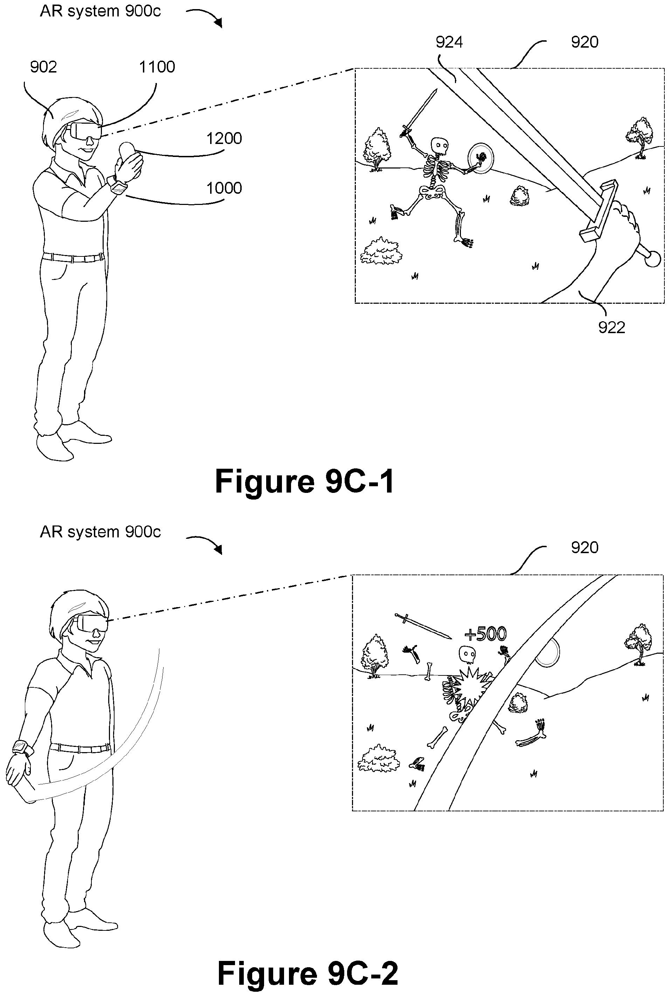

In some embodiments, the user 902 can provide a user input via the wrist-wearable device 1000, the VR device 1110, and/or the HIPD 1200 that causes an action in a corresponding AR environment. For example, the user 902 in the third AR system 900c (shown in Figure 9C-1) raises the HIPD 1200 to prepare for a swing in the first AR game environment 920. The VR device 1110, responsive to the user 902 raising the HIPD 1200, causes the AR representation of the user 922 to perform a similar action (e.g., raise a virtual object, such as a virtual sword 924). In some embodiments, each device uses respective sensor data and/or image data to detect the user input and provide an accurate representation of the user 902's motion. For example, image sensors 1258 (e.g., SLAM cameras or other cameras discussed below in Figures 12A and 12B) of the HIPD 1200 can be used to detect a position of the 1200 relative to the user 902's body such that the virtual object can be positioned appropriately within the first AR game environment 920; sensor data from the wrist-wearable device 1000 can be used to detect a velocity at which the user 902 raises the HIPD 1200 such that the AR representation of the user 922 and the virtual sword 924 are synchronized with the user 902's movements; and image sensors 1126 (Figures 11A-11C) of the VR device 1110 can be used to represent the user 902's body, boundary conditions, or real-world objects within the first AR game environment 920.

In Figure 9C-2, the user 902 performs a downward swing while holding the HIPD 1200. The user 902's downward swing is detected by the wrist-wearable device 1000, the VR device 1110, and/or the HIPD 1200 and a corresponding action is performed in the first AR game environment 920. In some embodiments, the data captured by each device is used to improve the user's experience within the AR environment. For example, sensor data of the wrist-wearable device 1000 can be used to determine a speed and/or force at which the downward swing is performed and image sensors of the HIPD 1200 and/or the VR device 1110 can be used to determine a location of the swing and how it should be represented in the first AR game environment 920, which, in turn, can be used as inputs for the AR environment (e.g., game mechanics, which can use detected speed, force, locations, and/or aspects of the user 902's actions to classify a user's inputs (e.g., user performs a light strike, hard strike, critical strike, glancing strike, miss) or calculate an output (e.g., amount of damage)).

While the wrist-wearable device 1000, the VR device 1110, and/or the HIPD 1200 are described as detecting user inputs, in some embodiments, user inputs are detected at a single device (with the single device being responsible for distributing signals to the other devices for performing the user input). For example, the HIPD 1200 can operate an application for generating the first AR game environment 920 and provide the VR device 1110 with corresponding data for causing the presentation of the first AR game environment 920, as well as detect the 902's movements (while holding the HIPD 1200) to cause the performance of corresponding actions within the first AR game environment 920. Additionally or alternatively, in some embodiments, operational data (e.g., sensor data, image data, application data, device data, and/or other data) of one or more devices is provide to a single device (e.g., the HIPD 1200) to process the operational data and cause respective devices to perform an action associated with processed operational data.

Having discussed example AR systems, devices for interacting with such AR systems, and other computing systems more generally, will now be discussed in greater detail below. Some definitions of devices and components that can be included in some or all of the example devices discussed below are defined here for ease of reference. A skilled artisan will appreciate that certain types of the components described below may be more suitable for a particular set of devices, and less suitable for a different set of devices. But subsequent reference to the components defined here should be considered to be encompassed by the definitions provided.

**In** some embodiments discussed below example devices and systems, including electronic devices and systems, will be discussed. Such example devices and systems are not intended to be limiting, and one of skill in the art will understand that alternative devices and systems to the example devices and systems described herein may be used to perform the operations and construct the systems and device that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

### Example Wrist-Wearable Devices

Figures 10A and 10B illustrate an example wrist-wearable device 1000, in accordance with some embodiments. The wrist-wearable device 1000 is an instance of the wearable device 120 described in reference to Figures 1A-8 herein, such that the wrist-wearable devices 120 should be understood to have the features of the wrist-wearable device 1000 and vice versa. Figure 10A illustrates components of the wrist-wearable device 1000, which can be used individually or in combination, including combinations that include other electronic devices and/or electronic components.

Figure 10A shows a wearable band 1010 and a watch body 1020 (or capsule) being coupled, as discussed below, to form the wrist-wearable device 1000. The wrist-wearable device 1000 can perform various functions and/or operations associated with navigating through user interfaces and selectively opening applications, as well as the functions and/or operations described above with reference to Figures 1A-8.

As will be described in more detail below, operations executed by the wrist-wearable device 1000 can include (i) presenting content to a user (e.g., displaying visual content via a display 1005); (ii) detecting (e.g., sensing) user input (e.g., sensing a touch on peripheral button 1023 and/or at a touch screen of the display 1005, a hand gesture detected by sensors (e.g., biopotential sensors)); (iii) sensing biometric data via one or more sensors 1013 (e.g., neuromuscular signals, heart rate, temperature, sleep, etc.); messaging (e.g., text, speech, video, etc.); image capture via one or more imaging devices or cameras 1025; wireless communications (e.g., cellular, near field, Wi-Fi, personal area network, etc.); location determination; financial transactions; providing haptic feedback; alarms; notifications; biometric authentication; health monitoring; sleep monitoring.

The above-example functions can be executed independently in the watch body 1020, independently in the wearable band 1010, and/or via an electronic communication between the watch body 1020 and the wearable band 1010. In some embodiments, functions can be executed on the wrist-wearable device 1000 while an AR environment is being presented (e.g., via one of the AR systems 900a to 900c). As the skilled artisan will appreciate upon reading the descriptions provided herein, the novel wearable devices described herein can be used with other types of AR environments.

The wearable band 1010 can be configured to be worn by a user such that an inner (or inside) surface of the wearable structure 1011 of the wearable band 1010 is in contact with the user's skin. When worn by a user, sensors 1013 contact the user's skin. The sensors 1013 can sense biometric data such as a user's heart rate, saturated oxygen level, temperature, sweat level, neuromuscular signal sensors, or a combination thereof. The sensors 1013 can also sense data about a user's environment, including a user's motion, altitude, location, orientation, gait, acceleration, position, or a combination thereof. In some embodiments, the sensors 1013 are configured to track a position and/or motion of the wearable band 1010. The one or more sensors 1013 can include any of the sensors defined above and/or discussed below with respect to Figure 10B.

The one or more sensors 1013 can be distributed on an inside and/or an outside surface of the wearable band 1010. In some embodiments, the one or more sensors 1013 are uniformly spaced along the wearable band 1010. Alternatively, in some embodiments, the one or more sensors 1013 are positioned at distinct points along the wearable band 1010. As shown in Figure 10A, the one or more sensors 1013 can be the same or distinct. For example, in some embodiments, the one or more sensors 1013 can be shaped as a pill (e.g., sensor 1013a), an oval, a circle a square, an oblong (e.g., sensor 1013c) and/or any other shape that maintains contact with the user's skin (e.g., such that neuromuscular signal and/or other biometric data can be accurately measured at the user's skin). In some embodiments, the one or more sensors 1013 are aligned to form pairs of sensors (e.g., for sensing neuromuscular signals based on differential sensing within each respective sensor). For example, sensor 1013b is aligned with an adjacent sensor to form sensor pair 1014a and sensor 1013d is aligned with an adjacent sensor to form sensor pair 1014b. In some embodiments, the wearable band 1010 does not have a sensor pair. Alternatively, in some embodiments, the wearable band 1010 has a predetermined number of sensor pairs (one pair of sensors, three pairs of sensors, four pairs of sensors, six pairs of sensors, sixteen pairs of sensors, etc.).

The wearable band 1010 can include any suitable number of sensors 1013. In some embodiments, the number and arrangements of sensors 1013 depend on the particular application for which the wearable band 1010 is used. For instance, a wearable band 1010 configured as an armband, wristband, or chest-band may include a plurality of sensors 1013 with different number of sensors 1013 and different arrangement for each use case, such as medical use cases, compared to gaming or general day-to-day use cases.

In accordance with some embodiments, the wearable band 1010 further includes an electrical ground electrode and a shielding electrode. The electrical ground and shielding electrodes, like the sensors 1013, can be distributed on the inside surface of the wearable band 1010 such that they contact a portion of the user's skin. For example, the electrical ground and shielding electrodes can be at an inside surface of coupling mechanism 1016 or an inside surface of a wearable structure 1011. The electrical ground and shielding electrodes can be formed and/or use the same components as the sensors 1013. In some embodiments, the wearable band 1010 includes more than one electrical ground electrode and more than one shielding electrode.

The sensors 1013 can be formed as part of the wearable structure 1011 of the wearable band 1010. In some embodiments, the sensors 1013 are flush or substantially flush with the wearable structure 1011 such that they do not extend beyond the surface of the wearable structure 1011. While flush with the wearable structure 1011, the sensors 1013 are still configured to contact the user's skin (e.g., via a skin-contacting surface). Alternatively, in some embodiments, the sensors 1013 extend beyond the wearable structure 1011 a predetermined distance (e.g., 0.1 mm to 2 mm) to make contact and depress into the user's skin. In some embodiments, the sensors 1013 are coupled to an actuator (not shown) configured to adjust an extension height (e.g., a distance from the surface of the wearable structure 1011) of the sensors 1013 such that the sensors 1013 make contact and depress into the user's skin. In some embodiments, the actuators adjust the extension height between 0.01 mm to 1.2 mm. This allows the user to customize the positioning of the sensors 1013 to improve the overall comfort of the wearable band 1010 when worn while still allowing the sensors 1013 to contact the user's skin. In some embodiments, the sensors 1013 are indistinguishable from the wearable structure 1011 when worn by the user.

The wearable structure 1011 can be formed of an elastic material, elastomers, etc., configured to be stretched and fitted to be worn by the user. In some embodiments, the wearable structure 1011 is a textile or woven fabric. As described above, the sensors 1013 can be formed as part of a wearable structure 1011. For example, the sensors 1013 can be molded into the wearable structure 1011 or be integrated into a woven fabric (e.g., the sensors 1013 can be sewn into the fabric and mimic the pliability of fabric (e.g., the sensors 1013 can be constructed from a series of woven strands of fabric)).

The wearable structure 1011 can include flexible electronic connectors that interconnect the sensors 1013, the electronic circuitry, and/or other electronic components (described below in reference to Figure 10B) that are enclosed in the wearable band 1010. In some embodiments, the flexible electronic connectors are configured to interconnect the sensors 1013, the electronic circuitry, and/or other electronic components of the wearable band 1010 with respective sensors and/or other electronic components of another electronic device (e.g., watch body 1020). The flexible electronic connectors are configured to move with the wearable structure 1011 such that the user adjustment to the wearable structure 1011 (e.g., resizing, pulling, folding, etc.) does not stress or strain the electrical coupling of components of the wearable band 1010.

As described above, the wearable band 1010 is configured to be worn by a user. In particular, the wearable band 1010 can be shaped or otherwise manipulated to be worn by a user. For example, the wearable band 1010 can be shaped to have a substantially circular shape such that it can be configured to be worn on the user's lower arm or wrist. Alternatively, the wearable band 1010 can be shaped to be worn on another body part of the user, such as the user's upper arm (e.g., around a bicep), forearm, chest, legs, etc. The wearable band 1010 can include a retaining mechanism 1012 (e.g., a buckle, a hook and loop fastener, etc.) for securing the wearable band 1010 to the user's wrist or other body part. While the wearable band 1010 is worn by the user, the sensors 1013 sense data (referred to as sensor data) from the user's skin. In particular, the sensors 1013 of the wearable band 1010 obtain (e.g., sense and record) neuromuscular signals.

The sensed data (e.g., sensed neuromuscular signals) can be used to detect and/or determine the user's intention to perform certain motor actions. In particular, the sensors 1013 sense and record neuromuscular signals from the user as the user performs muscular activations (e.g., movements, gestures, etc.). The detected and/or determined motor actions (e.g., phalange (or digits) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on the display 1005 of the wrist-wearable device 1000 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm down on a table; dynamic gestures, such as grasping a physical or virtual object; and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by the sensors 1013 can be used to provide a user with an enhanced interaction with a physical object (e.g., devices communicatively coupled with the wearable band 1010) and/or a virtual object in an artificial-reality application generated by an artificial-reality system (e.g., user interface objects presented on the display 1005 or another computing device (e.g., a smartphone)).

**In** some embodiments, the wearable band 1010 includes one or more haptic devices 1046 (Figure 10B; e.g., a vibratory haptic actuator) that are configured to provide haptic feedback (e.g., a cutaneous and/or kinesthetic sensation, etc.) to the user's skin. The sensors 1013, and/or the haptic devices 1046 can be configured to operate in conjunction with multiple applications including, without limitation, health monitoring, social media, games, and artificial reality (e.g., the applications associated with artificial reality).

The wearable band 1010 can also include coupling mechanism 1016 (e.g., a cradle or a shape of the coupling mechanism can correspond to shape of the watch body 1020 of the wrist-wearable device 1000) for detachably coupling a capsule (e.g., a computing unit) or watch body 1020 (via a coupling surface of the watch body 1020) to the wearable band 1010. In particular, the coupling mechanism 1016 can be configured to receive a coupling surface proximate to the bottom side of the watch body 1020 (e.g., a side opposite to a front side of the watch body 1020 where the display 1005 is located), such that a user can push the watch body 1020 downward into the coupling mechanism 1016 to attach the watch body 1020 to the coupling mechanism 1016. In some embodiments, the coupling mechanism 1016 can be configured to receive a top side of the watch body 1020 (e.g., a side proximate to the front side of the watch body 1020 where the display 1005 is located) that is pushed upward into the cradle, as opposed to being pushed downward into the coupling mechanism 1016. In some embodiments, the coupling mechanism 1016 is an integrated component of the wearable band 1010 such that the wearable band 1010 and the coupling mechanism 1016 are a single unitary structure. In some embodiments, the coupling mechanism 1016 is a type of frame or shell that allows the watch body 1020 coupling surface to be retained within or on the wearable band 1010 coupling mechanism 1016 (e.g., a cradle, a tracker band, a support base, a clasp, etc.).

The coupling mechanism 1016 can allow for the watch body 1020 to be detachably coupled to the wearable band 1010 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 1020 to the wearable band 1010 and to decouple the watch body 1020 from the wearable band 1010. For example, a user can twist, slide, turn, push, pull, or rotate the watch body 1020 relative to the wearable band 1010, or a combination thereof, to attach the watch body 1020 to the wearable band 1010 and to detach the watch body 1020 from the wearable band 1010. Alternatively, as discussed below, in some embodiments, the watch body 1020 can be decoupled from the wearable band 1010 by actuation of the release mechanism 1029.

The wearable band 1010 can be coupled with a watch body 1020 to increase the functionality of the wearable band 1010 (e.g., converting the wearable band 1010 into a wrist-wearable device 1000, adding an additional computing unit and/or battery to increase computational resources and/or a battery life of the wearable band 1010, adding additional sensors to improve sensed data, etc.). As described above, the wearable band 1010 (and the coupling mechanism 1016) is configured to operate independently (e.g., execute functions independently) from watch body 1020. For example, the coupling mechanism 1016 can include one or more sensors 1013 that contact a user's skin when the wearable band 1010 is worn by the user and provide sensor data for determining control commands.

A user can detach the watch body 1020 (or capsule) from the wearable band 1010 in order to reduce the encumbrance of the wrist-wearable device 1000 to the user. For embodiments in which the watch body 1020 is removable, the watch body 1020 can be referred to as a removable structure, such that in these embodiments the wrist-wearable device 1000 includes a wearable portion (e.g., the wearable band 1010) and a removable structure (the watch body 1020).

Turning to the watch body 1020, the watch body 1020 can have a substantially rectangular or circular shape. The watch body 1020 is configured to be worn by the user on their wrist or on another body part. More specifically, the watch body 1020 is sized to be easily carried by the user, attached on a portion of the user's clothing, and/or coupled to the wearable band 1010 (forming the wrist-wearable device 1000). As described above, the watch body 1020 can have a shape corresponding to the coupling mechanism 1016 of the wearable band 1010. In some embodiments, the watch body 1020 includes a single release mechanism 1029 or multiple release mechanisms (e.g., two release mechanisms 1029 positioned on opposing sides of the watch body 1020, such as spring-loaded buttons) for decoupling the watch body 1020 and the wearable band 1010. The release mechanism 1029 can include, without limitation, a button, a knob, a plunger, a handle, a lever, a fastener, a clasp, a dial, a latch, or a combination thereof.

A user can actuate the release mechanism 1029 by pushing, turning, lifting, depressing, shifting, or performing other actions on the release mechanism 1029. Actuation of the release mechanism 1029 can release (e.g., decouple) the watch body 1020 from the coupling mechanism 1016 of the wearable band 1010, allowing the user to use the watch body 1020 independently from wearable band 1010, and vice versa. For example, decoupling the watch body 1020 from the wearable band 1010 can allow the user to capture images using rear-facing camera 1025B. Although the coupling mechanism 1016 is shown positioned at a corner of watch body 1020, the release mechanism 1029 can be positioned anywhere on watch body 1020 that is convenient for the user to actuate. In addition, in some embodiments, the wearable band 1010 can also include a respective release mechanism for decoupling the watch body 1020 from the coupling mechanism 1016. In some embodiments, the release mechanism 1029 is optional and the watch body 1020 can be decoupled from the coupling mechanism 1016 as described above (e.g., via twisting, rotating, etc.).

The watch body 1020 can include one or more peripheral buttons 1023 and 1027 for performing various operations at the watch body 1020. For example, the peripheral buttons 1023 and 1027 can be used to turn on or wake (e.g., transition from a sleep state to an active state) the display 1005, unlock the watch body 1020, increase or decrease a volume, increase or decrease brightness, interact with one or more applications, interact with one or more user interfaces, etc. Additionally, or alternatively, in some embodiments, the display 1005 operates as a touch screen and allows the user to provide one or more inputs for interacting with the watch body 1020.

In some embodiments, the watch body 1020 includes one or more sensors 1021. The sensors 1021 of the watch body 1020 can be the same or distinct from the sensors 1013 of the wearable band 1010. The sensors 1021 of the watch body 1020 can be distributed on an inside and/or an outside surface of the watch body 1020. In some embodiments, the sensors 1021 are configured to contact a user's skin when the watch body 1020 is worn by the user. For example, the sensors 1021 can be placed on the bottom side of the watch body 1020 and the coupling mechanism 1016 can be a cradle with an opening that allows the bottom side of the watch body 1020 to directly contact the user's skin. Alternatively, in some embodiments, the watch body 1020 does not include sensors that are configured to contact the user's skin (e.g., including sensors internal and/or external to the watch body 1020 that configured to sense data of the watch body 1020 and the watch body 1020's surrounding environment). In some embodiments, the sensors 1013 are configured to track a position and/or motion of the watch body 1020.

The watch body 1020 and the wearable band 1010 can share data using a wired communication method (e.g., a Universal Asynchronous Receiver/Transmitter (UART), a USB transceiver, etc.) and/or a wireless communication method (e.g., near field communication, Bluetooth, etc.). For example, the watch body 1020 and the wearable band 1010 can share data sensed by the sensors 1013 and 1021, as well as application- and device-specific information (e.g., active and/or available applications), output devices (e.g., display, speakers, etc.), input devices (e.g., touch screen, microphone, imaging sensors, etc.).

In some embodiments, the watch body 1020 can include, without limitation, a front-facing camera 1025A and/or a rear-facing camera 1025B, sensors 1021 (e.g., a biometric sensor, an IMU sensor, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 1063; Figure 10B), a touch sensor, a sweat sensor, etc.). In some embodiments, the watch body 1020 can include one or more haptic devices 1076 (Figure 10B; a vibratory haptic actuator) that is configured to provide haptic feedback (e.g., a cutaneous and/or kinesthetic sensation, etc.) to the user. The sensors 1021 and/or the haptic device 1076 can also be configured to operate in conjunction with multiple applications including, without limitation, health-monitoring applications, social media applications, game applications, and artificial-reality applications (e.g., the applications associated with artificial reality).

As described above, the watch body 1020 and the wearable band 1010, when coupled, can form the wrist-wearable device 1000. When coupled, the watch body 1020 and wearable band 1010 operate as a single device to execute functions (operations, detections, communications, etc.) described herein. In some embodiments, each device is provided with particular instructions for performing the one or more operations of the wrist-wearable device 1000. For example, in accordance with a determination that the watch body 1020 does not include neuromuscular signal sensors, the wearable band 1010 can include alternative instructions for performing associated instructions (e.g., providing sensed neuromuscular signal data to the watch body 1020 via a different electronic device). Operations of the wrist-wearable device 1000 can be performed by the watch body 1020 alone or in conjunction with the wearable band 1010 (e.g., via respective processors and/or hardware components) and vice versa. In some embodiments, operations of the wrist-wearable device 1000, the watch body 1020, and/or the wearable band 1010 can be performed in conjunction with one or more processors and/or hardware components of another communicatively coupled device (e.g., the HIPD 1200; Figures 12A-12B).

As described below with reference to the block diagram of Figure 10B, the wearable band 1010 and/or the watch body 1020 can each include independent resources required to independently execute functions. For example, the wearable band 1010 and/or the watch body 1020 can each include a power source (e.g., a battery), a memory, data storage, a processor (e.g., a central processing unit (CPU)), communications, a light source, and/or input/output devices. Figure 10B shows block diagrams of a computing system 1030 corresponding to the wearable band 1010, and a computing system 1060 corresponding to the watch body 1020, according to some embodiments. A computing system of the wrist-wearable device 1000 includes a combination of components of the wearable band computing system 1030 and the watch body computing system 1060, in accordance with some embodiments.

The watch body 1020 and/or the wearable band 1010 can include one or more components shown in watch body computing system 1060. In some embodiments, a single integrated circuit includes all or a substantial portion of the components of the watch body computing system 1060 are included in a single integrated circuit. Alternatively, in some embodiments, components of the watch body computing system 1060 are included in a plurality of integrated circuits that are communicatively coupled. In some embodiments, the watch body computing system 1060 is configured to couple (e.g., via a wired or wireless connection) with the wearable band computing system 1030, which allows the computing systems to share components, distribute tasks, and/or perform other operations described herein (individually or as a single device).

The watch body computing system 1060 can include one or more processors 1079, a controller 1077, a peripherals interface 1061, a power system 1095, and memory (e.g., a memory 1080), each of which are defined above and described in more detail below.

The power system 1095 can include a charger input 1096, a power-management integrated circuit (PMIC) 1097, and a battery 1098, each are which are defined above. In some embodiments, a watch body 1020 and a wearable band 1010 can have respective charger inputs (e.g., charger input 1096 and 1057), respective batteries (e.g., battery 1098 and 1059), and can share power with each other (e.g., the watch body 1020 can power and/or charge the wearable band 1010, and vice versa). Although watch body 1020 and/or the wearable band 1010 can include respective charger inputs, a single charger input can charge both devices when coupled. The watch body 1020 and the wearable band 1010 can receive a charge using a variety of techniques. In some embodiments, the watch body 1020 and the wearable band 1010 can use a wired charging assembly (e.g., power cords) to receive the charge. Alternatively, or in addition, the watch body 1020 and/or the wearable band 1010 can be configured for wireless charging. For example, a portable charging device can be designed to mate with a portion of watch body 1020 and/or wearable band 1010 and wirelessly deliver usable power to a battery of watch body 1020 and/or wearable band 1010. The watch body 1020 and the wearable band 1010 can have independent power systems (e.g., power system 1095 and 1056) to enable each to operate independently. The watch body 1020 and wearable band 1010 can also share power (e.g., one can charge the other) via respective PMICs (e.g., PMICs 1097 and 1058) that can share power over power and ground conductors and/or over wireless charging antennas.

In some embodiments, the peripherals interface 1061 can include one or more sensors 1021, many of which listed below are defined above. The sensors 1021 can include one or more coupling sensors 1062 for detecting when the watch body 1020 is coupled with another electronic device (e.g., a wearable band 1010). The sensors 1021 can include imaging sensors 1063 (one or more of the cameras 1025 and/or separate imaging sensors 1063 (e.g., thermal-imaging sensors)). In some embodiments, the sensors 1021 include one or more SpO2 sensors 1064. In some embodiments, the sensors 1021 include one or more biopotential-signal sensors (e.g., EMG sensors 1065, which may be disposed on a user-facing portion of the watch body 1020 and/or the wearable band 1010). In some embodiments, the sensors 1021 include one or more capacitive sensors 1066. In some embodiments, the sensors 1021 include one or more heart rate sensors 1067. In some embodiments, the sensors 1021 include one or more IMUs 1068. In some embodiments, one or more IMUs 1068 can be configured to detect movement of a user's hand or other location that the watch body 1020 is placed or held.

In some embodiments, the peripherals interface 1061 includes an NFC component 1069, a global-position system (GPS) component 1070, a long-term evolution (LTE) component 1071, and/or a Wi-Fi and/or Bluetooth communication component 1072. In some embodiments, the peripherals interface 1061 includes one or more buttons 1073 (e.g., the peripheral buttons 1023 and 1027 in Figure 10A), which, when selected by a user, cause operations to be performed at the watch body 1020. In some embodiments, the peripherals interface 1061 includes one or more indicators, such as a light emitting diode (LED), to provide a user with visual indicators (e.g., message received, low battery, an active microphone, and/or a camera, etc.).

The watch body 1020 can include at least one display 1005 for displaying visual representations of information or data to the user, including user-interface elements and/or three-dimensional (3D) virtual objects. The display can also include a touch screen for inputting user inputs, such as touch gestures, swipe gestures, and the like. The watch body 1020 can include at least one speaker 1074 and at least one microphone 1075 for providing audio signals to the user and receiving audio input from the user. The user can provide user inputs through the microphone 1075 and can also receive audio output from the speaker 1074 as part of a haptic event provided by the haptic controller 1078. The watch body 1020 can include at least one camera 1025, including a front-facing camera 1025A and a rear-facing camera 1025B. The cameras 1025 can include ultra-wide-angle cameras, wide-angle cameras, fish-eye cameras, spherical cameras, telephoto cameras, a depth-sensing cameras, or other types of cameras.

The watch body computing system 1060 can include one or more haptic controllers 1078 and associated componentry (e.g., haptic devices 1076) for providing haptic events at the watch body 1020 (e.g., a vibrating sensation or audio output in response to an event at the watch body 1020). The haptic controllers 1078 can communicate with one or more haptic devices 1076, such as electroacoustic devices, including a speaker of the one or more speakers 1074 and/or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). The haptic controller 1078 can provide haptic events to respective haptic actuators that are capable of being sensed by a user of the watch body 1020. In some embodiments, the one or more haptic controllers 1078 can receive input signals from an application of the applications 1082.

In some embodiments, the computer system 1030 and/or the computer system 1060 can include memory 1080, which can be controlled by a memory controller of the one or more controllers 1077 and/or one or more processors 1079. In some embodiments, software components stored in the memory 1080 include one or more applications 1082 configured to perform operations at the watch body 1020. In some embodiments, the one or more applications 1082 include games, word processors, messaging applications, calling applications, web browsers, social media applications, media streaming applications, financial applications, calendars, clocks, etc. In some embodiments, software components stored in the memory 1080 include one or more communication interface modules 1083 as defined above. In some embodiments, software components stored in the memory 1080 include one or more graphics modules 1084 for rendering, encoding, and/or decoding audio and/or visual data; and one or more data management modules 1085 for collecting, organizing, and/or providing access to the data 1087 stored in memory 1080. In some embodiments, software components stored in the memory 1080 include a multi-modal input module 1086A, which is configured to perform the features described above in reference to Figures 1A-8. In some embodiments, one or more of applications 1082 and/or one or more modules can work in conjunction with one another to perform various tasks at the watch body 1020.

In some embodiments, software components stored in the memory 1080 can include one or more operating systems 1081 (e.g., a Linux-based operating system, an Android operating system, etc.). The memory 1080 can also include data 1087. The data 1087 can include profile data 1088A, sensor data 1089A, media content data 1090, application data 1091, and multi-modal input data 1092A, which stores data related to the performance of the features described above in reference to Figures 1A-8.

It should be appreciated that the watch body computing system 1060 is an example of a computing system within the watch body 1020, and that the watch body 1020 can have more or fewer components than shown in the watch body computing system 1060, combine two or more components, and/or have a different configuration and/or arrangement of the components. The various components shown in watch body computing system 1060 are implemented in hardware, software, firmware, or a combination thereof, including one or more signal processing and/or application-specific integrated circuits.

Turning to the wearable band computing system 1030, one or more components that can be included in the wearable band 1010 are shown. The wearable band computing system 1030 can include more or fewer components than shown in the watch body computing system 1060, combine two or more components, and/or have a different configuration and/or arrangement of some or all of the components. In some embodiments, all, or a substantial portion of the components of the wearable band computing system 1030 are included in a single integrated circuit. Alternatively, in some embodiments, components of the wearable band computing system 1030 are included in a plurality of integrated circuits that are communicatively coupled. As described above, in some embodiments, the wearable band computing system 1030 is configured to couple (e.g., via a wired or wireless connection) with the watch body computing system 1060, which allows the computing systems to share components, distribute tasks, and/or perform other operations described herein (individually or as a single device).

The wearable band computing system 1030, similar to the watch body computing system 1060, can include one or more processors 1049, one or more controllers 1047 (including one or more haptics controller 1048), a peripherals interface 1031 that can include one or more sensors 1013 and other peripheral devices, power source (e.g., a power system 1056), and memory (e.g., a memory 1050) that includes an operating system (e.g., an operating system 1051), data (e.g., data 1054 including profile data 1088B, sensor data 1089B, multi-modal input data 1092B, etc.), and one or more modules (e.g., a communications interface module 1052, a data management module 1053, a multi-modal input module 1086B, etc.).

The one or more sensors 1013 can be analogous to sensors 1021 of the computer system 1060 in light of the definitions above. For example, sensors 1013 can include one or more coupling sensors 1032, one or more SpO2 sensors 1034, one or more EMG sensors 1035, one or more capacitive sensors 1036, one or more heart rate sensors 1037, and one or more IMU sensors 1038.

The peripherals interface 1031 can also include other components analogous to those included in the peripheral interface 1061 of the computer system 1060, including an NFC component 1039, a GPS component 1040, an LTE component 1041, a Wi-Fi and/or Bluetooth communication component 1042, and/or one or more haptic devices 1076 as described above in reference to peripherals interface 1061. In some embodiments, the peripherals interface 1031 includes one or more buttons 1043, a display 1033, a speaker 1044, a microphone 1045, and a camera 1055. In some embodiments, the peripherals interface 1031 includes one or more indicators, such as an LED.

It should be appreciated that the wearable band computing system 1030 is an example of a computing system within the wearable band 1010, and that the wearable band 1010 can have more or fewer components than shown in the wearable band computing system 1030, combine two or more components, and/or have a different configuration and/or arrangement of the components. The various components shown in wearable band computing system 1030 can be implemented in one or a combination of hardware, software, and firmware, including one or more signal processing and/or application-specific integrated circuits.

The wrist-wearable device 1000 with respect to Figures 10A is an example of the wearable band 1010 and the watch body 1020 coupled, so the wrist-wearable device 1000 will be understood to include the components shown and described for the wearable band computing system 1030 and the watch body computing system 1060. In some embodiments, wrist-wearable device 1000 has a split architecture (e.g., a split mechanical architecture or a split electrical architecture) between the watch body 1020 and the wearable band 1010. In other words, all of the components shown in the wearable band computing system 1030 and the watch body computing system 1060 can be housed or otherwise disposed in a combined watch device 1000, or within individual components of the watch body 1020, wearable band 1010, and/or portions thereof (e.g., a coupling mechanism 1016 of the wearable band 1010).

The techniques described above can be used with any device for sensing neuromuscular signals, including the arm-wearable devices of Figure 10A-10B, but could also be used with other types of wearable devices for sensing neuromuscular signals (such as body-wearable or head-wearable devices that might have neuromuscular sensors closer to the brain or spinal column).

In some embodiments, a wrist-wearable device 1000 can be used in conjunction with a head-wearable device described below (e.g., AR device 1100 and VR device 1110) and/or an HIPD 1200, and the wrist-wearable device 1000 can also be configured to be used to allow a user to control aspect of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable device, attention will now be turned to example head-wearable devices, such AR device 1100 and VR device 1110.

### Example Head-Wearable Devices

Figures 11A-11C show example head-wearable devices, in accordance with some embodiments. Head-wearable devices can include, but are not limited to, AR devices 1110 (e.g., AR or smart eyewear devices, such as smart glasses, smart monocles, smart contacts, etc.), VR devices 1110 (e.g., VR headsets, head-mounted displays (HMD)s, etc.), or other ocularly coupled devices. The AR devices 1100 and the VR devices 1110 are instances of the head-wearable devices 110 described in reference to Figures 1A-8 herein, such that the head-wearable device 110 should be understood to have the features of the AR devices 1100 and/or the VR devices 1110, and vice versa. The AR devices 1100 and the VR devices 1110 can perform various functions and/or operations associated with navigating through user interfaces and selectively opening applications, as well as the functions and/or operations described above with reference to Figures 1A-8.

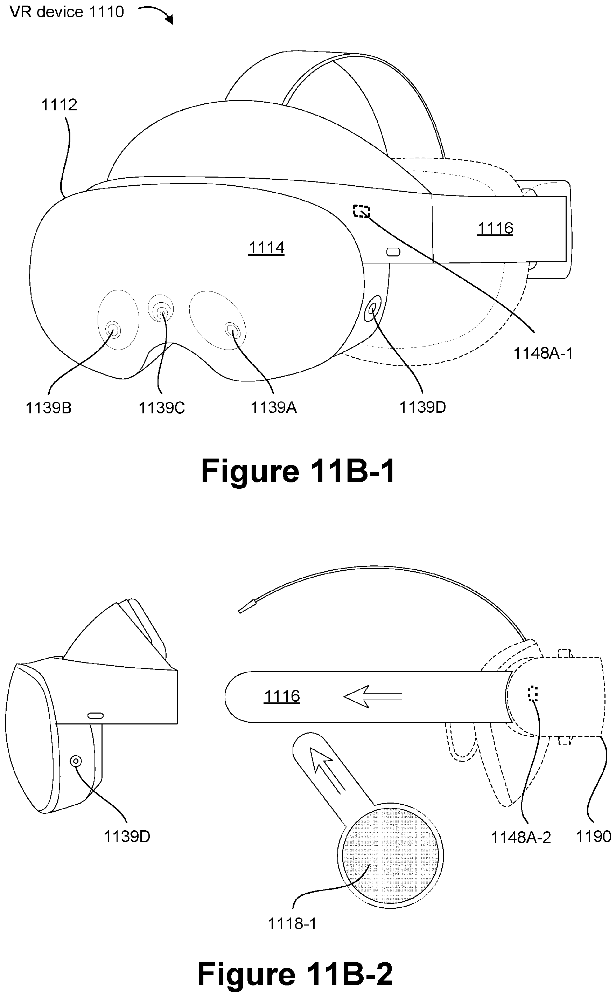

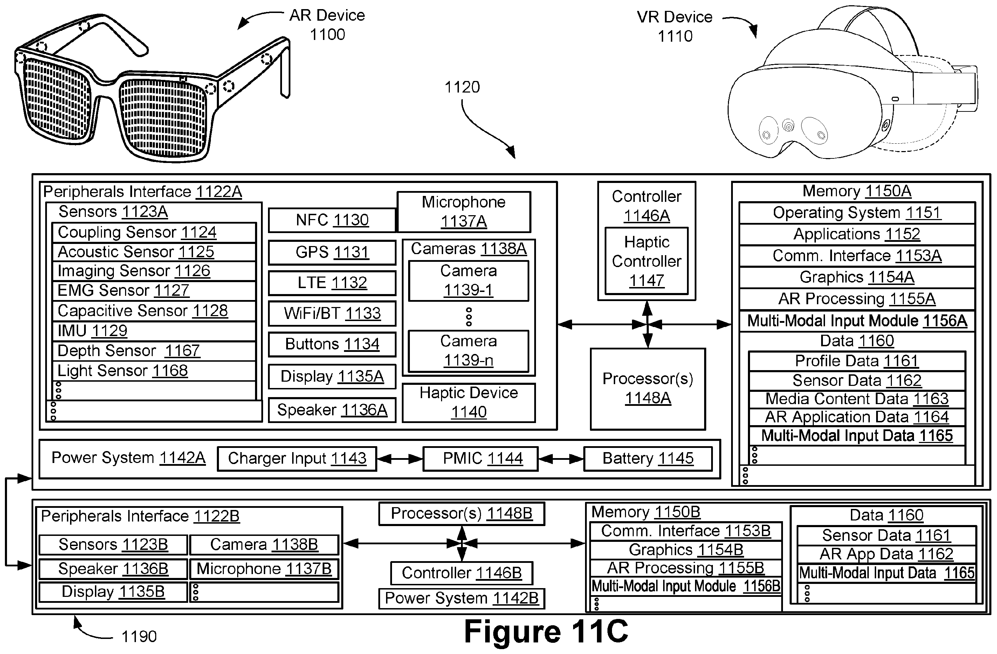

In some embodiments, an AR system (e.g., AR systems 900a-900c; Figures 9A-9C-2) includes an AR device 1100 (as shown in Figure 11A) and/or VR device 1110 (as shown in Figures 11B-1-B-2). In some embodiments, the AR device 1100 and the VR device 1110 can include one or more analogous components (e.g., components for presenting interactive artificial-reality environments, such as processors, memory, and/or presentation devices, including one or more displays and/or one or more waveguides), some of which are described in more detail with respect to Figure 11C. The head-wearable devices can use display projectors (e.g., display projector assemblies 1107A and 1107B) and/or waveguides for projecting representations of data to a user. Some embodiments of head-wearable devices do not include displays.

Figure 11A shows an example visual depiction of the AR device 1100 (e.g., which may also be described herein as augmented-reality glasses and/or smart glasses). The AR device 1100 can work in conjunction with additional electronic components that are not shown in Figures 11A, such as a wearable accessory device and/or an intermediary processing device, in electronic communication or otherwise configured to be used in conjunction with the AR device 1100. In some embodiments, the wearable accessory device and/or the intermediary processing device may be configured to couple with the AR device 1100 via a coupling mechanism in electronic communication with a coupling sensor 1124, where the coupling sensor 1124 can detect when an electronic device becomes physically or electronically coupled with the AR device 1100. In some embodiments, the AR device 1100 can be configured to couple to a housing (e.g., a portion of frame 1104 or temple arms 1105), which may include one or more additional coupling mechanisms configured to couple with additional accessory devices. The components shown in Figure 11A can be implemented in hardware, software, firmware, or a combination thereof, including one or more signal-processing components and/or application-specific integrated circuits (ASICs).

The AR device 1100 includes mechanical glasses components, including a frame 1104 configured to hold one or more lenses (e.g., one or both lenses 1106-1 and 1106-2). One of ordinary skill in the art will appreciate that the AR device 1100 can include additional mechanical components, such as hinges configured to allow portions of the frame 1104 of the AR device 1100 to be folded and unfolded, a bridge configured to span the gap between the lenses 1106-1 and 1106-2 and rest on the user's nose, nose pads configured to rest on the bridge of the nose and provide support for the AR device 1100, earpieces configured to rest on the user's ears and provide additional support for the AR device 1100, temple arms 1105 configured to extend from the hinges to the earpieces of the AR device 1100, and the like. One of ordinary skill in the art will further appreciate that some examples of the AR device 1100 can include none of the mechanical components described herein. For example, smart contact lenses configured to present artificial-reality to users may not include any components of the AR device 1100.

The lenses 1106-1 and 1106-2 can be individual displays or display devices (e.g., a waveguide for projected representations). The lenses 1106-1 and 1106-2 may act together or independently to present an image or series of images to a user. In some embodiments, the lenses 1106-1 and 1106-2 can operate in conjunction with one or more display projector assemblies 1107A and 1107B to present image data to a user. While the AR device 1100 includes two displays, embodiments of this disclosure may be implemented in AR devices with a single near-eye display (NED) or more than two NEDs.

The AR device 1100 includes electronic components, many of which will be described in more detail below with respect to Figure 11C. Some example electronic components are illustrated in Figure 11A, including sensors 1123-1, 1123-2, 1123-3,. 1123-4, 1123-5, and 1123-6, which can be distributed along a substantial portion of the frame 1104 of the AR device 1100. The different types of sensors are described below in reference to Figure 11C. The AR device 1100 also includes a left camera 1139A and a right camera 1139B, which are located on different sides of the frame 1104. And the eyewear device includes one or more processors 1148A and 1148B (e.g., an integral microprocessor, such as an ASIC) that is embedded into a portion of the frame 1104.

Figures 11B-1 and 11B-2 show an example visual depiction of the VR device 1110 (e.g., a head-mounted display (HMD) 1112, also referred to herein as an artificial-reality headset, a head-wearable device, a VR headset, etc.). The HMD 1112 includes a front body 1114 and a frame 1116 (e.g., a strap or band) shaped to fit around a user's head. In some embodiments, the front body 1114 and/or the frame 1116 includes one or more electronic elements for facilitating presentation of and/or interactions with an AR and/or VR system (e.g., displays, processors (e.g., processor 1148A-1), IMUs, tracking emitter or detectors, sensors, etc.). In some embodiments, the HMD 1112 includes output audio transducers (e.g., an audio transducer 1118-1), as shown in Figure 11B-2. In some embodiments, one or more components, such as the output audio transducer(s) 1118-1 and the frame 1116, can be configured to attach and detach (e.g., are detachably attachable) to the HMD 1112 (e.g., a portion or all of the frame 1116, and/or the output audio transducer 1118-1), as shown in Figure 11B-2. In some embodiments, coupling a detachable component to the HMD 1112 causes the detachable component to come into electronic communication with the HMD 1112. The VR device 1110 includes electronic components, many of which will be described in more detail below with respect to Figure 11C

Figure 11B-1 to 11B-2 also show that the VR device 1110 one or more cameras, such as the left camera 1139A and the right camera 1139B, which can be analogous to the left and right cameras on the frame 1104 of the AR device 1100. In some embodiments, the VR device 1110 includes one or more additional cameras (e.g., cameras 1139C and 1139D), which can be configured to augment image data obtained by the cameras 1139A and 1139B by providing more information. For example, the camera 1139C can be used to supply color information that is not discerned by cameras 1139A and 1139B. In some embodiments, one or more of the cameras 1139A to 1139D can include an optional IR cut filter configured to remove IR light from being received at the respective camera sensors.

The VR device 1110 can include a housing 1190 storing one or more components of the VR device 1110 and/or additional components of the VR device 1110. The housing 1190 can be a modular electronic device configured to couple with the VR device 1110 (or an AR device 1100) and supplement and/or extend the capabilities of the VR device 1110 (or an AR device 1100). For example, the housing 1190 can include additional sensors, cameras, power sources, processors (e.g., processor 1148A-2), etc. to improve and/or increase the functionality of the VR device 1110. Examples of the different components included in the housing 1190 are described below in reference to Figure 11C.

Alternatively or in addition, in some embodiments, the head-wearable device, such as the VR device 1110 and/or the AR device 1100), includes, or is communicatively coupled to, another external device (e.g., a paired device), such as an HIPD 1200 (discussed below in reference to Figures 12A and 12B) and/or an optional neckband. The optional neckband can couple to the head-wearable device via one or more connectors (e.g., wired or wireless connectors). The head-wearable device and the neckband can operate independently without any wired or wireless connection between them. In some embodiments, the components of the head-wearable device and the neckband are located on one or more additional peripheral devices paired with the head-wearable device, the neckband, or some combination thereof. Furthermore, the neckband is intended to represent any suitable type or form of paired device. Thus, the following discussion of neckband may also apply to various other paired devices, such as smart watches, smart phones, wrist bands, other wearable devices, hand-held controllers, tablet computers, or laptop computers.

In some situations, pairing external devices, such as an intermediary processing device (e.g., an HIPD device 1200, an optional neckband, and/or wearable accessory device) with the head-wearable devices (e.g., an AR device 1100 and/or VR device 1110) enables the head-wearable devices to achieve a similar form factor of a pair of glasses while still providing sufficient battery and computation power for expanded capabilities. Some, or all, of the battery power, computational resources, and/or additional features of the head-wearable devices can be provided by a paired device or shared between a paired device and the head-wearable devices, thus reducing the weight, heat profile, and form factor of the head-wearable devices overall while allowing the head-wearable devices to retain its desired functionality. For example, the intermediary processing device (e.g., the HIPD 1200) can allow components that would otherwise be included in a head-wearable device to be included in the intermediary processing device (and/or a wearable device or accessory device), thereby shifting a weight load from the user's head and neck to one or more other portions of the user's body. In some embodiments, the intermediary processing device has a larger surface area over which to diffuse and disperse heat to the ambient environment. Thus, the intermediary processing device can allow for greater battery and computation capacity than might otherwise have been possible on the head-wearable devices, standing alone. Because weight carried in the intermediary processing device can be less invasive to a user than weight carried in the head-wearable devices, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

In some embodiments, the intermediary processing device is communicatively coupled with the head-wearable device and/or to other devices. The other devices may provide certain functions (e.g., tracking, localizing, depth mapping, processing, storage, etc.) to the head-wearable device. In some embodiments, the intermediary processing device includes a controller and a power source. In some embodiments, sensors of the intermediary processing device are configured to sense additional data that can be shared with the head-wearable devices in an electronic format (analog or digital).

The controller of the intermediary processing device processes information generated by the sensors on the intermediary processing device and/or the head-wearable devices. The intermediary processing device, like an HIPD 1200, can process information generated by one or more sensors of its sensors and/or information provided by other communicatively coupled devices. For example, a head-wearable device can include an IMU, and the intermediary processing device (neckband and/or an HIPD 1200) can compute all inertial and spatial calculations from the IMUs located on the head-wearable device. Additional examples of processing performed by a communicatively coupled device, such as the HIPD 1200, are provided below in reference to Figures 12A and 12B.

Artificial-reality systems may include a variety of types of visual feedback mechanisms. For example, display devices in the AR devices 1100 and/or the VR devices 1110 may include one or more liquid-crystal displays (LCDs), light emitting diode (LED) displays, organic LED (OLED) displays, and/or any other suitable type of display screen. Artificial-reality systems may include a single display screen for both eyes or may provide a display screen for each eye, which may allow for additional flexibility for varifocal adjustments or for correcting a refractive error associated with the user's vision. Some artificial-reality systems also include optical subsystems having one or more lenses (e.g., conventional concave or convex lenses, Fresnel lenses, or adjustable liquid lenses) through which a user may view a display screen. In addition to or instead of using display screens, some artificial-reality systems include one or more projection systems. For example, display devices in the AR device 1100 and/or the VR device 1110 may include micro-LED projectors that project light (e.g., using a waveguide) into display devices, such as clear combiner lenses that allow ambient light to pass through. The display devices may refract the projected light toward a user's pupil and may enable a user to simultaneously view both artificial-reality content and the real world. Artificial-reality systems may also be configured with any other suitable type or form of image projection system. As noted, some AR systems may, instead of blending an artificial reality with actual reality, substantially replace one or more of a user's sensory perceptions of the real world with a virtual experience.

While the example head-wearable devices are respectively described herein as the AR device 1100 and the VR device 1110, either or both of the example head-wearable devices described herein can be configured to present fully-immersive VR scenes presented in substantially all of a user's field of view, additionally or alternatively to, subtler augmented-reality scenes that are presented within a portion, less than all, of the user's field of view.

In some embodiments, the AR device 1100 and/or the VR device 1110 can include haptic feedback systems. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback can be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices (e.g., wrist-wearable devices which may be incorporated into headwear, gloves, body suits, handheld controllers, environmental devices (e.g., chairs or floormats), and/or any other type of device or system, such as a wrist-wearable device 1000, an HIPD 1200, smart textile-based garment (not shown), etc.), and/or other devices described herein.

Figure 11C illustrates a computing system 1120 and an optional housing 1190, each of which show components that can be included in a head-wearable device (e.g., the AR device 1100 and/or the VR device 1110). In some embodiments, more or less components can be included in the optional housing 1190 depending on practical restraints of the respective head-wearable device being described. Additionally or alternatively, the optional housing 1190 can include additional components to expand and/or augment the functionality of a head-wearable device.

In some embodiments, the computing system 1120 and/or the optional housing 1190 can include one or more peripheral interfaces 1122A and 1122B, one or more power systems 1142A and 1142B (including charger input 1143, PMIC 1144, and battery 1145), one or more controllers 1146A 1146B (including one or more haptic controllers 1147), one or more processors 1148A and 1148B (as defined above, including any of the examples provided), and memory 1150A and 1150B, which can all be in electronic communication with each other. For example, the one or more processors 1148A and/or 1148B can be configured to execute instructions stored in the memory 1150A and/or 1150B, which can cause a controller of the one or more controllers 1146A and/or 1146B to cause operations to be performed at one or more peripheral devices of the peripherals interfaces 1122A and/or 1122B. In some embodiments, each operation described can occur based on electrical power provided by the power system 1142A and/or 1142B.

In some embodiments, the peripherals interface 1122A can include one or more devices configured to be part of the computing system 1120, many of which have been defined above and/or described with respect to wrist-wearable devices shown in Figures 10A and 10B. For example, the peripherals interface can include one or more sensors 1123A. Some example sensors include: one or more coupling sensors 1124, one or more acoustic sensors 1125, one or more imaging sensors 1126, one or more EMG sensors 1127, one or more capacitive sensors 1128, and/or one or more IMUs 1129. In some embodiments, the sensors 1123A further include depth sensors 1167, light sensors 1168 and/or any other types of sensors defined above or described with respect to any other embodiments discussed herein.

In some embodiments, the peripherals interface can include one or more additional peripheral devices, including one or more NFC devices 1130, one or more GPS devices 1131, one or more LTE devices 1132, one or more WiFi and/or Bluetooth devices 1133, one or more buttons 1134 (e.g., including buttons that are slidable or otherwise adjustable), one or more displays 1135A, one or more speakers 1136A, one or more microphones 1137A, one or more cameras 1138A (e.g., including the a first camera 1139-1 through nth camera 1139-n, which are analogous to the left camera 1139A and/or the right camera 1139B), one or more haptic devices 1140; and/or any other types of peripheral devices defined above or described with respect to any other embodiments discussed herein.

The head-wearable devices can include a variety of types of visual feedback mechanisms (e.g., presentation devices). For example, display devices in the AR device 1100 and/or the VR device 1110 can include one or more liquid-crystal displays (LCDs), light emitting diode (LED) displays, organic LED (OLED) displays, micro-LEDs, and/or any other suitable types of display screens. The head-wearable devices can include a single display screen (e.g., configured to be seen by both eyes), and/or can provide separate display screens for each eye, which can allow for additional flexibility for varifocal adjustments and/or for correcting a refractive error associated with the user's vision. Some embodiments of the head-wearable devices also include optical subsystems having one or more lenses (e.g., conventional concave or convex lenses, Fresnel lenses, or adjustable liquid lenses) through which a user can view a display screen. For example, respective displays 1135A can be coupled to each of the lenses 1106-1 and 1106-2 of the AR device 1100. The displays 1135A coupled to each of the lenses 1106-1 and 1106-2 can act together or independently to present an image or series of images to a user. In some embodiments, the AR device 1100 and/or the VR device 1110 includes a single display 1135A (e.g., a near-eye display) or more than two displays 1135A.

In some embodiments, a first set of one or more displays 1135A can be used to present an augmented-reality environment, and a second set of one or more display devices 1135A can be used to present a virtual-reality environment. In some embodiments, one or more waveguides are used in conjunction with presenting artificial-reality content to the user of the AR device 1100 and/or the VR device 1110 (e.g., as a means of delivering light from a display projector assembly and/or one or more displays 1135A to the user's eyes). In some embodiments, one or more waveguides are fully or partially integrated into the AR device 1100 and/or the VR device 1110. Additionally, or alternatively to display screens, some artificial-reality systems include one or more projection systems. For example, display devices in the AR device 1100 and/or the VR device 1110 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. The head-wearable devices can also be configured with any other suitable type or form of image projection system. In some embodiments, one or more waveguides are provided additionally or alternatively to the one or more display(s) 1135A.

In some embodiments of the head-wearable devices, ambient light and/or a real-world live view (e.g., a live feed of the surrounding environment that a user would normally see) can be passed through a display element of a respective head-wearable device presenting aspects of the AR system. In some embodiments, ambient light and/or the real-world live view can be passed through a portion less than all, of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable devices, and an amount of ambient light and/or the real-world live view (e.g., 15-50% of the ambient light and/or the real-world live view) can be passed through the user interface element, such that the user can distinguish at least a portion of the physical environment over which the user interface element is being displayed.

The head-wearable devices can include one or more external displays 1135A for presenting information to users. For example, an external display 1135A can be used to show a current battery level, network activity (e.g., connected, disconnected, etc.), current activity (e.g., playing a game, in a call, in a meeting, watching a movie, etc.), and/or other relevant information. In some embodiments, the external displays 1135A can be used to communicate with others. For example, a user of the head-wearable device can cause the external displays 1135A to present a do not disturb notification. The external displays 1135A can also be used by the user to share any information captured by the one or more components of the peripherals interface 1122A and/or generated by head-wearable device (e.g., during operation and/or performance of one or more applications).

The memory 1150A can include instructions and/or data executable by one or more processors 1148A (and/or processors 1148B of the housing 1190) and/or a memory controller of the one or more controllers 1146A (and/or controller 1146B of the housing 1190). The memory 1150A can include one or more operating systems 1151; one or more applications 1152; one or more communication interface modules 1153A; one or more graphics modules 1154A; one or more AR processing modules 1155A; multi-modal input module 1156A (analogous to the multi-modal input module 1086; Figure 10B); and/or any other types of modules or components defined above or described with respect to any other embodiments discussed herein.

The data 1160 stored in memory 1150A can be used in conjunction with one or more of the applications and/or programs discussed above. The data 1160 can include profile data 1161; sensor data 1162; media content data 1163; AR application data 1164; multi-modal input data 1165 (analogous to the multi-modal input data 1092; Figure 10B); and/or any other types of data defined above or described with respect to any other embodiments discussed herein.

In some embodiments, the controller 1146A of the head-wearable devices processes information generated by the sensors 1123A on the head-wearable devices and/or another component of the head-wearable devices and/or communicatively coupled with the head-wearable devices (e.g., components of the housing 1190, such as components of peripherals interface 1122B). For example, the controller 1146A can process information from the acoustic sensors 1125 and/or image sensors 1126. For each detected sound, the controller 1146A can perform a direction of arrival (DOA) estimation to estimate a direction from which the detected sound arrived at a head-wearable device. As one or more of the acoustic sensors 1125 detects sounds, the controller 1146A can populate an audio data set with the information (e.g., represented by sensor data 1162).

In some embodiments, a physical electronic connector can convey information between the head-wearable devices and another electronic device, and/or between one or more processors 1148A of the head-wearable devices and the controller 1146A. The information can be in the form of optical data, electrical data, wireless data, or any other transmittable data form. Moving the processing of information generated by the head-wearable devices to an intermediary processing device can reduce weight and heat in the eyewear device, making it more comfortable and safer for a user. In some embodiments, an optional accessory device (e.g., an electronic neckband or an HIPD 1200) is coupled to the head-wearable devices via one or more connectors. The connectors can be wired or wireless connectors and can include electrical and/or non-electrical (e.g., structural) components. In some embodiments, the head-wearable devices and the accessory device can operate independently without any wired or wireless connection between them.

The head-wearable devices can include various types of computer vision components and subsystems. For example, the AR device 1100 and/or the VR device 1110 can include one or more optical sensors such as two-dimensional (2D) or three-dimensional (3D) cameras, time-of-flight depth sensors, single-beam or sweeping laser rangefinders, 3D LiDAR sensors, and/or any other suitable type or form of optical sensor. A head-wearable device can process data from one or more of these sensors to identify a location of a user and/or aspects of the use's real-world physical surroundings, including the locations of real-world objects within the real-world physical surroundings. In some embodiments, the methods described herein are used to map the real world, to provide a user with context about real-world surroundings, and/or to generate interactable virtual objects (which can be replicas or digital twins of real-world objects that can be interacted with in AR environment), among a variety of other functions. For example, Figures 11B-1 and 11B-2 show the VR device 1110 having cameras 1139A-1139D, which can be used to provide depth information for creating a voxel field and a two-dimensional mesh to provide object information to the user to avoid collisions.

The optional housing 1190 can include analogous components to those describe above with respect to the computing system 1120. For example, the optional housing 1190 can include a respective peripherals interface 1122B including more or less components to those described above with respect to the peripherals interface 1122A. As described above, the components of the optional housing 1190 can be used augment and/or expand on the functionality of the head-wearable devices. For example, the optional housing 1190 can include respective sensors 1123B, speakers 1136B, displays 1135B, microphones 1137B, cameras 1138B, and/or other components to capture and/or present data. Similarly, the optional housing 1190 can include one or more processors 1148B, controllers 1146B, and/or memory 1150B (including respective communication interface modules 1153B; one or more graphics modules 1154B; one or more AR processing modules 1155B, etc.) that can be used individually and/or in conjunction with the components of the computing system 1120.

The techniques described above in Figures 11A-11C can be used with different head-wearable devices. In some embodiments, the head-wearable devices (e.g., the AR device 1100 and/or the VR device 1110) can be used in conjunction with one or more wearable device such as a wrist-wearable device 1000 (or components thereof), as well as an HIPD 1200. Having thus described example the head-wearable devices, attention will now be turned to example handheld intermediary processing devices, such as HIPD 1200.

### Example Handheld Intermediary Processing Devices

Figures 12A and 12B illustrate an example handheld intermediary processing device (HIPD) 1200, in accordance with some embodiments. The HIPD 1200 is an instance of the intermediary device described in reference to Figures 1A-8 herein, such that the HIPD 1200 should be understood to have the features described with respect to any intermediary device defined above or otherwise described herein, and vice versa. The HIPD 1200 can perform various functions and/or operations associated with navigating through user interfaces and selectively opening applications, as well as the functions and/or operations described above with reference to Figures 1A-8.

Figure 12A shows a top view 1205 and a side view 1225 of the HIPD 1200. The HIPD 1200 is configured to communicatively couple with one or more wearable devices (or other electronic devices) associated with a user. For example, the HIPD 1200 is configured to communicatively couple with a user's wrist-wearable device 1000 (or components thereof, such as the watch body 1020 and the wearable band 1010), AR device 1100, and/or VR device 1110. The HIPD 1200 can be configured to be held by a user (e.g., as a handheld controller), carried on the user's person (e.g., in their pocket, in their bag, etc.), placed in proximity of the user (e.g., placed on their desk while seated at their desk, on a charging dock, etc.), and/or placed at or within a predetermined distance from a wearable device or other electronic device (e.g., where, in some embodiments, the predetermined distance is the maximum distance (e.g., 10 meters) at which the HIPD 1200 can successfully be communicatively coupled with an electronic device, such as a wearable device).

The HIPD 1200 can perform various functions independently and/or in conjunction with one or more wearable devices (e.g., wrist-wearable device 1000, AR device 1100, VR device 1110, etc.). The HIPD 1200 is configured to increase and/or improve the functionality of communicatively coupled devices, such as the wearable devices. The HIPD 1200 is configured to perform one or more functions or operations associated with interacting with user interfaces and applications of communicatively coupled devices, interacting with an AR environment, interacting with VR environment, and/or operating as a human-machine interface controller, as well as functions and/or operations described above with reference to Figures 1A-8.

Additionally, as will be described in more detail below, functionality and/or operations of the HIPD 1200 can include, without limitation, task offloading and/or handoffs; thermals offloading and/or handoffs; 6 degrees of freedom (6DoF) raycasting and/or gaming (e.g., using imaging devices or cameras 1214A and 1214B, which can be used for simultaneous localization and mapping (SLAM) and/or with other image processing techniques); portable charging; messaging; image capturing via one or more imaging devices or cameras (e.g., cameras 1222A and 1222B); sensing user input (e.g., sensing a touch on a multi-touch input surface 1202); wireless communications and/or interlining (e.g., cellular, near field, Wi-Fi, personal area network, etc.); location determination; financial transactions; providing haptic feedback; alarms; notifications; biometric authentication; health monitoring; sleep monitoring; etc. The above-example functions can be executed independently in the HIPD 1200 and/or in communication between the HIPD 1200 and another wearable device described herein. In some embodiments, functions can be executed on the HIPD 1200 in conjunction with an AR environment. As the skilled artisan will appreciate upon reading the descriptions provided herein, the novel the HIPD 1200 described herein can be used with any type of suitable AR environment.

While the HIPD 1200 is communicatively coupled with a wearable device and/or other electronic device, the HIPD 1200 is configured to perform one or more operations initiated at the wearable device and/or the other electronic device. In particular, one or more operations of the wearable device and/or the other electronic device can be offloaded to the HIPD 1200 to be performed. The HIPD 1200 performs the one or more operations of the wearable device and/or the other electronic device and provides to data corresponded to the completed operations to the wearable device and/or the other electronic device. For example, a user can initiate a video stream using AR device 1100 and back-end tasks associated with performing the video stream (e.g., video rendering) can be offloaded to the HIPD 1200, which the HIPD 1200 performs and provides corresponding data to the AR device 1100 to perform remaining front-end tasks associated with the video stream (e.g., presenting the rendered video data via a display of the AR device 1100). In this way, the HIPD 1200, which has more computational resources and greater thermal headroom than a wearable device, can perform computationally intensive tasks for the wearable device improving performance of an operation performed by the wearable device.

The HIPD 1200 includes a multi-touch input surface 1202 on a first side (e.g., a front surface) that is configured to detect one or more user inputs. In particular, the multi-touch input surface 1202 can detect single tap inputs, multi-tap inputs, swipe gestures and/or inputs, force-based and/or pressure-based touch inputs, held taps, and the like. The multi-touch input surface 1202 is configured to detect capacitive touch inputs and/or force (and/or pressure) touch inputs. The multi-touch input surface 1202 includes a first touch-input surface 1204 defined by a surface depression, and a second touch-input surface 1206 defined by a substantially planar portion. The first touch-input surface 1204 can be disposed adjacent to the second touch-input surface 1206. In some embodiments, the first touch-input surface 1204 and the second touch-input surface 1206 can be different dimensions, shapes, and/or cover different portions of the multi-touch input surface 1202. For example, the first touch-input surface 1204 can be substantially circular and the second touch-input surface 1206 is substantially rectangular. In some embodiments, the surface depression of the multi-touch input surface 1202 is configured to guide user handling of the HIPD 1200. In particular, the surface depression is configured such that the user holds the HIPD 1200 upright when held in a single hand (e.g., such that the using imaging devices or cameras 1214A and 1214B are pointed toward a ceiling or the sky). Additionally, the surface depression is configured such that the user's thumb rests within the first touch-input surface 1204.

In some embodiments, the different touch-input surfaces include a plurality of touch-input zones. For example, the second touch-input surface 1206 includes at least a first touch-input zone 1208 within a second touch-input zone 1206 and a third touch-input zone 1210 within the first touch-input zone 1208. In some embodiments, one or more of the touch-input zones are optional and/or user defined (e.g., a user can specific a touch-input zone based on their preferences). In some embodiments, each touch-input surface and/or touch-input zone is associated with a predetermined set of commands. For example, a user input detected within the first touch-input zone 1208 causes the HIPD 1200 to perform a first command and a user input detected within the second touch-input zone 1206 causes the HIPD 1200 to perform a second command, distinct from the first. In some embodiments, different touch-input surfaces and/or touch-input zones are configured to detect one or more types of user inputs. The different touch-input surfaces and/or touch-input zones can be configured to detect the same or distinct types of user inputs. For example, the first touch-input zone 1208 can be configured to detect force touch inputs (e.g., a magnitude at which the user presses down) and capacitive touch inputs, and the second touch-input zone 1206 can be configured to detect capacitive touch inputs.

The HIPD 1200 includes one or more sensors 1251 for sensing data used in the performance of one or more operations and/or functions. For example, the HIPD 1200 can include an IMU that is used in conjunction with cameras 1214 for 3-dimensional object manipulation (e.g., enlarging, moving, destroying, etc. an object) in an AR or VR environment. Non-limiting examples of the sensors 1251 included in the HIPD 1200 include a light sensor, a magnetometer, a depth sensor, a pressure sensor, and a force sensor. Additional examples of the sensors 1251 are provided below in reference to Figure 12B.

The HIPD 1200 can include one or more light indicators 1212 to provide one or more notifications to the user. In some embodiments, the light indicators are LEDs or other types of illumination devices. The light indicators 1212 can operate as a privacy light to notify the user and/or others near the user that an imaging device and/or microphone are active. In some embodiments, a light indicator is positioned adjacent to one or more touch-input surfaces. For example, a light indicator can be positioned around the first touch-input surface 1204. The light indicators can be illuminated in different colors and/or patterns to provide the user with one or more notifications and/or information about the device. For example, a light indicator positioned around the first touch-input surface 1204 can flash when the user receives a notification (e.g., a message), change red when the HIPD 1200 is out of power, operate as a progress bar (e.g., a light ring that is closed when a task is completed (e.g., 0% to 100%)), operates as a volume indicator, etc.).

In some embodiments, the HIPD 1200 includes one or more additional sensors on another surface. For example, as shown Figure 12A, HIPD 1200 includes a set of one or more sensors (e.g., sensor set 1220) on an edge of the HIPD 1200. The sensor set 1220, when positioned on an edge of the of the HIPD 1200, can be pe positioned at a predetermined tilt angle (e.g., 26 degrees), which allows the sensor set 1220 to be angled toward the user when placed on a desk or other flat surface. Alternatively, in some embodiments, the sensor set 1220 is positioned on a surface opposite the multi-touch input surface 1202 (e.g., a back surface). The one or more sensors of the sensor set 1220 are discussed in detail below.

The side view 1225 of the of the HIPD 1200 shows the sensor set 1220 and camera 1214B. The sensor set 1220 includes one or more cameras 1222A and 1222B, a depth projector 1224, an ambient light sensor 1228, and a depth receiver 1230. In some embodiments, the sensor set 1220 includes a light indicator 1226. The light indicator 1226 can operate as a privacy indicator to let the user and/or those around them know that a camera and/or microphone is active. The sensor set 1220 is configured to capture a user's facial expression such that the user can puppet a custom avatar (e.g., showing emotions, such as smiles, laughter, etc., on the avatar or a digital representation of the user). The sensor set 1220 can be configured as a side stereo RGB system, a rear indirect Time-of-Flight (iToF) system, or a rear stereo RGB system. As the skilled artisan will appreciate upon reading the descriptions provided herein, the novel HIPD 1200 described herein can use different sensor set 1220 configurations and/or sensor set 1220 placement.

In some embodiments, the HIPD 1200 includes one or more haptic devices 1271 (Figure 12B; e.g., a vibratory haptic actuator) that are configured to provide haptic feedback (e.g., kinesthetic sensation). The sensors 1251, and/or the haptic devices 1271 can be configured to operate in conjunction with multiple applications and/or communicatively coupled devices including, without limitation, a wearable devices, health monitoring applications, social media applications, game applications, and artificial reality applications (e.g., the applications associated with artificial reality).

The HIPD 1200 is configured to operate without a display. However, in optional embodiments, the HIPD 1200 can include a display 1268 (Figure 12B). The HIPD 1200 can also income one or more optional peripheral buttons 1267 (Figure 12B). For example, the peripheral buttons 1267 can be used to turn on or turn off the HIPD 1200. Further, the HIPD 1200 housing can be formed of polymers and/or elastomer elastomers. The HIPD 1200 can be configured to have a non-slip surface to allow the HIPD 1200 to be placed on a surface without requiring a user to watch over the HIPD 1200. In other words, the HIPD 1200 is designed such that it would not easily slide off a surfaces. In some embodiments, the HIPD 1200 include one or magnets to couple the HIPD 1200 to another surface. This allows the user to mount the HIPD 1200 to different surfaces and provide the user with greater flexibility in use of the HIPD 1200.

As described above, the HIPD 1200 can distribute and/or provide instructions for performing the one or more tasks at the HIPD 1200 and/or a communicatively coupled device. For example, the HIPD 1200 can identify one or more back-end tasks to be performed by the HIPD 1200 and one or more front-end tasks to be performed by a communicatively coupled device. While the HIPD 1200 is configured to offload and/or handoff tasks of a communicatively coupled device, the HIPD 1200 can perform both back-end and front-end tasks (e.g., via one or more processors, such as CPU 1277; Figure 12B). The HIPD 1200 can, without limitation, can be used to perform augmenting calling (e.g., receiving and/or sending 3D or 2.5D live volumetric calls, live digital human representation calls, and/or avatar calls), discreet messaging, 6DoF portrait/landscape gaming, AR/VR object manipulation, AR/VR content display (e.g., presenting content via a virtual display), and/or other AR/VR interactions. The HIPD 1200 can perform the above operations alone or in conjunction with a wearable device (or other communicatively coupled electronic device).

Figure 12B shows block diagrams of a computing system 1240 of the HIPD 1200, in accordance with some embodiments. The HIPD 1200, described in detail above, can include one or more components shown in HIPD computing system 1240. The HIPD 1200 will be understood to include the components shown and described below for the HIPD computing system 1240. In some embodiments, all, or a substantial portion of the components of the HIPD computing system 1240 are included in a single integrated circuit. Alternatively, in some embodiments, components of the HIPD computing system 1240 are included in a plurality of integrated circuits that are communicatively coupled.

The HIPD computing system 1240 can include a processor (e.g., a CPU 1277, a GPU, and/or a CPU with integrated graphics), a controller 1275, a peripherals interface 1250 that includes one or more sensors 1251 and other peripheral devices, a power source (e.g., a power system 1295), and memory (e.g., a memory 1278) that includes an operating system (e.g., an operating system 1279), data (e.g., data 1288), one or more applications (e.g., applications 1280), and one or more modules (e.g., a communications interface module 1281, a graphics module 1282, a task and processing management module 1283, an interoperability module 1284, an AR processing module 1285, a data management module 1286, a multi-modal input module 1287 (analogous to the multi-modal input module 1086; Figure 10B), etc.). The HIPD computing system 1240 further includes a power system 1295 that includes a charger input and output 1296, a PMIC 1297, and a battery 1298, all of which are defined above.

In some embodiments, the peripherals interface 1250 can include one or more sensors 1251. The sensors 1251 can include analogous sensors to those described above in reference to Figures 10B. For example, the sensors 1251 can include imaging sensors 1254, (optional) EMG sensors 1256, IMUs 1258, and capacitive sensors 1260. In some embodiments, the sensors 1251 can include one or more pressure sensor 1252 for sensing pressure data, an altimeter 1253 for sensing an altitude of the HIPD 1200, a magnetometer 1255 for sensing a magnetic field, a depth sensor 1257 (or a time-of flight sensor) for determining a difference between the camera and the subject of an image, a position sensor 1259 (e.g., a flexible position sensor) for sensing a relative displacement or position change of a portion of the HIPD 1200, a force sensor 1261 for sensing a force applied to a portion of the HIPD 1200, and a light sensor 1262 (e.g., an ambient light sensor) for detecting an amount of lighting. The sensors 1251 can include one or more sensors not shown in Figure 12B.

Analogous to the peripherals described above in reference to Figures 10B, the peripherals interface 1250 can also include an NFC component 1263, a GPS component 1264, an LTE component 1265, a Wi-Fi and/or Bluetooth communication component 1266, a speaker 1269, a haptic device 1271, and a microphone 1273. As described above in reference to Figure 12A, the HIPD 1200 can optionally include a display 1268 and/or one or more buttons 1267. The peripherals interface 1250 can further include one or more cameras 1270, touch surfaces 1272, and/or one or more light emitters 1274. The multi-touch input surface 1202 described above in reference to Figure 12A is an example of touch surface 1272. The light emitters 1274 can be one or more LEDs, lasers, etc. and can be used to project or present information to a user. For example, the light emitters 1274 can include light indicators 1212 and 1226 described above in reference to Figure 12A. The cameras 1270 (e.g., cameras 1214A, 1214B, and 1222 described above in Figure 12A) can include one or more wide angle cameras, fish-eye cameras, spherical cameras, compound eye cameras (e.g., stereo and multi cameras), depth cameras, RGB cameras, ToF cameras, RGB-D cameras (depth and ToF cameras), and/or other available cameras. Cameras 1270 can be used for SLAM; 6 DoF ray casting, gaming, object manipulation, and/or other rendering; facial recognition and facial expression recognition, etc.

Similar to the watch body computing system 1060 and the watch band computing system 1030 described above in reference to Figure 10B, the HIPD computing system 1240 can include one or more haptic controllers 1276 and associated componentry (e.g., haptic devices 1271) for providing haptic events at the HIPD 1200.

Memory 1278 can include high-speed random-access memory and/or non-volatile memory, such as one or more magnetic disk storage devices, flash memory devices, or other non-volatile solid-state memory devices. Access to the memory 1278 by other components of the HIPD 1200, such as the one or more processors and the peripherals interface 1250, can be controlled by a memory controller of the controllers 1275.

In some embodiments, software components stored in the memory 1278 include one or more operating systems 1279, one or more applications 1280, one or more communication interface modules 1281, one or more graphics modules 1282, one or more data management modules 1285, which are analogous to the software components described above in reference to Figure 10B. The software components stored in the memory 1278 can also include a multi-modal input module 1287, which is configured to perform the features described above in reference to Figures 1A-8.

In some embodiments, software components stored in the memory 1278 include a task and processing management module 1283 for identifying one or more front-end and back-end tasks associated with an operation performed by the user, performing one or more front-end and/or back-end tasks, and/or providing instructions to one or more communicatively coupled devices that cause performance of the one or more front-end and/or back-end tasks. In some embodiments, the task and processing management module 1283 uses data 1288 (e.g., device data 1290) to distribute the one or more front-end and/or back-end tasks based on communicatively coupled devices' computing resources, available power, thermal headroom, ongoing operations, and/or other factors. For example, the task and processing management module 1283 can cause the performance of one or more back-end tasks (of an operation performed at communicatively coupled AR device 1100) at the HIPD 1200 in accordance with a determination that the operation is utilizing a predetermined amount (e.g., at least 70%) of computing resources available at the AR device 1100.

In some embodiments, software components stored in the memory 1278 include an interoperability module 1284 for exchanging and utilizing information received and/or provided to distinct communicatively coupled devices. The interoperability module 1284 allows for different systems, devices, and/or applications to connect and communicate in a coordinated way without user input. In some embodiments, software components stored in the memory 1278 include an AR module 1285 that is configured to process signals based at least on sensor data for use in an AR and/or VR environment. For example, the AR processing module 1285 can be used for 3D object manipulation, gesture recognition, facial and facial expression, recognition, etc.

The memory 1278 can also include data 1288, including structured data. In some embodiments, the data 1288 can include profile data 1289, device data 1289 (including device data of one or more devices communicatively coupled with the HIPD 1200, such as device type, hardware, software, configurations, etc.), sensor data 1291, media content data 1292, application data 1293, and multi-modal input data 1294 (analogous to the multi-modal input data 1092; Figure 10B).

It should be appreciated that the HIPD computing system 1240 is an example of a computing system within the HIPD 1200, and that the HIPD 1200 can have more or fewer components than shown in the HIPD computing system 1240, combine two or more components, and/or have a different configuration and/or arrangement of the components. The various components shown in HIPD computing system 1240 are implemented in hardware, software, firmware, or a combination thereof, including one or more signal processing and/or application-specific integrated circuits.

The techniques described above in Figure 12A-12B can be used with any device used as a human-machine interface controller. In some embodiments, an HIPD 1200 can be used in conjunction with one or more wearable device such as a head-wearable device (e.g., AR device 1100 and VR device 1110) and/or a wrist-wearable device 1000 (or components thereof).

### Example Aspects

(A1) In accordance with some embodiments, a method of coordinating inputs between wearable devices is disclosed. The method includes detecting, by a wrist-wearable device worn by a user, an in-air gesture performed by the user. The wrist-wearable device is communicatively coupled with a head-wearable device. The method includes, in response to a determination that the in-air gesture is associated with a control command to be performed at the head-wearable device, (i) providing instructions to the head-wearable device to perform at least one operation, and (ii) initiating an assistant associated with the head-wearable device and the wrist wearable device. The method further includes, in response to a user voice input, determining, based on the control command, an additional operation to be performed at the head-wearable device. The method also includes providing instructions to the head-wearable-device that cause the head-wearable device to perform the additional operation, and providing an indication via the wrist-wearable device and/or the head-wearable device that the additional operation was performed.

(A2) In some embodiments of A1, the control command includes instructions for capturing image data via the head-wearable device.

(A3) In some embodiments of any of A1 - A2, the control command includes instructions for initiating an application on the head-wearable device and/or the wrist-wearable device.

(A4) In some embodiments of any of A1 - A3, the control command includes instructions for activating the head-wearable device.

(A5) In some embodiments of any of A1 - A4, the control command includes instructions for performing one or more operations on a user interface presented at the head-wearable device.

(A6) In some embodiments of any of A1 - A5, the control command includes instructions for causing the head-wearable device to operate in a first mode, and the method further includes detecting, by the wrist-wearable device worn by the user, another in-air gesture performed by the user; and in response to a determination that the other in-air gesture is associated with another control command to be performed at the head-wearable device, providing instructions to the head-wearable device to perform at least one second operation.

(A7) In some embodiments of any of A1 - A6, the in-air gesture is a contact between at least two phalanges of the user.

(A8) In some embodiments of A7, the contact is a single tap.

(A9) In some embodiments of A7, the contact is a double tap.

(A10) In some embodiments of A7, the contact is a long tap.

(A11) In some embodiments of A7, the contact is one of a plurality of force-based contacts, each force-based contact of the plurality of force-based contacts associated with a respective force threshold.

(A12) In some embodiments of any of A1 - A6, the in-air gesture is a slide gesture performed by a phalange of the user moving across a portion of the user's hand.

(A13) In some embodiments of any of A1 - A12, the respective hand gestures are detected based on sensor data captured by the wrist-wearable device.

(B1) In accordance with some embodiments, a method of coordinating inputs between wearable devices is disclosed. The method includes detecting, by a head-wearable device worn by a user, a first touchless input gesture. The head-wearable device is communicatively coupled with at least a wrist-wearable device worn by the user. The method also includes, in response to a determination that the first touchless input gesture is associated with a first control command to be performed at the head-wearable device and/or the wrist-wearable device, causing the head-wearable device and/or the wrist-wearable device to perform the first control command. The method also includes detecting, by the wrist-wearable device, a second touchless input gesture and, in response to a determination that the second touchless input gesture is associated with a second control command to be performed at a respective wearable device performing the first control command, causing the respective wearable device to perform the second control command.

(B2) In some embodiments of B1, the first touchless input is a voice input and the second touchless input is an in-air gesture.

(B3) In some embodiments of any of B1 - B2, the first control command includes instructions for initiating an application on the head-wearable device and/or the wrist-wearable device, and the second control command includes instructions for performing one or more operations within application.

(B4) In some embodiments of B3, the application is an image capturing application and the one or more operations performed within the application include capturing image data.

(B5) In some embodiments of B3, the application is a media content streaming application and the one or more operations performed within the application include selection a media content item.

(B6) In some embodiments of any of B1 - B5, the first control command includes instructions for activating the head-wearable device and/or the wrist-wearable device, and the second control command includes instructions for performing one or more operations on the respective wearable device.

(B7) In some embodiments of any of B1 - B5, the first control command includes instructions for initiating an assistant on the head-wearable device and/or the wrist-wearable device, and the second control command includes instructions for interacting with the assistant operating on the respective wearable device.

(B8) In some embodiments of B7, initiating the assistant includes activating a microphone to receive one or more voice inputs.

(B9) In some embodiments of any of B7 - B8, initiating the assistant includes presenting an indicator via the head-wearable device and/or the wrist-wearable device to notify the user that the assistant is active.

(C1) In accordance with some embodiments, a method of coordinating inputs between wearable devices is disclosed. The method includes detecting, by a wrist-wearable device worn by a user, an in-air gesture performed by the user. The wrist-wearable device is communicatively coupled with one or more electronic devices. The method includes, in response to a determination that the in-air gesture is associated with a control command, (i) determining an electronic device of the one or more electronic devices to perform the control command, and (ii) providing instructions to the electronic device selected to perform the control command. The instructions cause the electronic device to perform the control command. The method further includes providing an indication via the wrist-wearable device and/or the one or more electronic devices that the control command was performed.

(C2) In some embodiments of C1, the control command includes instructions for capturing image data via an electronic device.

(C3) In some embodiments of any of C1 - C2, the control command includes instructions for initiating an application on an electronic device.

(C4) In some embodiments of any of C1 - C3, the control command includes instructions for activating an electronic device.

(C5) In some embodiments of any of C1 - C4, the control command includes instructions for performing one or more operations on a user interface presented at an electronic device.

(C6) In some embodiments of any of C1 - C5, the control command includes instructions for causing an electronic device to operate in a first mode, and the method further includes detecting, by the wrist-wearable device worn by the user, another in-air gesture performed by the user; and in response to a determination that the other in-air gesture is associated with another control command to be performed by the electronic device, providing instructions to the electronic device to perform the other control command. The instructions cause the electronic device to perform an operation while the electronic device is in the first mode.

(C7) In some embodiments of any of C1 - C6, the in-air gesture is a contact between at least two phalanges of the user.

(C8) In some embodiments of C7, the contact is a single tap.

(C9) In some embodiments of C7, the contact is a double tap.

(C10) In some embodiments of C7, the contact is a long tap.

(C11) In some embodiments of C7, the contact is one of a plurality of force-based contacts, each force-based contact of the plurality of force-based contacts associated with a respective force threshold.

(C12) In some embodiments of any of C1 - C6, the in-air gesture is a slide gesture performed by a phalange of the user moving across a portion of the user's hand.

(C13) In some embodiments of any of C1 - C12, the electronic device is a head-wearable device, smartphone, computer, or the wrist-wearable device.

(C14) In some embodiments of any of C1 - C13, the respective hand gestures are detected based on sensor data captured by the wrist-wearable device.

(D1) In accordance with some embodiments, a method of coordinating inputs between wearable devices is disclosed. The method includes detecting, by a first wearable device worn by a user, a first touchless input gesture. The first wearable device is communicatively coupled with at least a second wearable device worn by the user. The method includes, in response to a determination that the first touchless input gesture is associated with a first control command to be performed at the first wearable device and/or the second wearable device, causing the first wearable device and/or the second wearable device to perform the first control command. The method also includes detecting, by the second wearable device, a second touchless input gesture; and in response to a determination that the second touchless input gesture is associated with a second control command to be performed at a respective wearable device performing the first control command, causing the respective wearable device to perform the second control command.

(D2) In some embodiments of D1, the first touchless input is a voice input and the second touchless input is an in-air gesture.

(D3) In some embodiments of any of D1 - D2, the first wearable device is a head-wearable device and the second wearable device is a wrist-wearable device.

(D4) In some embodiments of any of D1 - D3, the first control command includes instructions for initiating an application on the first wearable device and/or the second wearable device, and the second control command includes instructions for performing one or more operations within application.

(D5) In some embodiments of D4, the application is an image capturing application and the one or more operations performed within the application include capturing image data.

(D6) In some embodiments of any of D4, the application is a media content streaming application and the one or more operations performed within the application include selection a media content item.

(D7) In some embodiments of any of D1 - D6, the first control command includes instructions for activating the first wearable device and/or the second wearable device, and the second control command includes instructions for performing one or more operations on the respective wearable device.

(D8) In some embodiments of D1-D6, the first control command includes instructions for initiating an assistant on the first wearable device and/or the second wearable device, and the second control command includes instructions for interacting with the assistant operating on the respective wearable device.

(D9) In some embodiments of any of D8, initiating the assistant includes activating a microphone to receive one or more voice inputs.

(D10) In some embodiments of any of D8 - D9, initiating the assistant includes presenting an indicator via the first wearable device and/or the second wearable device to notify the user that the assistant is active.

(E1) In accordance with some embodiments, a wrist-wearable device used in conjunction with performance of the method of any one of A1 - D10.

(F1) In accordance with some embodiments, a non-transitory, computer-readable storage medium including instructions that, when executed by a wrist-wearable device, cause the wrist-wearable device to perform or cause performance of the method of any one of A1 - D10.

(G1) In accordance with some embodiments, a system including a head-worn wearable device and a wrist-wearable device, the system configured to perform the method of any one of A1 - D10 using the head-worn wearable device and/or the wrist-wearable device.

(H1) In accordance with some embodiments, a non-transitory, computer-readable storage medium including instructions that, when executed by a head-worn wearable device, cause the head-worn wearable device to perform or cause performance of the method of any one of A1 - D10.

(11) In another aspect, a means on a wrist-wearable device, head-wearable device, and/or intermediary device for performing or causing performance of the method of any of A1 -D10.

(J1) In accordance with some embodiments, a non-transitory, computer-readable storage medium including instructions that, when executed by an intermediary device, cause the intermediary device to perform or cause performance of the method of any one of A1 - D10.

(K1) In accordance with some embodiments, a head-wearable device used in conjunction with performance of the method of any one of A1 - D10.

(L1) In accordance with some embodiments, an intermediary device used in conjunction with performance of the method of any one of A1 - D10.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt-in or opt-out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A non-transitory, computer-readable storage medium including instructions that, when executed by a wrist-wearable device worn by a user and communicatively coupled with a head-wearable device, cause the wrist-wearable device to:
detect an in-air gesture performed by the user;
in response to a determination that the in-air gesture is associated with a control command to be performed at a head-wearable device:
provide instructions to the head-wearable device to perform at least one operation, and
cause the initiation of an assistant associated with the head-wearable device and the wrist wearable device, wherein the assistant is initiated at the wrist-wearable device and/or at the head-wearable device, and wherein the assistant is configured to:
present an assistant user interface, and
detect user voice inputs;
in response to a user voice input of the user voice inputs detected by the assistant, determine at the wrist-wearable device, based on the control command, an additional operation to be performed at the head-wearable device;
provide instructions to the head-wearable-device that cause the head-wearable device to perform the additional operation; and
cause the assistant to provide an indication via the wrist-wearable device and/or the head-wearable device that the additional operation was performed.

2. The non-transitory, computer-readable storage medium of claim 1, wherein the additional operation includes instructions for capturing image data via the head-wearable device.

3. The non-transitory, computer-readable storage medium of claim 1 or claim 2, wherein the control command includes instructions for initiating an application on one or more of the head-wearable device and the wrist-wearable device.

4. The non-transitory, computer-readable storage medium of any preceding claim, wherein the control command includes instructions for activating the head-wearable device.

5. The non-transitory, computer-readable storage medium of any preceding claim, wherein the control command includes instructions for performing one or more operations on a user interface presented at the head-wearable device.

6. The non-transitory, computer-readable storage medium of any preceding claim, wherein the control command includes instructions for causing the head-wearable device to operate in a first mode, and the instructions, when executed by the wrist-wearable device, further cause the wrist-wearable device to:
detect, by the wrist-wearable device worn by the user, another in-air gesture performed by the user; and
in response to a determination that the other in-air gesture is associated with another control command to be performed at the head-wearable device, provide instructions to the head-wearable device to perform at least one second operation.

7. The non-transitory, computer-readable storage medium of any preceding claim, wherein the in-air gesture is a contact between at least two phalanges of the user; and
wherein the contact is:
a single tap, a double tap, a long tap, or
one of a plurality of force-based contacts, each force-based contact of the plurality of force-based contacts associated with a respective force threshold.

8. The non-transitory, computer-readable storage medium of any preceding claim, wherein the in-air gesture is a slide gesture performed by a phalange of the user moving across a portion of the user's hand.

9. The non-transitory, computer-readable storage medium of any preceding claim, wherein the additional operation to be performed at the head-wearable device is determined by the assistant.

10. The non-transitory, computer-readable storage medium of any preceding claim, wherein the instructions, when executed by the wrist-wearable device, further cause the wrist-wearable device to:
detect, using image data captured by the head-wearable device, yet another in-air gesture performed by the user; and
in response to a determination that the yet other in-air gesture is associated with yet another control command to be performed at the head-wearable device, provide instructions to the head-wearable device to perform at least one third operation.

11. A method, comprising:
detecting, by a wrist-wearable device worn by a user, an in-air gesture performed by the user, wherein the wrist-wearable device is communicatively coupled with a head-wearable device;
in response to a determination that the in-air gesture is associated with a control command to be performed at the head-wearable device:
providing instructions to the head-wearable device to perform at least one operation, and
causing the initiation of an assistant associated with the head-wearable device and the wrist wearable device, wherein the assistant is initiated at the wrist-wearable device and/or at the head-wearable device, and wherein the assistant:
presents an assistant user interface, and
detects user voice inputs;
in response to a user voice input of the user voice inputs detected by the assistant, determining at the wrist-wearable device, based on the control command, an additional operation to be performed at the head-wearable device;
the wrist-wearable device providing instructions to the head-wearable-device that cause the head-wearable device to perform the additional operation;
causing the assistant to provide an indication via the wrist-wearable device and/or the head-wearable device that the additional operation was performed.

12. The method of claim 11, wherein the control command includes instructions for:
capturing image data via the head-wearable device,
initiating an application on one or more of the head-wearable device and the wrist-wearable device, and/or
activating the head-wearable device.

13. A wrist-wearable device, comprising:
one or more sensors;
one or more processors; and
memory including instructions that, when executed by the one or more processors, cause the wrist-wearable device to:
detect an in-air gesture performed by the user;
in response to a determination that the in-air gesture is associated with a control command to be performed at a head-wearable device:
provide instructions to the head-wearable device to perform at least one operation, and
cause the initiation of an assistant associated with the head-wearable device and the wrist wearable device, wherein the assistant is initiated at the wrist-wearable device and/or at the head-wearable device, and wherein the assistant is configured to:
present an assistant user interface, and
detect user voice inputs;
in response to a user voice input of the user voice inputs detected by the assistant, determine at the wrist-wearable device, based on the control command, an additional operation to be performed at the head-wearable device;
provide instructions to the head-wearable-device that cause the head-wearable device to perform the additional operation; and
cause the assistant to provide an indication via the wrist-wearable device and/or the head-wearable device that the additional operation was performed.

14. The wrist-wearable device of claim 13, wherein the control command includes instructions for capturing image data via the head-wearable device.

15. The wrist-wearable device of claim 13 or claim 14, wherein the control command includes instructions for initiating an application on one or more of the head-wearable device and the wrist-wearable device.

## Patentansprüche

1. Ein nichttransitorisches, computerlesbares Speichermedium, das Anweisungen umfasst, die, wenn sie von einer am Handgelenk tragbaren Vorrichtung ausgeführt werden, die von einem Benutzer getragen wird und kommunikativ mit einer am Kopf tragbaren Vorrichtung gekoppelt ist, die am Handgelenk tragbare Vorrichtung zu Folgendem veranlassen:
Erkennen einer vom Benutzer durchgeführten Geste in der Luft;
als Reaktion auf eine Bestimmung, dass die Geste in der Luft mit einem Steuerbefehl assoziiert ist, der an einer am Kopf tragbaren Vorrichtung durchgeführt werden soll:
Bereitstellen von Anweisungen an die am Kopf tragbare Vorrichtung, um mindestens eine Operation durchzuführen, und
Veranlassen der Initiierung eines Assistenten, der mit der am Kopf tragbaren Vorrichtung und der am Handgelenk tragbaren Vorrichtung assoziiert ist, wobei der Assistent an der am Handgelenk tragbaren Vorrichtung und/oder an der am Kopf tragbaren Vorrichtung initiiert wird, und wobei der Assistent zu Folgendem konfiguriert ist:
Präsentieren einer Assistenten-Benutzeroberfläche und
Erkennen von Benutzerspracheingaben;
als Reaktion auf eine Benutzerspracheingabe der vom Assistenten erkannten Benutzerspracheingaben Bestimmen, an der am Handgelenk tragbaren Vorrichtung und basierend auf dem Steuerbefehl, einer zusätzlichen Operation, die an der am Kopf tragbaren Vorrichtung durchgeführt werden soll;
Bereitstellen von Anweisungen an die am Kopf tragbare Vorrichtung, die die am Kopf tragbare Vorrichtung veranlassen, die zusätzliche Operation durchzuführen; und
Veranlassen des Assistenten, eine Angabe darüber, dass die zusätzliche Operation durchgeführt wurde, über die am Handgelenk tragbare Vorrichtung und/oder die am Kopf tragbare Vorrichtung bereitzustellen.

2. Nichttransitorisches, computerlesbares Speichermedium gemäß Anspruch 1, wobei die zusätzliche Operation Anweisungen zum Erfassen von Bilddaten über die am Kopf tragbare Vorrichtung umfasst.

3. Nichttransitorisches, computerlesbares Speichermedium gemäß Anspruch 1 oder Anspruch 2, wobei der Steuerbefehl Anweisungen zum Initiieren einer Anwendung auf einer oder mehreren der folgenden Vorrichtungen umfasst: der am Kopf tragbaren Vorrichtung und der am Handgelenk tragbaren Vorrichtung.

4. Nichttransitorisches, computerlesbares Speichermedium gemäß einem der vorhergehenden Ansprüche, wobei der Steuerbefehl Anweisungen zum Aktivieren der am Kopf tragbaren Vorrichtung umfasst.

5. Nichttransitorisches, computerlesbares Speichermedium gemäß einem der vorhergehenden Ansprüche, wobei der Steuerbefehl Anweisungen zum Durchführen einer oder mehrerer Operationen auf einer Benutzeroberfläche umfasst, die an der am Kopf tragbaren Vorrichtung präsentiert wird.

6. Nichttransitorisches, computerlesbares Speichermedium gemäß einem der vorhergehenden Ansprüche, wobei der Steuerbefehl Anweisungen umfasst, um die am Kopf tragbare Vorrichtung zu veranlassen, in einem ersten Modus zu arbeiten, und die Anweisungen, wenn sie von der am Handgelenk tragbaren Vorrichtung ausgeführt werden, die am Handgelenk tragbare Vorrichtung ferner zu Folgendem veranlassen:
Erkennen, durch die am Handgelenk tragbare Vorrichtung, die vom Benutzer getragen wird, einer anderen Geste in der Luft, die vom Benutzer durchgeführt wird; und
als Reaktion auf eine Bestimmung, dass die andere Geste in der Luft mit einem anderen Steuerbefehl assoziiert ist, der an der am Kopf tragbaren Vorrichtung durchgeführt werden soll, Bereitstellen von Anweisungen an die am Kopf tragbare Vorrichtung, um mindestens eine zweite Operation durchzuführen.

7. Nichttransitorisches, computerlesbares Speichermedium gemäß einem der vorhergehenden Ansprüche, wobei die Geste in der Luft ein Kontakt zwischen mindestens zwei Phalangen des Benutzers ist; und
wobei der Kontakt Folgendes ist:
ein einfaches Antippen, ein doppeltes Antippen, ein langes Antippen oder
einer von einer Vielzahl von kraftbasierten Kontakten, wobei jeder kraftbasierte Kontakt der Vielzahl von kraftbasierten Kontakten mit einem jeweiligen Kraftschwellenwert assoziiert ist.

8. Nichttransitorisches, computerlesbares Speichermedium gemäß einem der vorhergehenden Ansprüche, wobei die Geste in der Luft eine Gleitgeste ist, die von einer sich über einen Teil der Hand des Benutzers bewegenden Phalanx des Benutzers durchgeführt wird.

9. Nichttransitorisches, computerlesbares Speichermedium gemäß einem der vorhergehenden Ansprüche, wobei die zusätzliche Operation, die an der am Kopf tragbaren Vorrichtung durchgeführt werden soll, vom Assistenten bestimmt wird.

10. Nichttransitorisches, computerlesbares Speichermedium gemäß einem der vorhergehenden Ansprüche, wobei die Anweisungen, wenn sie von der am Handgelenk tragbaren Vorrichtung ausgeführt werden, die am Handgelenk tragbare Vorrichtung ferner zu Folgendem veranlassen:
Erkennen, unter Verwendung von Bilddaten, die von der am Kopf tragbaren Vorrichtung erfasst werden, einer weiteren Geste in der Luft, die vom Benutzer durchgeführt wird; und
als Reaktion auf eine Bestimmung, dass die weitere Geste in der Luft mit einem weiteren Steuerbefehl assoziiert ist, der an der am Kopf tragbaren Vorrichtung durchgeführt werden soll, Bereitstellen von Anweisungen an die am Kopf tragbare Vorrichtung, um mindestens eine dritte Operation durchzuführen.

11. Ein Verfahren, das Folgendes beinhaltet:
Erkennen, durch eine am Handgelenk tragbare Vorrichtung, die von einem Benutzer getragen wird, einer Geste in der Luft, die vom Benutzer durchgeführt wird, wobei die am Handgelenk tragbare Vorrichtung kommunikativ mit einer am Kopf tragbaren Vorrichtung gekoppelt ist;
als Reaktion auf eine Bestimmung, dass die Geste in der Luft mit einem Steuerbefehl assoziiert ist, der an der am Kopf tragbaren Vorrichtung durchgeführt werden soll:
Bereitstellen von Anweisungen an die am Kopf tragbare Vorrichtung, um mindestens eine Operation durchzuführen, und
Veranlassen der Initiierung eines Assistenten, der mit der am Kopf tragbaren Vorrichtung und der am Handgelenk tragbaren Vorrichtung assoziiert ist, wobei der Assistent an der am Handgelenk tragbaren Vorrichtung und/oder an der am Kopf tragbaren Vorrichtung initiiert wird, und wobei der Assistent:
eine Assistenten-Benutzeroberfläche präsentiert und
Benutzerspracheingaben erkennt;
als Reaktion auf eine Benutzerspracheingabe der vom Assistenten erkannten Benutzerspracheingaben Bestimmen, an der am Handgelenk tragbaren Vorrichtung und basierend auf dem Steuerbefehl, einer zusätzlichen Operation, die an der am Kopf tragbaren Vorrichtung durchgeführt werden soll;
Bereitstellen, durch die am Handgelenk tragbare Vorrichtung, von Anweisungen an die am Kopf tragbare Vorrichtung, die die am Kopf tragbare Vorrichtung veranlassen, die zusätzliche Operation durchzuführen;
Veranlassen des Assistenten, eine Angabe darüber, dass die zusätzliche Operation durchgeführt wurde, über die am Handgelenk tragbare Vorrichtung und/oder die am Kopf tragbare Vorrichtung bereitzustellen.

12. Verfahren gemäß Anspruch 11, wobei der Steuerbefehl Anweisungen für Folgendes umfasst:
Erfassen von Bilddaten über die am Kopf tragbare Vorrichtung,
Initiieren einer Anwendung auf einer oder mehreren der folgenden Vorrichtungen (der am Kopf tragbaren Vorrichtung und der am Handgelenk tragbaren Vorrichtung) und/oder
Aktivieren der am Kopf tragbaren Vorrichtung.

13. Eine am Handgelenk tragbare Vorrichtung, die Folgendes beinhaltet:
einen oder mehrere Sensoren;
einen oder mehrere Prozessoren; und
Speicher, der Anweisungen umfasst, die, wenn sie von dem einen oder den mehreren Prozessoren ausgeführt werden, die am Handgelenk tragbare Vorrichtung zu Folgendem veranlassen:
Erkennen einer vom Benutzer durchgeführten Geste in der Luft;
als Reaktion auf eine Bestimmung, dass die Geste in der Luft mit einem Steuerbefehl assoziiert ist, der an einer am Kopf tragbaren Vorrichtung durchgeführt werden soll:
Bereitstellen von Anweisungen an die am Kopf tragbare Vorrichtung, um mindestens eine Operation durchzuführen, und
Veranlassen der Initiierung eines Assistenten, der mit der am Kopf tragbaren Vorrichtung und der am Handgelenk tragbaren Vorrichtung assoziiert ist, wobei der Assistent an der am Handgelenk tragbaren Vorrichtung und/oder an der am Kopf tragbaren Vorrichtung initiiert wird, und wobei der Assistent zu Folgendem konfiguriert ist:
Präsentieren einer Assistenten-Benutzeroberfläche und
Erkennen von Benutzerspracheingaben;
als Reaktion auf eine Benutzerspracheingabe der vom Assistenten erkannten Benutzerspracheingaben Bestimmen, an der am Handgelenk tragbaren Vorrichtung und basierend auf dem Steuerbefehl, einer zusätzlichen Operation, die an der am Kopf tragbaren Vorrichtung durchgeführt werden soll;
Bereitstellen von Anweisungen an die am Kopf tragbare Vorrichtung, die die am Kopf tragbare Vorrichtung veranlassen, die zusätzliche Operation durchzuführen; und
Veranlassen des Assistenten, eine Angabe darüber, dass die zusätzliche Operation durchgeführt wurde, über die am Handgelenk tragbare Vorrichtung und/oder die am Kopf tragbare Vorrichtung bereitzustellen.

14. Am Handgelenk tragbare Vorrichtung gemäß Anspruch 13, wobei der Steuerbefehl Anweisungen zum Erfassen von Bilddaten über die am Kopf tragbare Vorrichtung umfasst.

15. Am Handgelenk tragbare Vorrichtung gemäß Anspruch 13 oder Anspruch 14, wobei der Steuerbefehl Anweisungen zum Initiieren einer Anwendung auf einer oder mehreren der folgenden Vorrichtungen umfasst: der am Kopf tragbaren Vorrichtung und der am Handgelenk tragbaren Vorrichtung.

## Revendications

1. Un support de stockage non transitoire lisible par ordinateur incluant des instructions qui, lorsqu'elles sont exécutées par un dispositif portable au poignet porté par un utilisateur et couplé en communication à un dispositif portable sur la tête, amènent le dispositif portable au poignet à :
détecter un geste dans l'air réalisé par l'utilisateur ;
en réponse à une détermination que le geste dans l'air est associé à une commande de contrôle devant être réalisée au niveau d'un dispositif portable sur la tête :
fournir des instructions au dispositif portable sur la tête pour la réalisation d'au moins une opération, et
amener le lancement d'un assistant associé au dispositif portable sur la tête et au dispositif portable au poignet, l'assistant étant lancé au niveau du dispositif portable au poignet et/ou au niveau du dispositif portable sur la tête, et l'assistant étant configuré pour :
présenter une interface utilisateur d'assistant, et
détecter des entrées vocales utilisateur ;
en réponse à une entrée vocale utilisateur des entrées vocales utilisateur détectées par l'assistant, déterminer au niveau du dispositif portable au poignet, sur la base de la commande de contrôle, une opération supplémentaire devant être réalisée au niveau du dispositif portable sur la tête ;
fournir des instructions au dispositif portable sur la tête qui amènent le dispositif portable sur la tête à réaliser l'opération supplémentaire ; et
amener l'assistant à fournir une indication par l'intermédiaire du dispositif portable au poignet et/ou du dispositif portable sur la tête que l'opération supplémentaire a été réalisée.

2. Le support de stockage non transitoire lisible par ordinateur de la revendication 1, dans lequel l'opération supplémentaire inclut des instructions pour capturer des données d'image par l'intermédiaire du dispositif portable sur la tête.

3. Le support de stockage non transitoire lisible par ordinateur de la revendication 1 ou de la revendication 2, dans lequel la commande de contrôle inclut des instructions pour lancer une application sur un ou plusieurs dispositifs parmi le dispositif portable sur la tête et le dispositif portable au poignet.

4. Le support de stockage non transitoire lisible par ordinateur de n'importe quelle revendication précédente, dans lequel la commande de contrôle inclut des instructions pour activer le dispositif portable sur la tête.

5. Le support de stockage non transitoire lisible par ordinateur de n'importe quelle revendication précédente, dans lequel la commande de contrôle inclut des instructions pour réaliser une ou plusieurs opérations sur une interface utilisateur présentée au niveau du dispositif portable sur la tête.

6. Le support de stockage non transitoire lisible par ordinateur de n'importe quelle revendication précédente, dans lequel la commande de contrôle inclut des instructions pour amener le dispositif portable sur la tête à fonctionner dans un premier mode, et les instructions, lorsqu'elles sont exécutées par le dispositif portable au poignet, amènent en outre le dispositif portable au poignet à :
détecter, par le dispositif portable au poignet porté par l'utilisateur, un autre geste dans l'air réalisé par l'utilisateur ; et
en réponse à une détermination que l'autre geste dans l'air est associé à une autre commande de contrôle devant être réalisée au niveau du dispositif portable sur la tête, fournir des instructions au dispositif portable sur la tête pour la réalisation d'au moins une deuxième opération.

7. Le support de stockage non transitoire lisible par ordinateur de n'importe quelle revendication précédente, dans lequel le geste dans l'air est un contact entre au moins deux phalanges de l'utilisateur ; et
dans lequel le contact est :
un seul tapotement, un tapotement double, un tapotement long, ou
un contact d'une pluralité de contacts basés sur la force, chaque contact basé sur la force de la pluralité de contacts basés sur la force étant associé à un seuil de force respectif.

8. Le support de stockage non transitoire lisible par ordinateur de n'importe quelle revendication précédente, dans lequel le geste dans l'air est un geste de glissement réalisé par une phalange de l'utilisateur se déplaçant sur une portion de la main de l'utilisateur.

9. Le support de stockage non transitoire lisible par ordinateur de n'importe quelle revendication précédente, dans lequel l'opération supplémentaire devant être réalisée au niveau du dispositif portable sur la tête est déterminée par l'assistant.

10. Le support de stockage non transitoire lisible par ordinateur de n'importe quelle revendication précédente, dans lequel les instructions, lorsqu'elles sont exécutées par le dispositif portable au poignet, amènent en outre le dispositif portable au poignet à :
détecter, à l'aide de données d'image capturées par le dispositif portable sur la tête, encore un autre geste dans l'air réalisé par l'utilisateur ; et
en réponse à une détermination que l'encore un autre geste dans l'air est associé à encore une autre commande de contrôle devant être réalisée au niveau du dispositif portable sur la tête, fournir des instructions au dispositif portable sur la tête pour la réalisation d'au moins une troisième opération.

11. Un procédé, comprenant :
la détection, par un dispositif portable au poignet porté par un utilisateur, d'un geste dans l'air réalisé par l'utilisateur, le dispositif portable au poignet étant couplé en communication à un dispositif portable sur la tête ;
en réponse à une détermination que le geste dans l'air est associé à une commande de contrôle devant être réalisée au niveau du dispositif portable sur la tête :
la fourniture d'instructions au dispositif portable sur la tête pour la réalisation d'au moins une opération, et
le fait d'amener le lancement d'un assistant associé au dispositif portable sur la tête et au dispositif portable au poignet, l'assistant étant lancé au niveau du dispositif portable au poignet et/ou au niveau du dispositif portable sur la tête, et l'assistant :
présentant une interface utilisateur d'assistant, et
détectant des entrées vocales utilisateur ;
en réponse à une entrée vocale utilisateur des entrées vocales utilisateur détectées par l'assistant, la détermination, au niveau du dispositif portable au poignet, sur la base de la commande de contrôle, d'une opération supplémentaire devant être réalisée au niveau du dispositif portable sur la tête ;
le dispositif portable au poignet fournissant des instructions au dispositif portable sur la tête qui amènent le dispositif portable sur la tête à réaliser l'opération supplémentaire ;
le fait d'amener l'assistant à fournir une indication par l'intermédiaire du dispositif portable au poignet et/ou du dispositif portable sur la tête que l'opération supplémentaire a été réalisée.

12. Le procédé de la revendication 11, dans lequel la commande de contrôle inclut des instructions pour :
la capture de données d'image par l'intermédiaire du dispositif portable sur la tête,
le lancement d'une application sur un ou plusieurs dispositifs parmi le dispositif portable sur la tête et le dispositif portable au poignet, et/ou
l'activation du dispositif portable sur la tête.

13. Un dispositif portable au poignet, comprenant :
un ou plusieurs capteurs ;
un ou plusieurs processeurs ; et
une mémoire incluant des instructions qui, lorsqu'elles sont exécutées par les un ou
plusieurs processeurs, amènent le dispositif portable au poignet à :
détecter un geste dans l'air réalisé par l'utilisateur ;
en réponse à une détermination que le geste dans l'air est associé à une commande de contrôle devant être réalisée au niveau d'un dispositif portable sur la tête :
fournir des instructions au dispositif portable sur la tête pour la réalisation d'au moins une opération, et
amener le lancement d'un assistant associé au dispositif portable sur la tête et au dispositif portable au poignet, l'assistant étant lancé au niveau du dispositif portable au poignet et/ou au niveau du dispositif portable sur la tête, et l'assistant étant configuré pour :
présenter une interface utilisateur d'assistant, et
détecter des entrées vocales utilisateur ;
en réponse à une entrée vocale utilisateur des entrées vocales utilisateur détectées par l'assistant, déterminer au niveau du dispositif portable au poignet, sur la base de la commande de contrôle, une opération supplémentaire devant être réalisée au niveau du dispositif portable sur la tête ;
fournir des instructions au dispositif portable sur la tête qui amènent le dispositif portable sur la tête à réaliser l'opération supplémentaire ; et
amener l'assistant à fournir une indication par l'intermédiaire du dispositif portable au poignet et/ou du dispositif portable sur la tête que l'opération supplémentaire a été réalisée.

14. Le dispositif portable au poignet de la revendication 13, dans lequel la commande de contrôle inclut des instructions pour capturer des données d'image par l'intermédiaire du dispositif portable sur la tête.

15. Le dispositif portable au poignet de la revendication 13 ou de la revendication 14, dans lequel la commande de contrôle inclut des instructions pour lancer une application sur un ou plusieurs dispositifs parmi le dispositif portable sur la tête et le dispositif portable au poignet.
